# EUROPEAN PATENT APPLICATION

(11) **EP 2 555 088 A1**
(43) Date of publication of application: **06.02.2013**
(21) Application number: 11762584.8
(22) Date of filing: 16.03.2011
(51) Int. Cl.: G06F 3/041, G02F 1/1333, G06F 3/044, G09F 9/00, G09F 9/30

(54) **DISPLAY DEVICE HAVING TOUCH PANEL FUNCTIONALITY**

(30) Priority: 29.03.2010 JP 2010075821
(71) Applicant: Sharp Kabushiki Kaisha, Osaka-shi, Osaka 545-8522 (JP)
(72) Inventor: KIMURA, Tomohiro, Osaka-shi, Osaka 545-8522 (JP); FUKUYAMA, Keiichi, Osaka-shi, Osaka 545-8522 (JP); OGAWA, Yasuyuki, Osaka-shi, Osaka 545-8522 (JP)
(74) Representative: Müller-Boré & Partner Patentanwälte
(86) International application number: PCT/JP2011/056221
(87) International publication number: WO 2011/122346

(57) **Abstract**

A display device with a touch panel function (1101) includes a pressure sensor (15) as a first sensor for detecting presence/absence of pressurization on an input screen (13), an electrostatic capacitance touch panel (12) as a second sensor for detecting a contact position on the input screen (13), whose power consumption for waiting in a detectable state is higher than power consumption of the first sensor, and a control unit (105) for switching the second sensor into the detectable state when presence of pressurization is detected by the first sensor. The input screen (13) also serves as a display screen.

## Description

### TECHNICAL FIELD

The present invention relates to a display device with a touch panel function.

### BACKGROUND ART

A display device of a system in which a position can be input by a user touching a display screen of the display device with his/her finger or a pen type input tool, namely, a display device with a touch panel function, is known.

In order to achieve the display device with a touch panel function, a method of applying an external transparent touch panel to overlap the whole display screen of a typical display device such as a liquid crystal display panel or the like is known.

The external touch panel can be of various types. For example, a type in which an optical sensor is used is described in Japanese Patent Laying-Open No. 2004-318819 (PTL 1). A type in which an electrostatic capacitance pressure sensor is used is described in a technical paper "Touch-mode Capacitive Pressure Sensor" (Satoshi Yamamoto et al., Fujikura Technical Review No. 101, October 2001, pp. 71-74) (NPL 1).

An example of touch panel of a type in which light emitting elements are driven sequentially to scan light beams is also described in Japanese Patent Laying-Open No. 61-52730 (PTL 2).

Electrostatic capacitance touch panels are described in Japanese National Patent Publication No. 11-511580 (PTL 3), Japanese National Patent Publication No. 10-505182 (PTL 4), and Japanese National Patent Publication No. 10-505183 (PTL 5).

An optical sensor is described in Japanese National Patent Publication No. 2009-540628 (PTL 6).

### CITATION LIST

### PATENT LITERATURE

PTL 1: Japanese Patent Laying-Open No. 2004-318819
PTL 2: Japanese Patent Laying-Open No. 61-52730
PTL 3: Japanese National Patent Publication No. 11-511580
PTL 4: Japanese National Patent Publication No. 10-505182
PTL 5: Japanese National Patent Publication No. 10-505183
PTL 6: Japanese National Patent Publication No. 2009-540628

### NON PATENT LITERATURE

NPL 1: "Touch-mode Capacitive Pressure Sensor", Fujikura Technical Review No. 101 (October, 2001), pp. 71-74

### SUMMARY OF INVENTION

### TECHNICAL PROBLEM

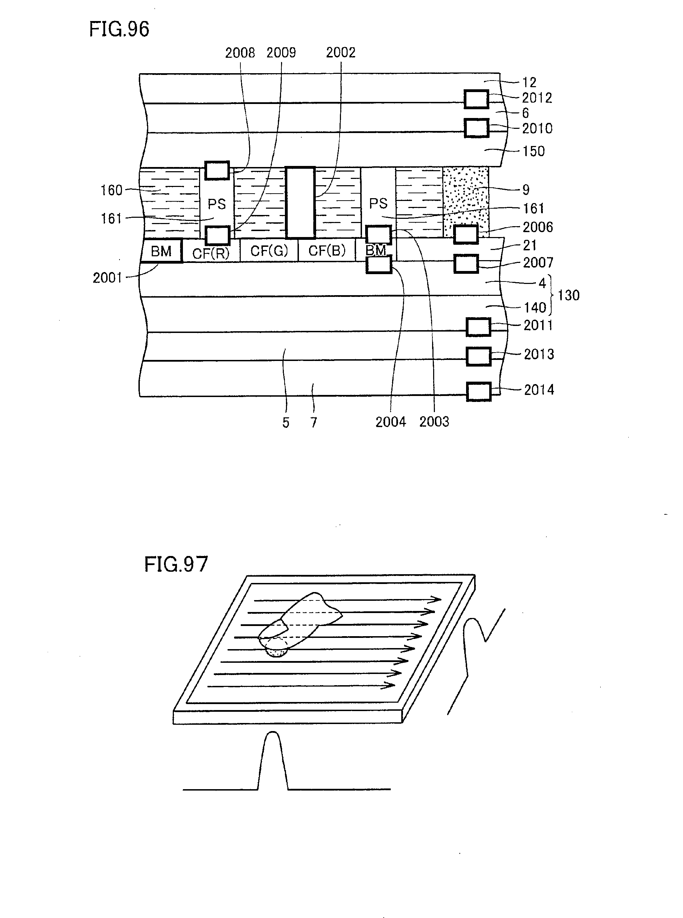

With the touch panels of the respective types described in PTL 1 and NPL 1, a sensing circuit always has to be driven during standby so that scanning of the whole surface of input screen is continued as shown in Fig. 97, leading to high power consumption.

Another conceivable type uses a resistance film pressure sensor. In the case of this type, power consumption is lower than the optical sensor type and the electrostatic capacitance pressure sensor type, but a protruding portion of about 1 mm high is disadvantageously present in an area surrounding the outer circumference of the input screen, namely, a frame area. A resistance film pressure sensor type is also disadvantageous in display quality and operability.

Although taking reduction of power consumption into consideration to some extent, the touch panel of the type described in PTL 2 has a protruding frame area. Moreover, emitted light or received light is exposed to the open air, so that accuracy may deteriorate depending on environmental changes.

Therefore, the present invention has an object to provide a display device with a touch panel function that can minimize power consumption during standby.

### SOLUTION TO PROBLEM

In order to achieve the above-described object, a display device with a touch panel function based on the present invention includes a first sensor for detecting presence/absence of pressurization on an input screen, a second sensor for detecting a contact position on the input screen, whose power consumption for waiting in a detectable state is higher than power consumption of the first sensor, and a control unit for switching the second sensor into the detectable state when presence of pressurization is detected by the first sensor. The input screen also serves as a display screen.

### ADVANTAGEOUS EFFECTS OF INVENTION

According to the present invention, the two types of sensors having a difference in standby power consumption are combined to first detect the presence/absence of pressurization by the first sensor, and when pressurization is detected, the second sensor is switched into the detectable state. Therefore, power consumption of the whole display device with a touch panel function can be minimized.

### BRIEF DESCRIPTION OF DRAWINGS

Fig. 1 is a circuit diagram schematically showing a circuit diagram of a liquid crystal display device according to a first embodiment.
Fig. 2 is a plan view when a part of the liquid crystal display device is viewed two-dimensionally from the common substrate side.
Fig. 3 is a plan view of a TFT array substrate located under the common substrate.
Fig. 4 is a cross-sectional view schematically showing a cross section taken along line IV-IV in Fig. 2.
Fig. 5 is a cross-sectional view taken along line V-V shown in Fig. 2.
Fig. 6 is a cross-sectional view of the liquid crystal display device when the common substrate is pressed.
Fig. 7 is a plan view schematically showing a region where an upper electrode is in contact with an upper insulating layer 136.
Fig. 8 is a graph comparing a characteristic of a pressure sensor according to the first embodiment and a characteristic of a pressure sensor according to a comparative example.
Fig. 9 is a cross-sectional view showing a display device including the pressure sensor according to the comparative example.
Fig. 10 is a cross-sectional view showing a first step of a process of manufacturing the TFT array substrate.
Fig. 11 is a cross-sectional view showing a second step of the process of manufacturing the TFT array substrate.
Fig. 12 is a cross-sectional view showing a third step of the process of manufacturing the TFT array substrate.
Fig. 13 is a cross-sectional view showing a fourth step of the process of manufacturing the TFT array substrate.
Fig. 14 is a cross-sectional view showing a fifth step of the process of manufacturing the TFT array substrate.
Fig. 15 is a cross-sectional view showing a sixth step of the process of manufacturing the TFT array substrate.
Fig. 16 is a cross-sectional view showing a seventh step of the process of manufacturing the TFT array substrate.
Fig. 17 is a cross-sectional view showing a first step of a process of manufacturing the common substrate.
Fig. 18 is a cross-sectional view showing a second step of the process of manufacturing the common substrate.
Fig. 19 is a cross-sectional view showing a third step of the process of manufacturing the common substrate.
Fig. 20 is a cross-sectional view showing a fourth step of the process of manufacturing the common substrate.
Fig. 21 is a cross-sectional view showing a fifth step of the process of manufacturing the common substrate.
Fig. 22 is a cross-sectional view of a liquid crystal display device according to a second embodiment and is a cross-sectional view showing a TFT element.
Fig. 23 is a cross-sectional view of the liquid crystal display device according to the second embodiment and is a cross-sectional view in an output element.
Fig. 24 is a cross-sectional view showing a manufacturing step after the manufacturing step shown in Fig. 15, in a process of manufacturing a TFT array substrate of the liquid crystal display device according to the second embodiment.
Fig. 25 is a cross-sectional view showing a manufacturing step after the manufacturing step for the TFT array substrate shown in Fig. 24.
Fig. 26 is a cross-sectional view showing a manufacturing step for the TFT array substrate after the manufacturing step shown in Fig. 25.
Fig. 27 is a cross-sectional view of a liquid crystal display device according to a third embodiment and is a cross-sectional view showing a TFT element.
Fig. 28 is a cross-sectional view of the liquid crystal display device according to the third embodiment and is a cross-sectional view showing a pressure sensor.
Fig. 29 is a cross-sectional view schematically showing a state of the liquid crystal display device when a common substrate is pressed.
Fig. 30 is a cross-sectional view showing an upper electrode and a gate insulating layer before the upper electrode and the gate insulating layer are deformed by the pressing force from a pressing member.
Fig. 31 is a plan view of the upper electrode.
Fig. 32 is a cross-sectional view showing a state where the upper electrode and the gate insulating layer have been deformed by the pressing force from the pressing member.
Fig. 33 is a plan view of the upper electrode when the upper electrode has been deformed as shown in Fig. 32.
Fig. 34 is a cross-sectional view showing a first step of a process of manufacturing a TFT array substrate.
Fig. 35 is a cross-sectional view showing a second step of the process of manufacturing the TFT array substrate.
Fig. 36 is a cross-sectional view showing a third step of the process of manufacturing the TFT array substrate.
Fig. 37 is a cross-sectional view showing a modification of the TFT array substrate shown in Fig. 28.
Fig. 38 is a circuit diagram schematically showing a circuit diagram of a liquid crystal display device according to a fourth embodiment.
Fig. 39 is a cross-sectional view of the liquid crystal display device according to the fourth embodiment and is a cross-sectional view showing a TFT element.
Fig. 40 is a cross-sectional view of the liquid crystal display device according to the fourth embodiment and is a cross-sectional view showing a TFT element for selection and a pressure sensor.
Fig. 41 is a cross-sectional view schematically showing a state where a common substrate is pressed.
Fig. 42 is a cross-sectional view showing a first step of a process of manufacturing a TFT array substrate.
Fig. 43 is a cross-sectional view showing a second step of the process of manufacturing the TFT array substrate.
Fig. 44 is a cross-sectional view showing a third step of the process of manufacturing the TFT array substrate.
Fig. 45 is a cross-sectional view showing a first step of a process of manufacturing the common substrate.
Fig. 46 is a cross-sectional view showing a second step of the process of manufacturing the common substrate.
Fig. 47 is a cross-sectional view showing a third step of the process of manufacturing the common substrate.
Fig. 48 is a cross-sectional view showing a fourth step of the process of manufacturing the common substrate.
Fig. 49 is a cross-sectional view showing a fifth step of the process of manufacturing the common substrate.
Fig. 50 is a cross-sectional view of a liquid crystal display device according to a fifth embodiment and is a cross-sectional view showing a TFT element.
Fig. 51 is a cross-sectional view of the liquid crystal display device and is a cross-sectional view showing a TFT element for selection and a pressure sensor.
Fig. 52 is a cross-sectional view showing a step when the TFT element and the TFT element for selection are formed, in a process of manufacturing a TFT array substrate.
Fig. 53 is a cross-sectional view showing a manufacturing step for the TFT array substrate after the manufacturing step shown in Fig. 52.
Fig. 54 is a cross-sectional view showing a manufacturing step after the manufacturing step shown in Fig. 53.
Fig. 55 is a cross-sectional view showing formation of a color filter substrate in a process of manufacturing a common substrate.
Fig. 56 is a cross-sectional view showing a step after the manufacturing step shown in Fig. 55.
Fig. 57 is a cross-sectional view showing a step after the manufacturing step shown in Fig. 56.
Fig. 58 is a circuit diagram showing an electrical circuit of a liquid crystal display device according to a sixth embodiment.
Fig. 59 is a cross-sectional view of the liquid crystal display device according to the sixth embodiment and is a cross-sectional view showing a TFT element.
Fig. 60 is a cross-sectional view of the liquid crystal display device according to the sixth embodiment and is a cross-sectional view showing a pressure sensor.
Fig. 61 is a cross-sectional view showing an upper electrode and a semiconductor layer in a state (initial state) where a common substrate is not pressed.
Fig. 62 is a plan view of the upper electrode.
Fig. 63 is a cross-sectional view showing the upper electrode and the semiconductor layer in the state where the common substrate has been pressed.
Fig. 64 is a cross-sectional view showing a first step of a process of manufacturing a TFT array substrate.
Fig. 65 is a cross-sectional view showing a second step of the process of manufacturing the TFT array substrate.
Fig. 66 is a cross-sectional view showing a third step of the process of manufacturing the TFT array substrate.
Fig. 67 is a cross-sectional view showing a fourth step of the process of manufacturing the TFT array substrate.
Fig. 68 is a cross-sectional view showing a fifth step of the process of manufacturing the TFT array substrate.
Fig. 69 is a cross-sectional view showing a sixth step of the process of manufacturing the TFT array substrate.
Fig. 70 is a cross-sectional view showing a seventh step of the process of manufacturing the TFT array substrate.
Fig. 71 is a cross-sectional view showing an eighth step of the process of manufacturing the TFT array substrate.
Fig. 72 is a cross-sectional view showing a ninth step of the process of manufacturing the TFT array substrate.
Fig. 73 is a cross-sectional view showing a tenth step of the process of manufacturing the TFT array substrate.
Fig. 74 is a cross-sectional view showing an eleventh step of the process of manufacturing the TFT array substrate.
Fig. 75 is a cross-sectional view of a liquid crystal display device according to a seventh embodiment and is a cross-sectional view showing a TFT element.
Fig. 76 is a cross-sectional view of the liquid crystal display device according to the seventh embodiment and is a cross-sectional view showing a pressure sensor.
Fig. 77 is a cross-sectional view showing a first step of a process of manufacturing a TFT array substrate.
Fig. 78 is a cross-sectional view showing a second step of the process of manufacturing the TFT array substrate.
Fig. 79 is a cross-sectional view showing a third step of the process of manufacturing the TFT array substrate.
Fig. 80 is a cross-sectional view showing a fourth step of the process of manufacturing the TFT array substrate.
Fig. 81 is a cross-sectional view showing a modification of the liquid crystal display device according to the seventh embodiment.
Fig. 82 is a plan view of a display device with a touch panel function according to an eighth embodiment based on the present invention.
Fig. 83 is a cross-sectional view taken along line LXXXIII-LXXXIII in Fig. 82.
Fig. 84 is an explanatory diagram of a flow from pressurization detection to position detection by the display device with a touch panel function according to the eighth embodiment based on the present invention.
Fig. 85 is a plan view of a modification of the display device with a touch panel function according to the eighth embodiment based on the present invention.
Fig. 86 is a cross-sectional view taken along line LXXXVI-LXXXVI in Fig. 85.
Fig. 87 is a plan view of the display device with a touch panel function according to a ninth embodiment based on the present invention.
Fig. 88 is a cross-sectional view taken along line LXXXVIII-LXXXVIII in Fig. 87.
Fig. 89 is a circuit diagram showing a conceptual mechanism of an optical sensor.
Fig. 90 is a cross-sectional view of a first structure of a pressure sensor that may be used for the display device with a touch panel function according to the eighth and ninth embodiments based on the present invention.
Fig. 91 is a cross-sectional view of a second structure of a pressure sensor that may be used for the display device with a touch panel function according to the eighth embodiment based on the present invention.
Fig. 92 is a conceptual perspective view of a display device with a touch panel function according to a tenth embodiment based on the present invention.
Fig. 93 is a plan view of the display device with a touch panel function according to the tenth embodiment based on the present invention.
Fig. 94 is a circuit diagram of the display device with a touch panel function according to the tenth embodiment based on the present invention.
Fig. 95 is a first diagram showing exemplary positions at which a pressure sensor may be arranged.
Fig. 96 is a second diagram showing exemplary positions at which a pressure sensor may be arranged.
Fig. 97 is a conceptual diagram of a touch panel based on a conventional technique.

### DESCRIPTION OF EMBODIMENTS

When the number, an amount or the like is mentioned in the embodiments described below, the scope of the present invention is not necessarily limited to that number, that amount or the like, unless otherwise specified. In addition, in the embodiments below, each component is not necessarily essential in the present invention, unless otherwise specified. Moreover, when a plurality of embodiments are shown below, combination as appropriate of features in the embodiments is originally encompassed, unless otherwise specified.

### (Pressure sensor)

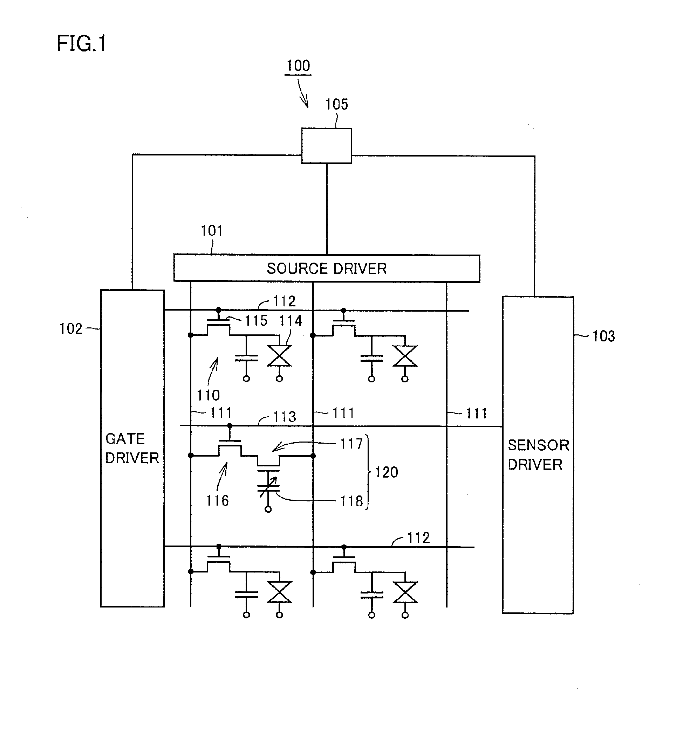

First, detailed structures of a pressure sensor that can be used as a first sensor according to the present invention, application examples to a display device and methods for manufacturing the same will be described as the first to seventh embodiments with reference to Figs. 1 to 81. The meaning of "first sensor" according to the present invention will be described in the eighth and subsequent embodiments. Although the first to seventh embodiments will be described assuming a display device with a touch panel function mainly to be a liquid crystal display device, the type of display device that the display device with a touch panel function has is not limited to a liquid crystal display device.

### (First Embodiment)

Fig. 1 is a circuit diagram schematically showing a circuit diagram of a liquid crystal display device 100 according to a first embodiment. As shown in this Fig. 1, liquid crystal display device 100 includes a control unit 105 and a plurality of pixels 110 arranged in an array. Pixel 110 includes a plurality of TFT (Thin Film Transistor) elements 115 and a pixel electrode 114 connected to this TFT element 115.

Liquid crystal display device 100 includes a plurality of gate lines 112 and gate lines for sensing 113 extending in a first direction and spaced apart from one another in a second direction, and a plurality of source lines 111 extending in the second direction and spaced apart from one another in the first direction.

Each gate line 112 is connected to a gate driver 102, and each source line 111 is connected to a source driver 101. Gate line for sensing 113 is arranged between adjacent gate lines 112, and the plurality of gate lines for sensing 113 extend in the first direction and are spaced apart from one another in the second direction. Each gate line for sensing 113 is connected to a sensor driver 103.

Source driver 101, gate driver 102 and sensor driver 103 are connected to control unit 105. Two adjacent gate lines 112 and two adjacent source lines 111 define pixel 110.

TFT element 115, a TFT element for selection 116 and a pressure sensing element 120 are arranged in pixel 110. A source electrode of TFT element 115 is connected to source line 111, and a gate electrode of TFT element 115 is connected to gate line 112. Pixel electrode 114 is connected to a drain electrode of TFT element 115.

A source electrode of TFT element for selection 116 is connected to source line 111, and a gate electrode of TFT element for selection 116 is connected to gate line for sensing 113. Pressure sensing element 120 is connected to a drain electrode of TFT element for selection 116.

Pressure sensing element 120 includes an output element 117 connected to the drain electrode of TFT element for selection 116, and a pressure sensor (pressure detecting device) 118 connected to a gate electrode of this output element 117. Output element 117 includes a source electrode connected to the drain electrode of TFT element for selection 116, a drain electrode connected to source line 111, and the gate electrode connected to a lower electrode of pressure sensor 118. Source line 111 to which the source electrode of TFT element for selection 116 is connected is another source line 111 that is adjacent to source line 111 to which the drain electrode of output element 117 is connected.

ON/OFF of TFT element for selection 116 is switched as appropriate in a time-divisional manner, and control unit 105 senses an output from pressure sensing element 120 connected to selected TFT element for selection 116. Specifically, control unit 105 senses an amount of current, which is an electrical characteristic from pressure sensing element 120.

An output of output element 117 fluctuates in accordance with a voltage applied to the gate electrode of output element 117. This voltage applied to the gate electrode is determined by a potential of the lower electrode of pressure sensor 118 connected to the gate electrode. The potential of the lower electrode of pressure sensor 118 is determined by a capacitance between the upper electrode and the lower electrode. The capacitance between the upper electrode and the lower electrode fluctuates in accordance with the pressing force applied to the substrate having the upper electrode. In other words, control unit 105 can sense the pressing force applied to the substrate, based on the amount of current from output element 117.

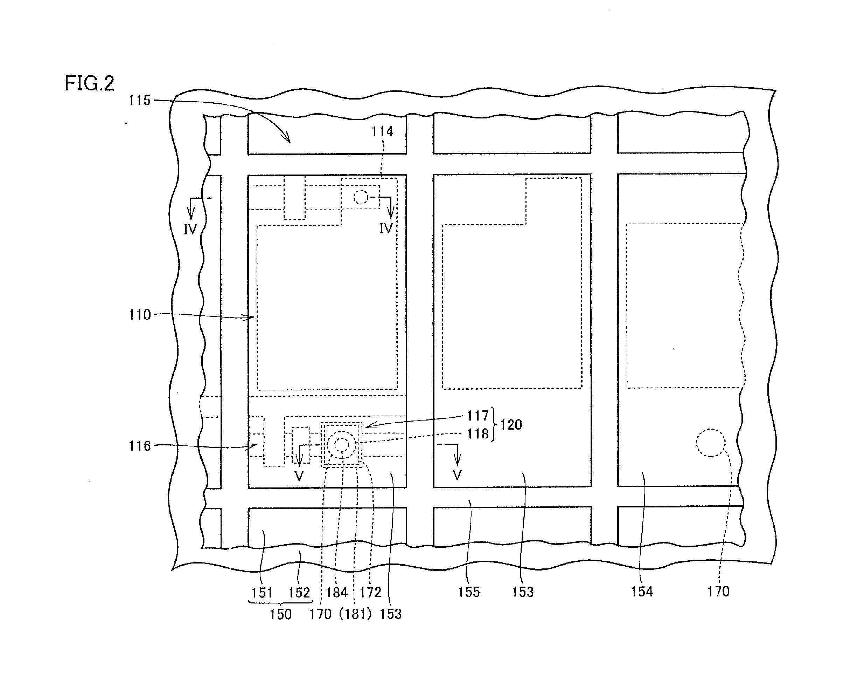

Fig. 2 is a plan view when a part of liquid crystal display device 100 is viewed two-dimensionally from the common substrate 150 side. As shown in this Fig. 2, common substrate 150 includes a color filter substrate 151 and a common electrode 152 arranged on a lower surface of this color filter substrate 151.

Color filter substrate 151 includes a black matrix 155 formed in the shape of a grid, and a colored layer 153 formed within the framework of this black matrix 155 and made of red, green and blue coloring photosensitive materials. One colored layer 153 is arranged above one pixel 110.

Common electrode 152 is a transparent electrode made of, for example, ITO (Indium Tin Oxide).

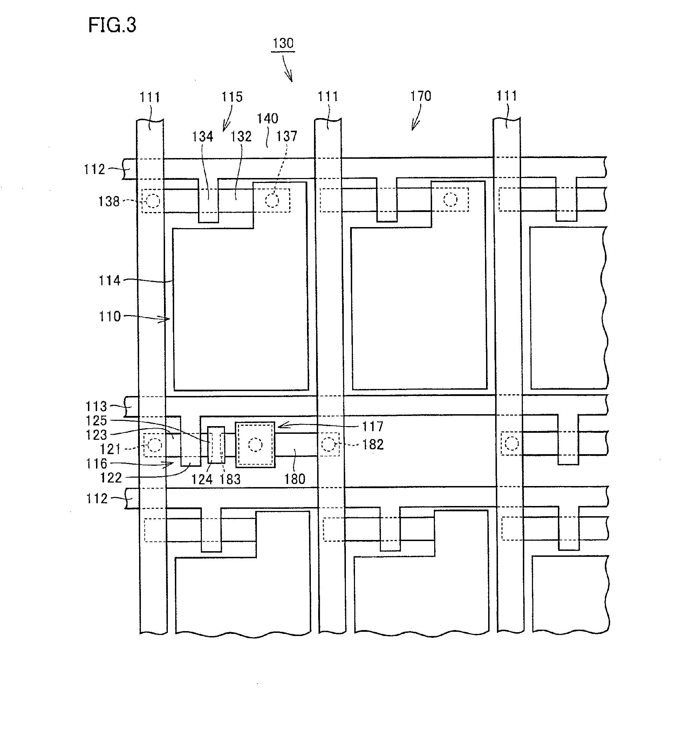

Fig. 3 is a plan view of a TFT array substrate 130 located under common substrate 150. In this Fig. 3 and Fig. 2 above, source line 111 and gate line 112 are located under black matrix 155. TFT element for selection 116 and pressure sensing element 120 are arranged on the opposite side of TFT element 115 with respect to pixel electrode 114.

As shown in this Fig. 3, TFT element for selection 116 includes a semiconductor layer 123, a source electrode 121 connecting semiconductor layer 123 and source line 111, a gate electrode 122 connected to gate line for sensing 113, and a drain electrode 125.

A source electrode 183 of output element 117 and drain electrode 125 of TFT element for selection 116 are connected by a connection wiring 124. In the present embodiment, semiconductor layer 123 of TFT element for selection 116 and a semiconductor layer 180 of output element 117 are separated from each other, and drain electrode 125 of TFT element for selection 116 and source electrode 183 of output element 117 are connected by connection wiring 124. Semiconductor layer 123 may, however, be integrated with semiconductor layer 180 so as to connect drain electrode 125 and source electrode 183.

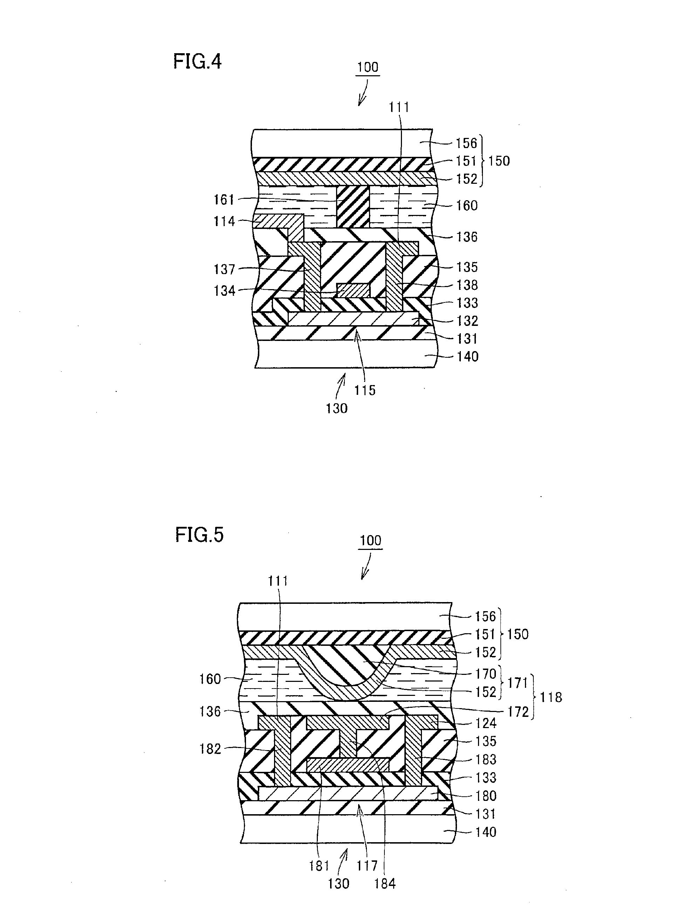

Fig. 4 is a cross-sectional view schematically showing a cross section taken along line IV-IV in Fig. 2. The cross-sectional views shown in Fig. 4 and Figs. 5, 6 and the like below are cross-sectional views simplified for convenience of description, and the aspect ratio and the like in each figure are not accurate.

As shown in Fig. 4, liquid crystal display device 100 includes TFT array substrate 130, common substrate 150 spaced apart from TFT array substrate 130 so as to face TFT array substrate 130, and a liquid crystal layer (display medium layer) 160 filled between common substrate 150 and TFT array substrate 130. A spacer 161 maintaining a spacing between TFT array substrate 130 and common substrate 150 at a predetermined spacing is formed between TFT array substrate 130 and common substrate 150.

Liquid crystal display device 100 further includes a polarizing plate arranged on an upper surface of common substrate 150, and a polarizing plate and a backlight unit arranged on a lower surface of TFT array substrate 130.

The polarizing plates are arranged such that the polarization direction of the polarizing plate arranged on the upper surface of common substrate 150 is orthogonal to the polarization direction of the polarizing plate arranged under TFT array substrate 130. The backlight unit emits light toward TFT array substrate 130. This backlight unit and the aforementioned two polarizing plates are not shown.

Common substrate 150 includes a glass substrate 156 having a main surface, color filter substrate 151 formed on the main surface of glass substrate 156, and common electrode 152 formed under this color filter substrate 151.

TFT array substrate 130 includes a glass substrate (first substrate) 140 having a main surface (first main surface), and pixel electrode 114 located above glass substrate 140, and TFT element (switching element) 115 is formed on the main surface of this glass substrate 140.

An underlying layer 131 formed of an insulating layer such as a silicon oxide layer (SiO₂ layer), a silicon nitride layer (SiN) and a silicon oxynitride layer (SiNO layer) is formed on the main surface of glass substrate 140. This underlying layer 131 has a film thickness of, for example, 0 nm or more and 500 nm or less, and preferably 0 nm or more and 400 nm or less.

TFT element 115 includes a semiconductor layer 132 formed on an upper surface of underlying layer 131, a gate insulating layer (first gate insulating layer) 133 formed to cover this semiconductor layer 132, a gate electrode 134 formed on an upper surface of gate insulating layer 133, and a drain electrode 137 and a source electrode 138 connected to semiconductor layer 132.

Gate electrode 134 is located on an upper surface of gate insulating layer 133 and above semiconductor layer 132. Drain electrode 137 is spaced apart from gate electrode 134. Source electrode 138 is located on the opposite side of drain electrode 137 with respect to gate electrode 134. Source electrode 138 is connected to source line 111, and drain electrode 137 is connected to pixel electrode 114.

Application of a predetermined voltage to gate electrode 134 causes TFT element 115 to be turned on. Application of a predetermined voltage to source line 111 and source electrode 138 causes a predetermined voltage to be applied to drain electrode 137 and pixel electrode 114.

TFT element 115 switches the voltage applied to pixel electrode 114, thereby controlling the direction of liquid crystals in liquid crystal layer 160 located between pixel electrode 114 and common electrode 152. By switching the direction of the liquid crystals, a switch is made between a state where light from the backlight unit passes through the polarizing plate arranged on the upper surface of common substrate 150 and a state where light from the backlight unit is blocked by the polarizing plate arranged on the upper surface of common substrate 150.

A continuous grain silicon film or the like is, for example, used as semiconductor layer 132. Semiconductor layer 132 has a film thickness of, for example, 20 nm or more and 200 nm or less. Semiconductor layer 132 preferably has a film thickness of approximately 30 nm or more and 70 nm or less.

Gate insulating layer 133 is formed of, for example, an insulating layer made of SiO₂, SiN, SiNO and the like. Gate insulating layer 133 has a film thickness of, for example, 20 nm or more and 200 nm or less, and preferably 50 nm or more and 120 nm or less.

Gate electrode 134 is a conductive layer that is formed of, for example, a metal layer made of tungsten (W), tantalum (Ta), titanium (Ti), molybdenum (Mo) and the like, or an alloy containing these, or a compound containing an element such as tungsten (W), tantalum (Ta), titanium (Ti), and molybdenum (Mo), or the like. Gate electrode 134 has a film thickness of, for example, 50 nm or more and 600 nm or less. Gate electrode 134 preferably has a film thickness of 100 nm or more and 500 nm or less.

An interlayer dielectric 135 is formed on the upper surface of gate insulating layer 133 to cover gate electrode 134. Interlayer dielectric 135 is formed of, for example, an insulating layer made of SiO₂, SiN, SiNO and the like. Interlayer dielectric 135 has a film thickness of, for example, 100 nm or more and 1000 nm or less. Interlayer dielectric 135 preferably has a film thickness of 100 nm or more and 700 nm or less.

Source line 111 is located on an upper surface of interlayer dielectric 135, and source electrode 138 is connected to source line 111. Drain electrode 137 is also formed to reach the upper surface of interlayer dielectric 135.

Source line 111, source electrode 138 and drain electrode 137 may be, for example, a metal layer made of aluminum (Al), copper (Cu), gold (Au), titanium (Ti) and the like, or stacked metal layers formed by sequentially stacking these metal layers. These source line 111 and the like have a film thickness of, for example, 300 nm or more and 1000 nm or less. Source line 111 and the like preferably have a film thickness of 400 nm or more and 800 nm or less.

An upper insulating layer 136 is formed on the upper surface of interlayer dielectric 135 to cover source line 111. Upper insulating layer 136 is formed of an insulating layer made of SiO₂, SiN, SiNO and the like. Upper insulating layer 136 has a film thickness of, for example, 50 nm or more and 500 nm or less. Upper insulating layer 136 preferably has a film thickness of 50 nm or more and 200 nm or less.

Pixel electrode 114 is formed on an upper surface of upper insulating layer 136. Pixel electrode 114 is formed of a transparent conductive layer made of ITO and the like.

Fig. 5 is a cross-sectional view taken along line V-V shown in Fig. 2. As shown in this Fig. 5, underlying layer 131 is formed on the main surface of glass substrate 140, and output element 117 is formed on the upper surface of this underlying layer 131.

Output element 117 includes semiconductor layer 180 formed on underlying layer 131, gate insulating layer 133 formed to cover semiconductor layer 180, a gate electrode 181 formed on a portion of the upper surface of gate insulating layer 133 located above semiconductor layer 180, and source electrode 183 and a drain electrode 182 connected to semiconductor layer 180.

Source electrode 183 is spaced apart from gate electrode 181, and drain electrode 182 is arranged on the opposite side of source electrode 183 with respect to gate electrode 181.

Interlayer dielectric 135 is formed on the upper surface of gate insulating layer 133 to cover gate electrode 181.

Drain electrode 182 passes through gate insulating layer 133 and interlayer dielectric 135 and is connected to source line 111 formed on the upper surface of interlayer dielectric 135. Source electrode 183 is also formed to pass through gate insulating layer 133 and interlayer dielectric 135 and reach the upper surface of interlayer dielectric 135.

A lower electrode 172 and connection wiring 124 are formed on the upper surface of interlayer dielectric 135. Connection wiring 124 is connected to drain electrode 125 of TFT element for selection 116 shown in Fig. 3. Lower electrode 172 is connected to gate electrode 181 by a contact 184. Therefore, a voltage applied to gate electrode 181 is determined by a potential of lower electrode 172.

Upper insulating layer 136 is formed on lower electrode 172. Lower electrode 172 is formed into a flat surface. At least a portion of upper insulating layer 136 located on lower electrode 172 is formed into a flat surface to conform to an upper surface of lower electrode 172.

Pressure sensor (pressure detecting device) 118 includes aforementioned lower electrode 172 and an upper electrode 171 located above this lower electrode 172.

In the present embodiment, upper electrode 171 is formed in common substrate 150, and upper electrode 171 is constituted by a projection 170 formed on the lower side of color filter substrate 151 and common electrode 152 formed to cover a surface of this projection 170.

Projection 170 is made of, for example, an elastically deformable material such as an acrylic resin and a plastic resin. Projection 170 may be made of an elastically deformable conductive resin.

Projection 170 has a height of, for example, 1 µm or more and 10 µm or less. Projection 170 preferably has a height of 1.5 µm or more and 5 µm or less.

In the example shown in this Fig. 5, a portion of common electrode 152 located at a vertex of projection 170 is in contact with upper insulating layer 136.

In the present embodiment, projection 170 is formed to be circular in a cross section vertical to the protruding direction, and projection 170 has a smoothly curved surface. Furthermore, as shown in Fig. 2, a plurality of projections 170 are formed to be spaced apart from one another.

The shape of projection 170 is not limited to the aforementioned shape. For example, projection 170 may be formed to extend over lower electrodes 172 of a plurality of pressure sensors 118. Projection 170 is not limited to a projection having a circular cross-sectional shape, and further, is not limited to a projection having a smoothly curved outer surface.

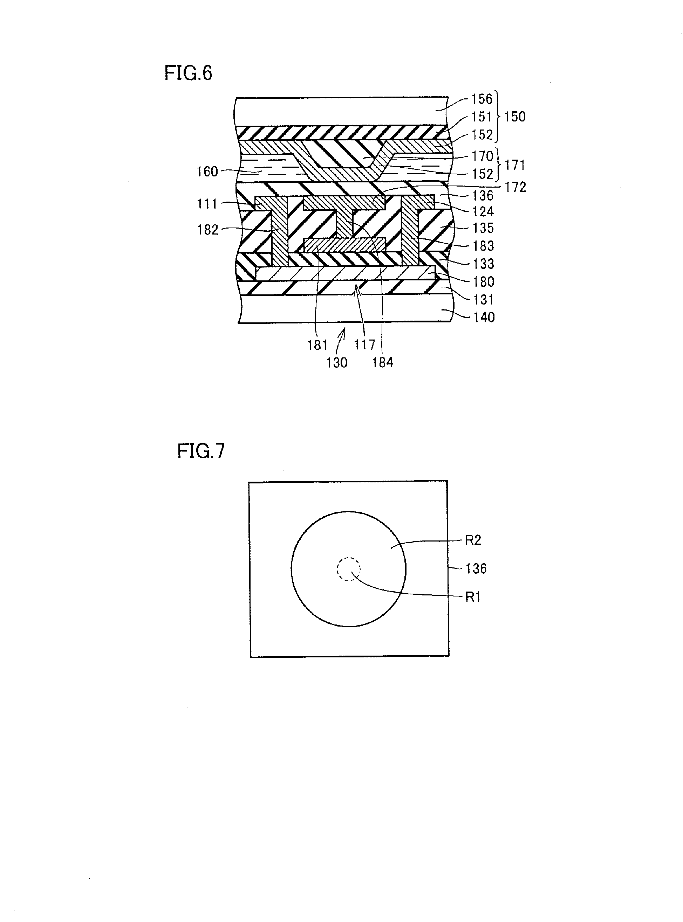

Fig. 6 is a cross-sectional view of liquid crystal display device 100 when common substrate 150 is pressed. As shown in this Fig. 6, when common substrate 150 is pressed by a pen or someone's finger, a pressed portion and a neighboring portion of common substrate 150 deflect.

As a result of deflection of glass substrate 156, upper electrode 171 comes closer to lower electrode 172. Since upper electrode 171 comes closer to lower electrode 172, upper electrode 171 is pressed against upper insulating layer 136, projection 170 deforms elastically, and upper electrode 171 deforms to conform to lower electrode 172.

Fig. 7 is a plan view schematically showing a region where upper electrode 171 is in contact with upper insulating layer 136. In this Fig. 7, a region R1 is a region enclosed by a broken line in Fig. 7 and a region R2 is a region enclosed by a solid line. Region R1 represents a region where upper electrode 171 is in contact with upper insulating layer 136 in a state (initial state) where common substrate 150 is not pressed.

Region R2 represents a region where upper electrode 171 is in contact with upper insulating layer 136 in the state shown in Fig. 6. As shown in this Fig. 7, by slight displacement of upper electrode 171, a contact area between upper electrode 171 and upper insulating layer 136 increases greatly.

At the portion where upper electrode 171 is in contact with upper insulating layer 136, both upper electrode 171 and lower electrode 172 are in contact with upper insulating layer 136, and a spacing between upper electrode 171 and lower electrode 172 corresponds to a thickness of upper insulating layer 136.

Specifically, a distance between common electrode 152 located on a surface of upper electrode 171 and lower electrode 172 corresponds to a thickness of upper insulating layer 136.

As a result, a capacitance defined by upper electrode 171 and lower electrode 172 in the state shown in Fig. 7 is much larger than a capacitance defined by upper electrode 171 and lower electrode 172 in the initial state shown in Fig. 6.

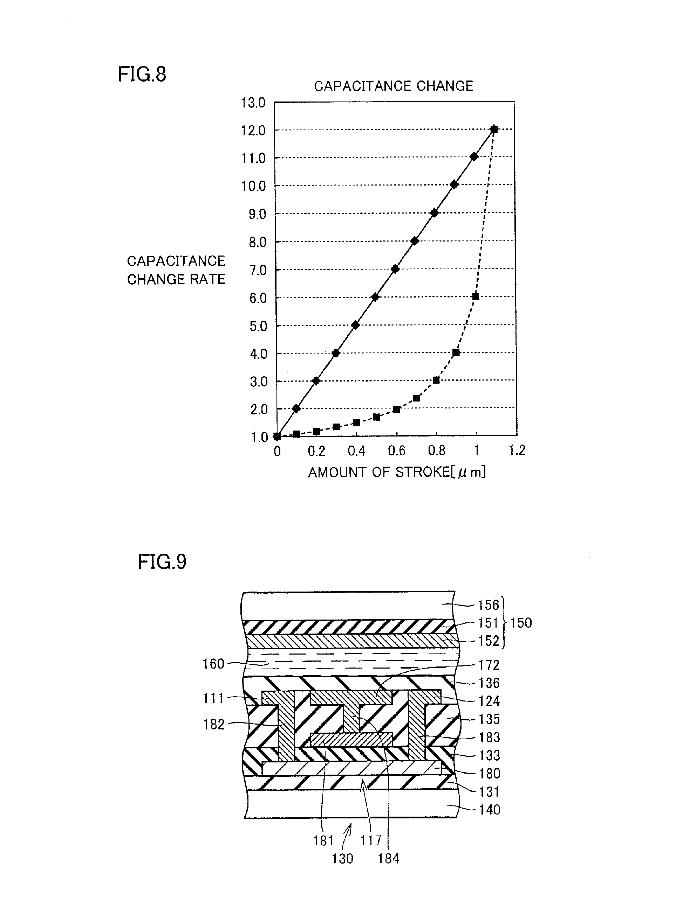

Fig. 8 is a graph comparing a characteristic of pressure sensor 118 according to the present embodiment and a characteristic of a pressure sensor according to a comparative example.

In the graph shown in this Fig. 8, the horizontal axis indicates an amount of stroke of the upper electrode and the vertical axis indicates a capacitance change rate between the upper electrode and the lower electrode. In the graph, a solid line L1 indicates the characteristic of the pressure sensor according to the present embodiment and a broken line L2 indicates the characteristic of the pressure sensor according to the comparative example.

Fig. 9 is a cross-sectional view showing a display device including the pressure sensor according to the comparative example. Unlike pressure sensor 118 according to the present embodiment, the pressure sensor according to the comparative example shown in this Fig. 9 does not include projection 170. Therefore, the pressure sensor according to the comparative example includes common electrode 152 formed into a flat surface on the lower surface of color filter substrate 151, and lower electrode 172.

A distance between common substrate 150 in the comparative example and TFT array substrate 130 as well as a distance between common substrate 150 in the present embodiment and TFT array substrate 130 are both 3.3 µm.

In this comparative example, when common substrate 150 is pressed, common electrode 152 comes closer to lower electrode 172. Since a distance between common electrode 152 and lower electrode 172 becomes smaller, a capacitance between common electrode 152 and lower electrode 172 becomes larger.

As shown in Fig. 8 above, when an amount of displacement (amount of stroke) of the upper electrode is small, a capacitance fluctuation rate of the pressure sensor according to the comparative example is smaller than a capacitance fluctuation rate of pressure sensor 118 according to the present embodiment.

In the pressure sensor according to the comparative example, when the pressing force applied to common substrate 150 is small, it is difficult to accurately sense fluctuations in the capacitance and it is difficult to accurately sense the applied pressure.

On the other hand, as shown in Fig. 8, it can be seen that in pressure sensor 118 according to the present embodiment, the capacitance change rate is large even when the amount of stroke of the upper electrode is small. Therefore, in pressure sensor 118 according to the present embodiment, a voltage applied to gate electrode 181 shown in Fig. 5 can be fluctuated greatly even when the amount of stroke of the upper electrode is small. As a result, the control unit can accurately sense the applied pressing force.

In the pressure sensor according to the comparative example, when the amount of stroke exceeds a predetermined value, the capacitance change rate increases sharply. In a range where the capacitance changes sharply, the capacitance changes sharply even when a distance between the upper electrode and the lower electrode is reduced slightly. Therefore, in the range where the capacitance changes sharply, the voltage applied to the gate electrode of the output element also changes sharply and an amount of current from output element 117 also fluctuates greatly. Therefore, it is difficult for the control unit to calculate the accurate pressing force.

On the other hand, in pressure sensor 118 according to the present embodiment, the capacitance change rate is substantially constant even when the amount of stroke increases. As described above, in pressure sensor 118 according to the present embodiment, the capacitance change rate is substantially constant. Therefore, the applied pressure can be easily calculated based on the capacitance between the upper electrode and the lower electrode, and the applied pressure can be accurately calculated.

As described above, pressure sensor 118 according to the present embodiment includes lower electrode 172, upper electrode 171 spaced apart from this lower electrode 172 and arranged to face the lower electrode, and upper insulating layer (insulating layer) 136 formed between upper electrode 171 and lower electrode 172, and upper electrode 171 is formed on the surface of elastically deformable projection 170. Projection 170 abuts upper insulating layer 136 and further is pressed against upper insulating layer 136, and thereby common electrode 152 on projection 170 deforms to conform to lower electrode 172. The capacitance between lower electrode 172 and upper electrode 171 changes at predetermined magnitude with a certain change rate being kept. Therefore, by sensing the amount of current from output element 117, the capacitance between upper electrode 171 and lower electrode 172 can be sensed and the applied pressure can be accurately calculated.

As described above, pressure sensor 118 that can accurately output the capacitance fluctuations is mounted on liquid crystal display device 100 according to the first embodiment. Therefore, the pressing force applied to common substrate 150 can be accurately calculated even when common substrate 150 does not deflect greatly. As a result, even when glass substrate 156 of common substrate 150 is formed to be thicker than glass substrate 140, the applied pressing force can be calculated. Therefore, the rigidity of common substrate 150 can be enhanced.

Glass substrate 140 is supported by the backlight unit and the like. Therefore, even when glass substrate 140 is made thinner than glass substrate 156, deformation of TFT array substrate 130 is suppressed. The characteristic of pressure sensor 118 shown by the solid line in Fig. 8 is one example. Therefore, it is not necessary that the capacitance change rate should increase in a manner of linear function when the amount of stroke of the upper electrode increases as shown in Fig. 8. A rate of increase in the capacitance change rate may be partially different or the capacitance change rate may change in a manner of a curved line.

In Fig. 5, semiconductor layer 180 is formed on the upper surface of gate insulating layer 133 similarly to semiconductor layer 132 shown in Fig. 4. Semiconductor layer 180 is made of a material of the same kind (the same material) as that of semiconductor layer 132, and semiconductor layer 180 and semiconductor layer 132 have substantially the same film thickness. Specifically, a continuous grain silicon film or the like is, for example, used and semiconductor layer 132 has a film thickness of, for example, 20 nm or more and 200 nm or less. Semiconductor layer 132 preferably has a film thickness of approximately 30 nm or more and 70 nm or less.

Gate electrode 181 is also formed on gate insulating layer 133 similarly to gate electrode 134 shown in Fig. 4. Furthermore, gate electrode 181 is made of a material of the same kind (the same material) as that of gate electrode 134, and a film thickness of gate electrode 181 is also substantially identical to that of gate electrode 134.

A stacked metal film that is the same as drain electrode 137 and source electrode 138 shown in Fig. 4 is used as drain electrode 182, source electrode 183, lower electrode 172, and contact 184.

As described above, the structure of output element 117 is substantially the same as that of TFT element 115. Therefore, each member of output element 117 can be simultaneously formed when each member of TFT element 115 is formed. Furthermore, the lower electrode of pressure sensor 118 can also be simultaneously formed when drain electrode 137 and source electrode 138 of TFT element 115 are formed.

Therefore, the number of steps of manufacturing TFT array substrate 130 does not increase and an increase in manufacturing cost can be suppressed.

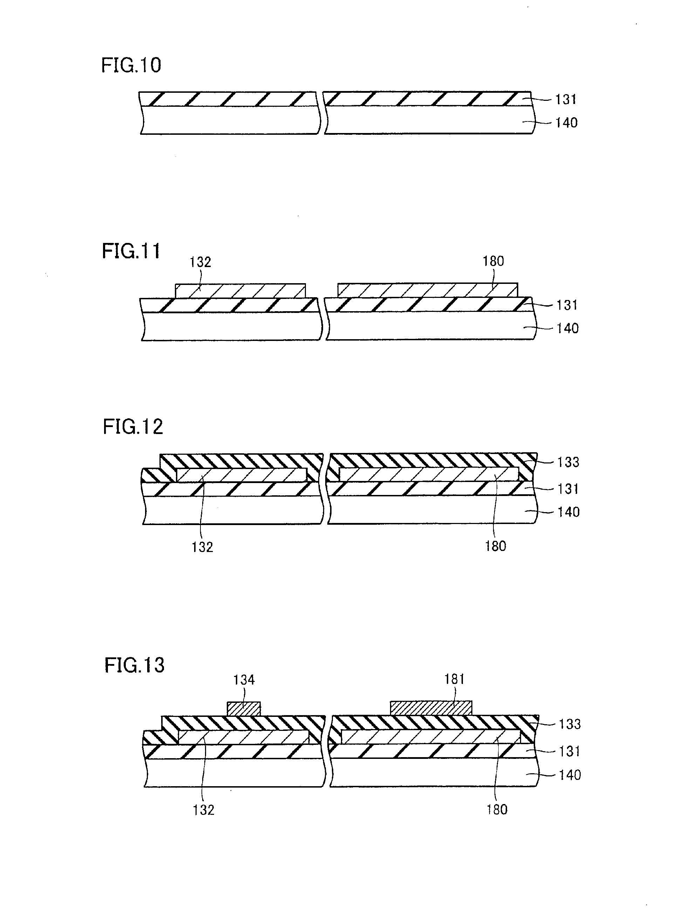

A method for manufacturing liquid crystal display device 100 according to the present embodiment will be described with reference to Figs. 10 to 21.

When liquid crystal display device 100 is manufactured, TFT array substrate 130 and common substrate 150 are first formed independently. Thereafter, the liquid crystal layer is applied onto the upper surface of TFT array substrate 130, and then, common substrate 150 is arranged above TFT array substrate 130. TFT array substrate 130 is thus formed.

Thus, a method for manufacturing TFT array substrate 130 will be described first.

Fig. 10 is a cross-sectional view showing a first step of a process of manufacturing TFT array substrate 130. As shown in Fig. 10, glass substrate 140 is prepared. Thereafter, the insulating layer made of SiO₂, SiN, SiNO and the like is deposited on the main surface of glass substrate 140 to form underlying layer 131.

Fig. 11 is a cross-sectional view showing a second step of the process of manufacturing TFT array substrate 130. In this Fig. 11, an amorphous semiconductor layer is first formed. A material of the amorphous semiconductor film is not particularly limited as long as the conductivity thereof is semiconductive. Silicon (Si), germanium (Ge), gallium-arsenide (GaAs) and the like are used as the material of the amorphous semiconductor film, and silicon is preferable because it is inexpensive and suitable for mass production. A method for forming the amorphous semiconductor film is not particularly limited. A method for forming an amorphous silicon (a-Si) film by a CVD method and the like is, for example, used as the method for forming the amorphous semiconductor film.

Thereafter, a catalytic element is added to the amorphous semiconductor layer. The catalytic element is for promoting crystallization in the amorphous semiconductor film and allows the semiconductor layer to be altered to CG-Si, which leads to higher performance of the TFT. Iron, cobalt, nickel, germanium, ruthenium, rhodium, palladium, osmium, iridium, platinum, copper, gold and the like are used as the catalytic element. The catalytic element preferably contains at least one element selected from the aforementioned group, and Ni is suitably used. A method for adding the catalytic element is not particularly limited. A resistive heating method, a coating method and the like are used as the method for adding the catalytic element.

Thereafter, the amorphous semiconductor layer is crystallized to form a continuous grain silicon layer (CG silicon layer). A combination of a solid phase crystallization (SPC) method in which crystallization is achieved by annealing treatment and a laser annealing method in which melt recrystallization is achieved by irradiation with excimer laser light and the like is suitable as a method for crystallization.

The continuous grain silicon layer is formed in such a manner, and thereafter, this continuous grain silicon layer is patterned by a photolithography method and the like to form semiconductor layer 132 and semiconductor layer 180. In this second step, semiconductor layer 123 shown in Fig. 3 is also formed. Although the example in which semiconductor layer 180 and semiconductor layer 123 are formed by the continuous grain silicon layer has been described, a material of semiconductor layer 180 and semiconductor layer 123 is not limited to the continuous grain silicon layer, and other materials may be selected as appropriate.

Fig. 12 is a cross-sectional view showing a third step of the process of manufacturing TFT array substrate 130. As shown in this Fig. 12, the insulating layer made of SiO₂, SiN, SiNO and the like is formed on underlying layer 131 by the CVD method and the like to cover semiconductor layer 180 and semiconductor layer 132. Gate insulating layer 133 is thus formed.

Fig. 13 is a cross-sectional view showing a fourth step of the process of manufacturing TFT array substrate 130. As shown in this Fig. 13, the stacked metal layers are deposited by a sputtering method, the CVD method and the like, and thereafter, the stacked metal layers are patterned by the photolithography method and the like. As a result, gate electrode 134 and gate electrode 181 are formed.

Gate electrode 134 is formed on a portion of the upper surface of gate insulating layer 133 located above semiconductor layer 132. Gate electrode 181 is formed on a portion of the upper surface of gate insulating layer 133 located above semiconductor layer 180.

In this fourth step, gate line 112, gate line for sensing 113 and gate electrode 122 shown in Fig. 2 are also formed.

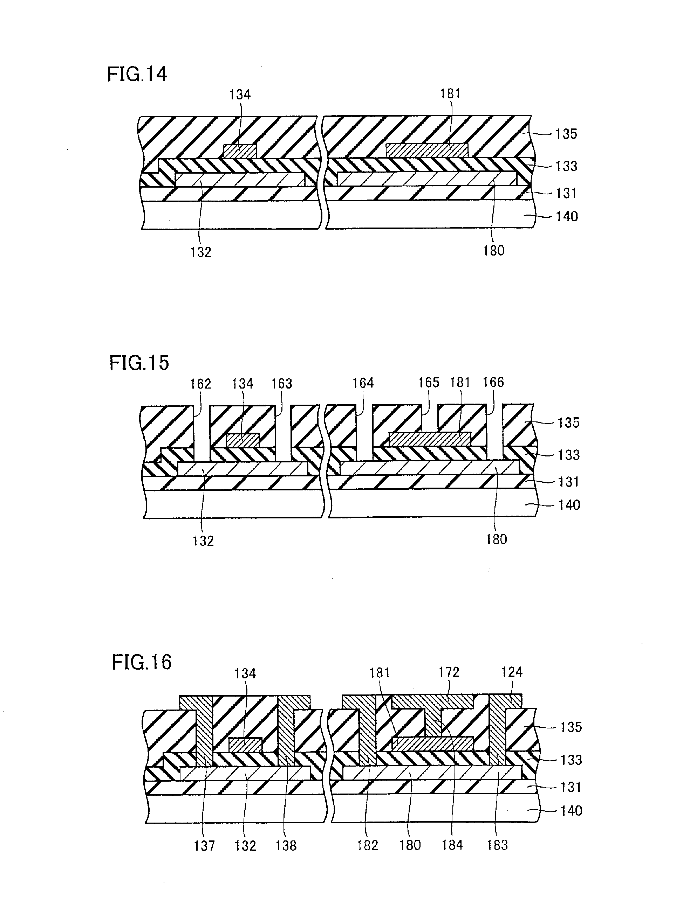

Fig. 14 is a cross-sectional view showing a fifth step of the process of manufacturing TFT array substrate 130. As shown in this Fig. 14, interlayer dielectric 135 is formed on the upper surface of gate insulating layer 133 to cover gate electrode 134 and gate electrode 181.

Fig. 15 is a cross-sectional view showing a sixth step of the process of manufacturing TFT array substrate 130. As shown in this Fig. 15, interlayer dielectric 135 and gate insulating layer 133 are patterned by dry etching and the like to form contact holes 162 to 166.

Contact hole 162 and contact hole 163 are formed to reach semiconductor layer 132, and contact hole 164 and contact hole 166 are formed to reach semiconductor layer 180. Contact hole 165 is formed to reach an upper surface of gate electrode 181.

Fig. 16 is a cross-sectional view showing a seventh step of the process of manufacturing TFT array substrate 130. In this Fig. 16, the metal layer is formed by sputtering. At this time, the metal layer also enters contact holes 162 to 166 shown in Fig. 15.

When drain electrodes 137 and 182, source electrodes 138 and 183, lower electrode 172, contact 184, and connection wiring 124 are configured by the stacked metal layers, a plurality of metal layers are stacked sequentially by sputtering.

Then, the formed metal layer or stacked metal layers are patterned to form drain electrodes 137 and 182, source electrodes 138 and 183, lower electrode 172, contact 184, and connection wiring 124.

In this seventh step, source line 111 shown in Fig. 2 as well as source electrode 121 and drain electrode 125 of TFT element for selection 116 are also formed.

Thereafter, upper insulating layer 136 is formed as shown in Figs. 4 and 5 above. Specifically, the silicon nitride layer (SiN layer) having a thickness of, for example, approximately 200 nm is formed by a plasma enhanced chemical vapor deposition method. Thereafter, upper insulating layer 136 is patterned to form a contact hole for exposing a part of drain electrode 137. Then, an ITO film is formed and this ITO film is patterned to form pixel electrode 114.

When spacer 161 is formed in TFT array substrate 130, a resin layer made of an acrylic resin and the like is formed on the upper surface of upper insulating layer 136 and this resin layer is patterned to form spacer 161. Spacer 161 has a height of approximately 4 µm. TFT array substrate 130 can thus be formed.

As described above, in the method for manufacturing TFT array substrate 130 according to the present embodiment, when the semiconductor layer, the gate electrode, the source electrode, and the drain electrode of TFT element 115 are formed, the semiconductor layers and the like of TFT element for selection 116 and output element 117 can be formed, and the lower electrode of the pressure sensor can also be formed. Therefore, an increase in the number of manufacturing steps is suppressed.

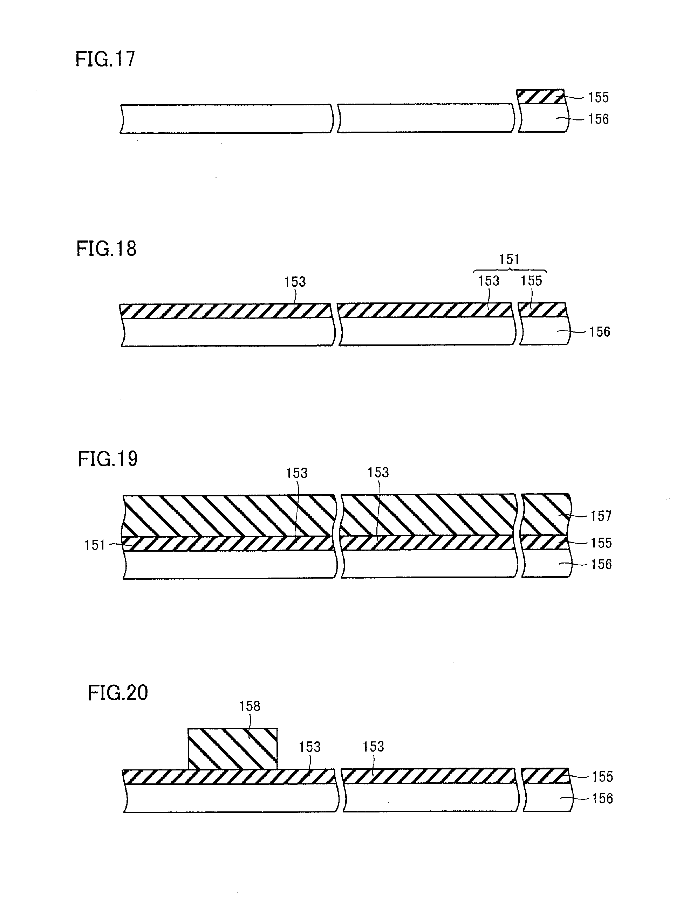

A method for manufacturing common substrate 150 will be described with reference to Figs. 17 to 21. Fig. 17 is a cross-sectional view showing a first step of a process of manufacturing common substrate 150.

As shown in this Fig. 17, glass substrate 156 having the main surface is prepared. Then, a highly light blocking resin layer having a thickness of approximately 1 to 10 µm is, for example, formed on the main surface of glass substrate 156 by, for example, spin coating and the like. The resin layer preferably has a thickness of approximately 2 to 5 µm. Thereafter, exposure to light, development, cleaning, and post-baking are performed. As a result, black matrix 155 shown in Fig. 2 is formed on the main surface of glass substrate 156. A material of the resin may be a negative type resin or a positive type resin as long as the resin is a photosensitive resin such as an acrylic resin used as a general black photosensitive resin. When the conductivity is provided to black matrix 155, black matrix 155 is made of a conductive resin material or a metal material such as titanium (Ti).

Fig. 18 is a cross-sectional view showing a second step of the process of manufacturing glass substrate 156. In this Fig. 18, black matrix 155 is a grid-like pattern having an opening of, for example, approximately 60 µm × 100 µm and having a width of approximately 20 µm. Ink of colored layer 153 is applied to the opening of black matrix 155 by an ink-jet method. Color filter substrate 151 is thus formed on the main surface of glass substrate 156. Colored layer 153 has a film thickness of, for example, approximately 1 to 10 µm, and preferably approximately 2 to 5 µm.

Fig. 19 is a cross-sectional view showing a third step of the process of manufacturing common substrate 150. As shown in this Fig. 19, a plastic resin layer 157 made of an acrylic resin and having a film thickness of, for example, approximately 1 to 10 µm is, for example, formed. Plastic resin layer 157 preferably has a film thickness of approximately 1.5 to 5 µm. For example, plastic resin layer 157 has a film thickness of 3.5 µm.

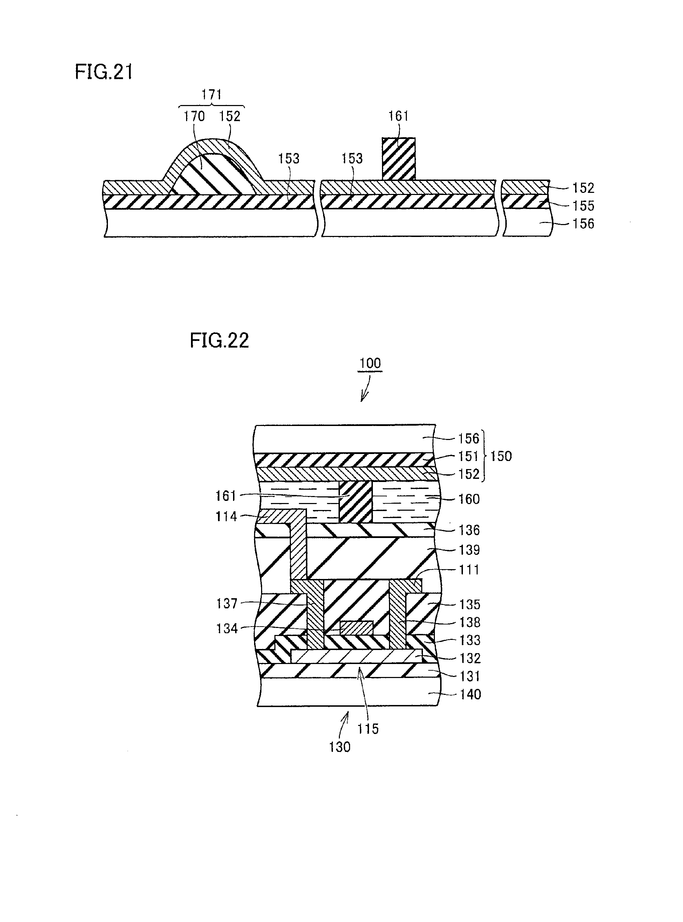

Fig. 20 is a cross-sectional view showing a fourth step of the process of manufacturing common substrate 150. As shown in this Fig. 20, plastic resin layer 157 is patterned by photolithography to form a resin pattern 158. Fig. 21 is a cross-sectional view showing a fifth step of the process of manufacturing common substrate 150. In this Fig. 21, resin pattern 158 is subjected to the annealing treatment (resin annealing) to form projection 170.

Specifically, glass substrate 156 having resin pattern 158 is inserted into an oven and the annealing treatment is performed at a temperature of, for example, 100°C or higher and 300°C or lower. The annealing treatment temperature is preferably 100°C or higher and 200°C or lower. For example, baking is performed in the oven at 220°C for approximately 60 minutes.

As a result of the annealing treatment to resin pattern 158, the resin on the surface flows and projection 170 having a smooth surface is formed.

When plastic resin layer 157 has a film thickness of 3.5 µm and patterned resin pattern 158 is subjected to the annealing treatment at 220°C for 60 minutes, projection 170 has a height of approximately 3.4 µm.

Thereafter, the transparent conductive layer such as the ITO layer is applied to cover projection 170, and thereby common electrode 152 is formed. Common electrode 152 has a film thickness of, for example, approximately 50 nm or more and 400 nm or less. Common electrode 152 preferably has a film thickness of approximately 50 nm or more and 200 nm or less. For example, common electrode 152 has a film thickness of 200 nm.

Common electrode 152 is formed on projection 170 in such a manner, and thereby upper electrode 171 is formed. When spacer 161 is formed on common substrate 150, the resin layer made of an acrylic resin and the like is formed on an upper surface of common electrode 152 and this resin layer is patterned to form spacer 161. Spacer 161 has a height of approximately 4 µm. Common substrate 150 is thus formed.

Then, the liquid crystal layer is applied onto the upper surface of TFT array substrate 130, and further, common substrate 150 is arranged above TFT array substrate 130.

At this time, TFT array substrate 130 and common substrate 150 are stacked such that upper electrode 171 is located above common electrode 152. Thereafter, through various steps, liquid crystal display device 100 shown in Figs. 4 and 5 can be formed.

When force of approximately 1 N is applied from the TFT array substrate 130 side in liquid crystal display device 100 thus obtained, an electrostatic capacitance that is six times as large as an electrostatic capacitance when the pressing force is not applied can be sensed. Furthermore, the electrostatic capacitance increases in a manner of linear function with respect to the pressing force during a period from the start of pressing to pressing at the force of 1 N.

### (Second Embodiment)

Pressure sensor 118 and liquid crystal display device 100 according to a second embodiment of the present invention will be described with reference to Figs. 22 to 26.

The same reference characters are given to the components shown in Figs. 22 to 26 that are the same as or corresponding to those shown in Figs. 1 to 21 above, and description thereof will not be repeated.

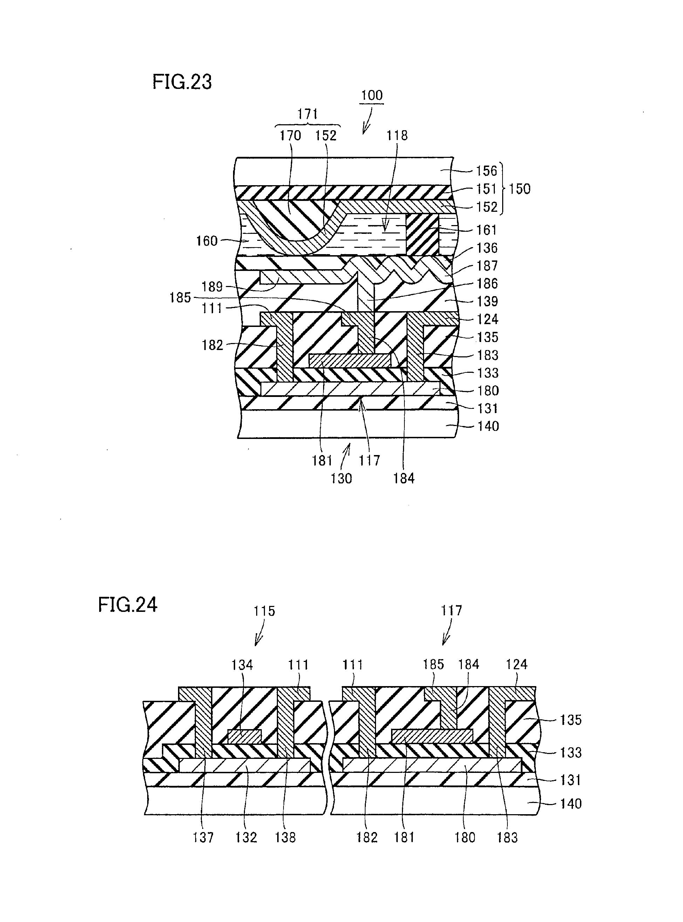

Fig. 22 is a cross-sectional view of liquid crystal display device 100 according to the second embodiment and is a cross-sectional view showing TFT element 115. Fig. 23 is a cross-sectional view of liquid crystal display device 100 according to the second embodiment and is a cross-sectional view in output element 117.

As shown in these Figs. 22 and 23, liquid crystal display device 100 includes TFT element 115 and output element 117, and interlayer dielectric 135 is formed to cover TFT element 115 and output element 117.

Upper ends of drain electrode 137 and source electrode 138 of TFT element 115, upper ends of drain electrode 182 and source electrode 183 of output element 117, an upper end of contact 184, source line 111, and connection wiring 124 are located on the upper surface of interlayer dielectric 135.

A pad unit 185 is formed at the upper end of contact 184, and liquid crystal display device 100 includes an interlayer dielectric 139 formed to cover pad unit 185, the upper ends of drain electrode 137 and source electrode 138 of TFT element 115, the upper ends of drain electrode 182 and source electrode 183 of output element 117, the upper end of contact 184, source line 111, and connection wiring 124.

A reflection electrode 187 and a lower electrode 189 connected to this reflection electrode 187 are formed on the upper surface of this interlayer dielectric 139. Reflection electrode 187 and lower electrode 189 are integrally connected.

Lower electrode 189 and reflection electrode 187 are connected to pad unit 185 by a connection unit 186. Pad unit 185 is connected to gate electrode 181 by contact 184. Lower electrode 189 is connected to gate electrode 181 in such a manner.

Upper insulating layer 136 is formed on lower electrode 189 and reflection electrode 187. Lower electrode 189 is formed into a flat surface. A portion of upper insulating layer 136 located on an upper surface of lower electrode 189 is formed into a flat surface to conform to the upper surface of lower electrode 189.

Pixel electrode 114 shown in Fig. 22 is formed on upper insulating layer 136, passes through upper insulating layer 136 and interlayer dielectric 139, and is connected to drain electrode 137.

Upper electrode 171 is formed on the lower surface of common substrate 150 located above lower electrode 189. In the second embodiment as well, upper electrode 171 includes projection 170 formed on the lower surface of color filter substrate 151, and common electrode 152 formed on the surface of this projection 170.

In liquid crystal display device 100 according to the second embodiment as well, when common substrate 150 is pressed, upper electrode 171 comes into contact with upper insulating layer 136 and projection 170 deforms. Specifically, upper electrode 171 deforms to conform to lower electrode 189. Then, an area of a region where common electrode 152 formed on projection 170 faces lower electrode 189 with upper insulating layer 136 interposed therebetween increases sharply and a potential of lower electrode 189 fluctuates greatly. Therefore, a voltage applied to gate electrode 181 can be fluctuated greatly.

A method for manufacturing liquid crystal display device 100 according to the second embodiment will be described with reference to Figs. 24 to 26.

A process of manufacturing TFT array substrate 130 of liquid crystal display device 100 according to the second embodiment overlaps partially with the process of manufacturing TFT array substrate 130 of liquid crystal display device 100 according to the first embodiment described above. Specifically, the manufacturing step shown in Fig. 10 to the manufacturing step shown in Fig. 14 are common to manufacturing steps for TFT array substrate 130 in the present embodiment.

Fig. 24 is a cross-sectional view showing a manufacturing step after the manufacturing step shown in Fig. 14, in the process of manufacturing TFT array substrate 130 of liquid crystal display device 100 according to the second embodiment.

As shown in this Fig. 24, interlayer dielectric 135 and gate insulating layer 133 are patterned to form a plurality of contact holes. Thereafter, the metal layer or the stacked metal layers are formed on interlayer dielectric 135.

The metal layer or the stacked metal layers are patterned to form drain electrode 137, source electrode 138, drain electrode 182, contact 184, source electrode 183, pad unit 185, and connection wiring 124. Source line 111 and pad unit 185 are formed on the upper surface of interlayer dielectric 135.

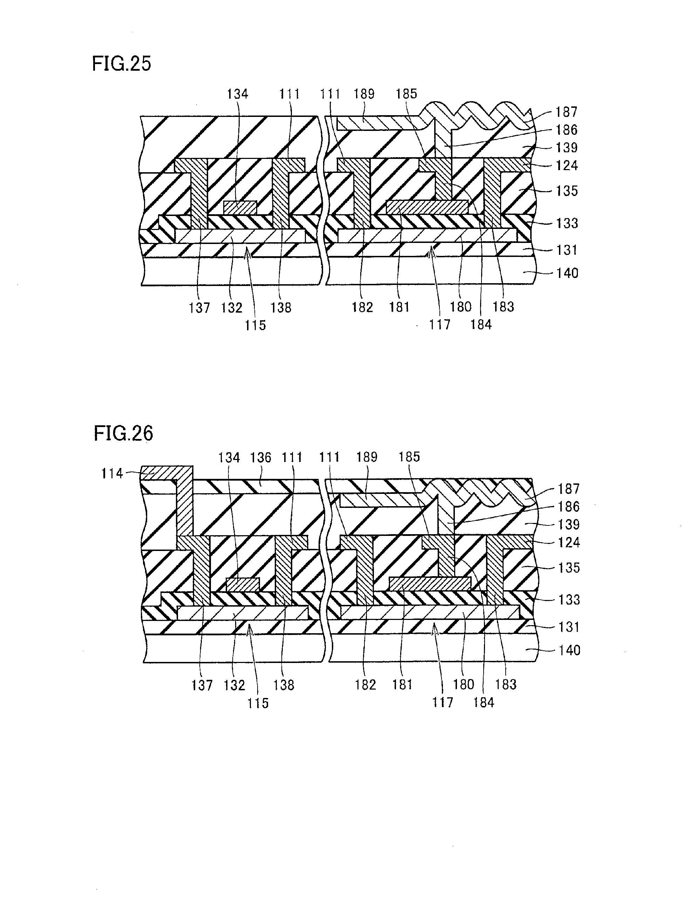

Fig. 25 is a cross-sectional view showing a manufacturing step after the manufacturing step for TFT array substrate 130 shown in Fig. 24. As shown in this Fig. 25, interlayer dielectric 139 is formed to cover source line 111 and pad unit 185.

Then, interlayer dielectric 139 is patterned. At this time, a contact hole is formed at a portion where connection unit 186 will be formed, and projections and recesses are formed at a portion of the upper surface of interlayer dielectric 139 where reflection electrode 187 will be located.

Interlayer dielectric 139 is patterned in such a manner, and thereafter, a metal layer made of aluminum (Al), silver (Ag), molybdenum (Mo) and the like, a metal compound layer containing a metal element such as aluminum (Al), silver (Ag) and molybdenum (Mo), or stacked metal layers formed by stacking an aluminum (Al) layer, a silver (Ag) layer and a molybdenum (Mo) layer is formed on the upper surface of interlayer dielectric 139.

The metal layer or the stacked metal layers are formed on the upper surface of interlayer dielectric 139, and thereby connection unit 186 is formed in the contact hole formed in interlayer dielectric 139.

Then, the metal layer or the stacked metal layers are patterned, and thereby lower electrode 189 and reflection electrode 187 are formed.

Since the projections and recesses are formed in advance at the portion of the upper surface of interlayer dielectric 139 where reflection electrode 187 will be formed, reflection electrode 187 is formed in the shape of projections and recesses to conform to the surface of these projections and recesses.

Fig. 26 is a cross-sectional view showing a manufacturing step for TFT array substrate 130 after the manufacturing step shown in Fig. 25.

As shown in this Fig. 26, upper insulating layer 136 is formed on interlayer dielectric 139 to cover lower electrode 189 and reflection electrode 187.

Thereafter, upper insulating layer 136 and interlayer dielectric 139 are patterned to form a contact hole extending from the upper surface of upper insulating layer 136 to the upper end of drain electrode 137. After the formation of the contact hole, the ITO film is formed on the upper surface of upper insulating layer 136 and this ITO film is patterned to form pixel electrode 114. TFT array substrate 130 shown in Figs. 22 and 23 is thus formed.

As described above, lower electrode 189 and connection unit 186 connected to this lower electrode 189 can be formed together with reflection electrode 187 in the step of forming reflection electrode 187. Therefore, in the present embodiment as well, the lower electrode of pressure sensor 118 can be formed in TFT array substrate 130 without causing an increase in the number of manufacturing steps.

### (Third Embodiment)

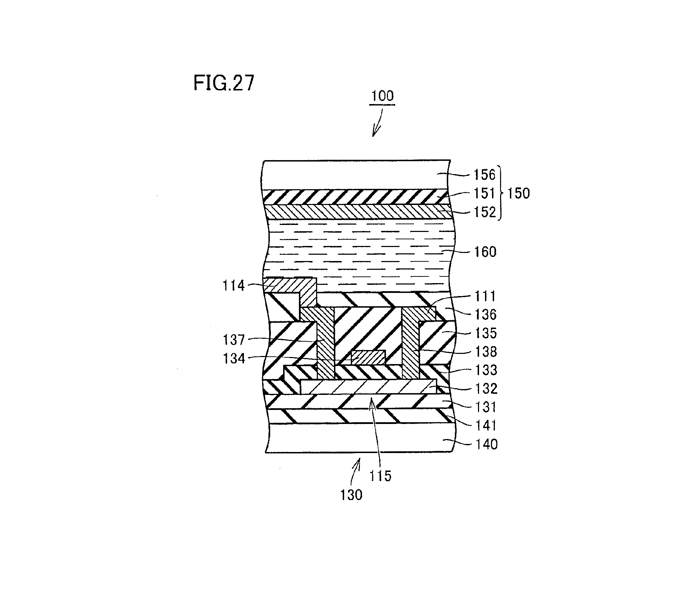

Pressure sensor 118, liquid crystal display device 100 and a method for manufacturing liquid crystal display device 100 according to a third embodiment of the present invention will be described with reference to Figs. 27 to 37. The same reference characters are given to the components shown in Figs. 27 to 37 that are the same as or corresponding to those shown in Figs. 1 to 26 above, and description thereof will not be repeated.

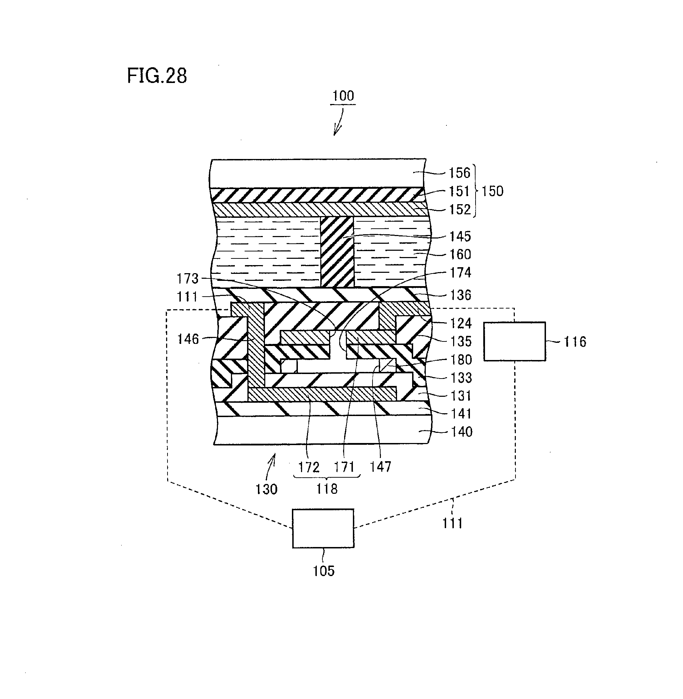

Fig. 27 is a cross-sectional view of liquid crystal display device 100 according to the third embodiment and is a cross-sectional view showing TFT element 115. Fig. 28 is a cross-sectional view of liquid crystal display device 100 according to the third embodiment and is a cross-sectional view showing pressure sensor 118.

As shown in this Fig. 27, liquid crystal display device 100 includes an underlying layer 141 formed on the main surface of glass substrate 140, underlying layer 131 formed on an upper surface of this underlying layer 141, and TFT element 115 formed on underlying layer 131.

Underlying layer 141 is formed of an insulating layer made of SiO₂, SiN, SiNO and the like. Underlying layer 141 has a film thickness of, for example, more than 0 nm and 500 nm or less. Underlying layer 141 preferably has a film thickness of 400 nm or less.

TFT element 115 includes semiconductor layer 132 formed on underlying layer 131, gate electrode 134 formed above semiconductor layer 132 with gate insulating layer 133 interposed therebetween, and drain electrode 137 and source electrode 138 connected to semiconductor layer 132. Gate electrode 134 is covered with interlayer dielectric 135 formed on gate insulating layer 133. Drain electrode 137 and source electrode 138 are formed to reach the upper surface of interlayer dielectric 135. Upper insulating layer 136 is formed on interlayer dielectric 135, and pixel electrode 114 is formed on the upper surface of this upper insulating layer 136. Pixel electrode 114 is connected to the upper end of drain electrode 137.

As shown in Fig. 28, pressure sensor 118 includes lower electrode 172 formed on the upper surface of underlying layer 141, and upper electrode 171 located above lower electrode 172 and arranged to face lower electrode 172. A recess 147 is formed under upper electrode 171 to permit deflection of upper electrode 171. Lower electrode 172 is covered with underlying layer 131. Lower electrode 172 is formed in the shape of a flat plate.

A portion of underlying layer 131 located on lower electrode 172 extends along the upper surface of lower electrode 172 and is formed into a flat surface.

A contact 146 is connected to lower electrode 172, and this contact 146 is formed to reach the upper surface of interlayer dielectric 135. An upper end of contact 146 is connected to source line 111 formed on the upper surface of interlayer dielectric 135.

Upper electrode 171 is formed on the upper surface of gate insulating layer 133, and recess 147 is formed between upper electrode 171 and lower electrode 172 and between gate insulating layer 133 and underlying layer 131.

Upper electrode 171 is formed in the shape of a flat plate. A portion of gate insulating layer 133 located under upper electrode 171 extends along a lower surface of upper electrode 171 and is formed into a flat surface.

Connection wiring 124 is connected to upper electrode 171 and this connection wiring 124 is connected to the drain electrode of TFT element for selection 116 shown in Fig. 1.

Upper insulating layer 136 is formed to cover source line 111 connected to lower electrode 172 and connection wiring 124.

Common substrate 150 of liquid crystal display device 100 according to the third embodiment includes glass substrate 156, color filter substrate 151 formed on a lower surface of this glass substrate 156, common electrode 152 formed on the lower surface of this color filter substrate 151, and a pressing member 145 formed on a lower surface of this common electrode 152. Pressing member 145 is made of a resin such as an acrylic resin.

Control unit 105 senses source line 111 connected to contact 146 and an output of source line 111 connected to TFT element for selection 116.

As a result, control unit 105 can sense the capacitance between upper electrode 171 and lower electrode 172. Control unit 105 calculates the pressing force applied to common substrate 150, based on fluctuations in the capacitance between upper electrode 171 and lower electrode 172.

When a user presses common substrate 150 using a pen or his/her finger, a pressed portion of common substrate 150 deflects slightly.

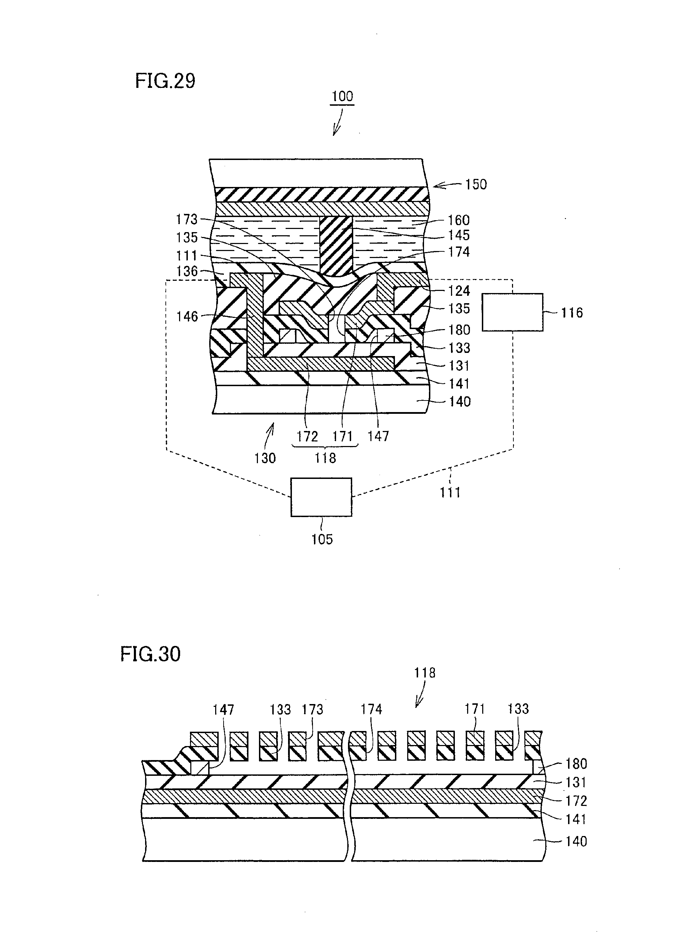

Fig. 29 is a cross-sectional view schematically showing a state of liquid crystal display device 100 when common substrate 150 is pressed.

As shown in this Fig. 29, when pressing member 145 presses the upper surface of TFT array substrate 130, upper electrode 171 and gate insulating layer 133 located under this upper electrode 171 deflect.

Then, gate insulating layer 133 located under upper electrode 171 abuts underlying layer 131 located on lower electrode 172, and upper electrode 171 deforms.

Fig. 30 is a cross-sectional view showing upper electrode 171 and gate insulating layer 133 before upper electrode 171 and gate insulating layer 133 are deformed by the pressing force from pressing member 145.

As shown in this Fig. 30, a plurality of holes 173 and 174 are formed in upper electrode 171 and gate insulating layer 133. Holes 173 and holes 174 are formed to communicate with one another.

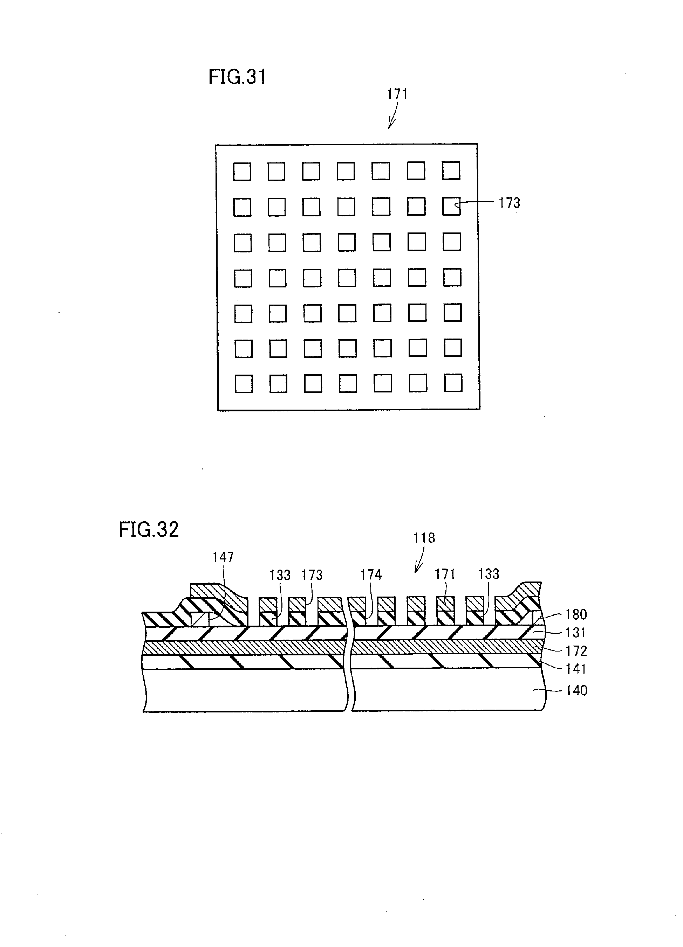

Fig. 31 is a plan view of upper electrode 171. As shown in this Fig. 31, upper electrode 171 is formed to have a substantially square shape, and hole 173 formed in upper electrode 171 is also formed to have a square shape. Holes 173 are formed in upper electrode 171 to be evenly distributed. One side of upper electrode 171 has a length of, for example, approximately 30 µm and one side of hole 173 has a length of, for example, approximately 2 µm. Upper electrode 171 is formed to have a width larger than a width of gate electrode 134. Therefore, upper electrode 171 is easily deformed by the external pressing force.

Upper electrode 171 is formed to have a film thickness of, for example, 50 nm or more and 600 nm or less, and preferably 100 nm or more and 500 nm or less.

As described above, upper electrode 171 is formed to have a length of a side that is much larger than a thickness of upper electrode 171. Therefore, upper electrode 171 can deform to easily deflect when a central portion of an upper surface of upper electrode 171 is pressed.

Upper electrode 171 is made of a metal material that is the same as that of the gate electrode. Upper electrode 171 is formed of, for example, a metal layer made of tungsten (W), tantalum (Ta), titanium (Ti), molybdenum (Mo) and the like, or an alloy containing an element such as tungsten (W), tantalum (Ta), titanium (Ti), and molybdenum (Mo), or a compound containing tungsten (W), tantalum (Ta), titanium (Ti), and molybdenum (Mo).

Preferably, upper electrode 171 and the gate electrode are formed of a tungsten (W) layer having a thickness of approximately 370 nm and a TaN (tantalum nitride) layer having a thickness of approximately 50 nm and formed on this tungsten (W) layer.

The shape of upper electrode 171 is not limited to the square shape and may be a rectangular shape. Various types of shapes such as a shape of a polygon more than a pentagon, a circular shape, and an oval shape can be used.

Fig. 32 is a cross-sectional view showing a state where upper electrode 171 and gate insulating layer 133 have been deformed by the pressing force from pressing member 145.

As shown in this Fig. 32, gate insulating layer 133 and upper electrode 171 deflect to go into recess 147.

An opening edge of recess 147 is slightly smaller than an outer edge of upper electrode 171 and most of upper electrode 171 deflects to enter recess 147.

Recess 147 is formed by a hole formed in semiconductor layer 180 and the upper surface of underlying layer 131. Therefore, a height of recess 147 is the same as a thickness of semiconductor layer 180. Semiconductor layer 180 is formed to have a thickness of, for example, 20 nm or more and 200 nm or less, and preferably 30 nm or more and 70 nm or less. The length of one side of upper electrode 171 is much larger than the height of recess 147.

Therefore, when upper electrode 171 and gate insulating layer 133 slightly deform, gate insulating layer 133 abuts the upper surface of underlying layer 131.

Furthermore, when upper electrode 171 and gate insulating layer 133 are pressed by pressing member 145, most of a portion of gate insulating layer 133 located in recess 147 abuts underlying layer 131 as shown in Fig. 32.

At this time, gate insulating layer 133 deforms to conform to the upper surface of underlying layer 131, and upper electrode 171 located on gate insulating layer 133 also deforms to conform to underlying layer 131.

Since underlying layer 131 is formed into a flat surface along the upper surface of lower electrode 172, upper electrode 171 deforms into a flat surface to conform to the shape of lower electrode 172.

Therefore, gate insulating layer 133 and underlying layer 131 are sandwiched between most of upper electrode 171 and lower electrode 172, and most of upper electrode 171 faces lower electrode 172 with gate insulating layer 133 and underlying layer 131 interposed therebetween.

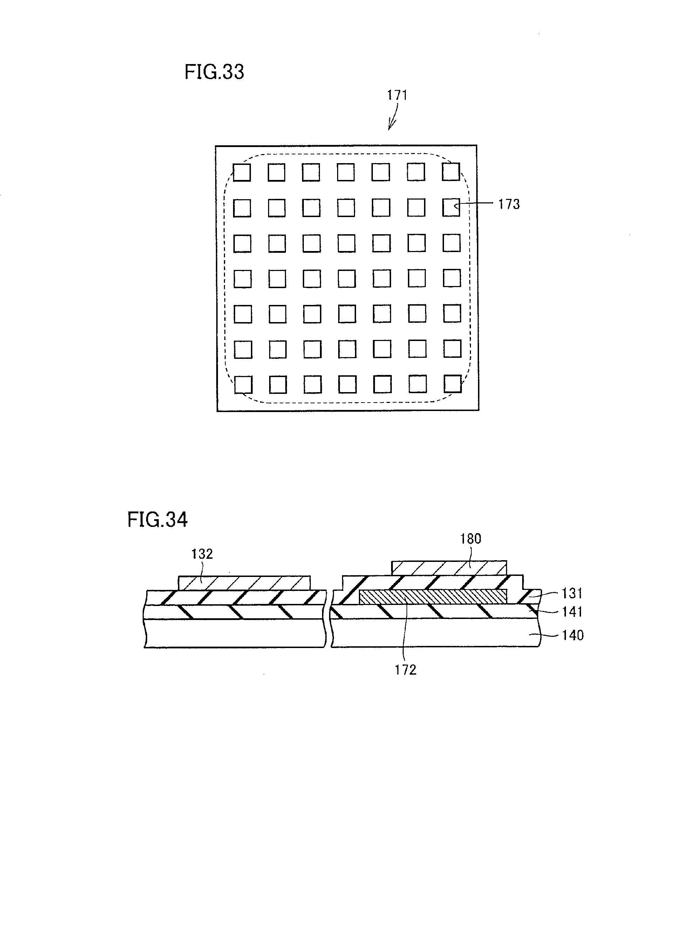

Fig. 33 is a plan view of upper electrode 171 when upper electrode 171 has been deformed as shown in Fig. 32. In this Fig. 33, a region enclosed by a broken line represents a region where upper electrode 171 has deformed to conform to the upper surface of lower electrode 172, and this region enclosed by the broken line is a region facing underlying layer 131 and underlying layer 141 with underlying layer 131 interposed therebetween.

As shown in this Fig. 33, as a result of slight deformation of upper electrode 171, most of upper electrode 171 deforms to conform to lower electrode 172.

When pressing member 145 is slightly displaced downward, an area of this region enclosed by the broken line increases sharply. Therefore, the capacitance between upper electrode 171 and lower electrode 172 also increases sharply.

As described above, in pressure sensor 118 according to the third embodiment as well, the upper electrode deforms to conform to the shape of the lower electrode, and the characteristic of pressure sensor 118 exhibits the characteristic shown by the solid line in Fig. 8.

Therefore, liquid crystal display device 100 according to the third embodiment can accurately calculate the pressure applied to common substrate 150.

A method for manufacturing liquid crystal display device 100 according to the third embodiment will be described with reference to Figs. 34 to 36. In liquid crystal display device 100 according to the third embodiment as well, TFT array substrate 130 and common substrate 150 are independently formed. Thereafter, TFT array substrate 130 and common substrate 150 are arranged to face each other.

Fig. 34 is a cross-sectional view showing a first step of a process of manufacturing TFT array substrate 130. As shown in this Fig. 34, glass substrate 140 having the main surface is prepared. Underlying layer 141 is formed on the main surface of this glass substrate 140. Underlying layer 141 is formed of, for example, an insulating layer made of SiO₂, SiN, SiNO and the like, and is formed of, for example, a silicon oxynitride layer (SiNO layer) having a thickness of approximately 50 nm and a silicon oxide layer (SiO₂ layer) having a thickness of approximately 110 nm and formed on this silicon oxynitride layer (SiNO layer).

Underlying layer 141 is formed to have a film thickness of, for example, more than 0 nm and 500 nm or less. Underlying layer 141 is preferably formed to have a film thickness of 400 nm or less.

Thereafter, a metal layer made of molybdenum (Mo), tungsten (W) and the like is formed on the upper surface of underlying layer 141 by sputtering and the like. Then, this metal layer is patterned to form lower electrode 172. Lower electrode 172 is formed to have a film thickness of, for example, 50 nm or more and 600 nm or less. Lower electrode 172 is formed to have a film thickness of 50 nm or more and 300 nm or less.

The insulating layer made of SiO₂, SiN, SiNO and the like is formed to cover lower electrode 172, and underlying layer 131 is formed. Underlying layer 131 has a film thickness of approximately 50 nm or more and 400 nm or less, and preferably 50 nm or more and 200 nm or less.

The amorphous semiconductor layer is deposited on underlying layer 141.
The amorphous semiconductor layer has a film thickness of, for example, 20 nm or more and 200 nm or less. The amorphous semiconductor layer preferably has a film thickness of approximately 30 nm or more and 70 nm. Thereafter, this amorphous semiconductor layer is crystallized to form the continuous grain silicon layer (CG silicon layer). The continuous grain silicon layer is patterned to form semiconductor layer 132 and semiconductor layer 180. Semiconductor layer 180 is formed on a portion of the upper surface of underlying layer 131 located above lower electrode 172.

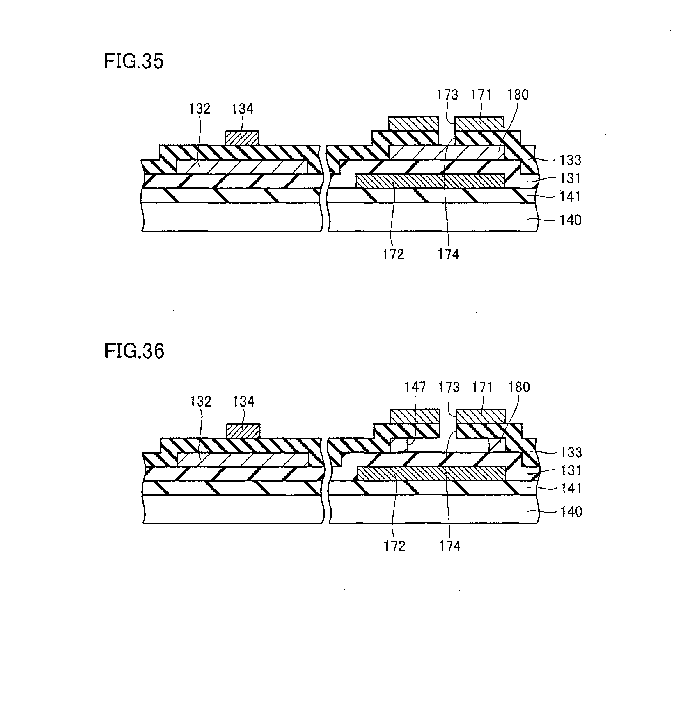

Fig. 35 is a cross-sectional view showing a second step of the process of manufacturing TFT array substrate 130. As shown in this Fig. 35, the insulating layer made of SiO₂, SiN, SiNO and the like is formed, and gate insulating layer 133 is formed. Gate insulating layer 133 has a film thickness of, for example, 20 nm or more and 200 nm or less, and preferably 50 nm or more and 120 nm or less. Specifically, gate insulating layer 133 is formed of a SiO₂ layer having a thickness of approximately 80 nm.

After the formation of gate insulating layer 133, P⁺ is doped into semiconductor layer 132 and semiconductor layer 180 under the conditions of 45 KV and 5E15 cm⁻².

Then, the metal layer is formed on the upper surface of gate insulating layer 133. This metal layer is formed of, for example, a metal film made of tungsten (W), tantalum (Ta), titanium (Ti), molybdenum (Mo) and the like, or an alloy film containing tungsten (W), tantalum (Ta), titanium (Ti), molybdenum (Mo) and the like, or a compound containing an element such as tungsten (W), tantalum (Ta), titanium (Ti), and molybdenum (Mo).

This metal layer has a film thickness of, for example, 50 nm or more and 600 nm or less, and preferably 100 nm or more and 500 nm or less.

Thereafter, this metal layer is patterned to form gate electrode 134 and upper electrode 171. At this time, hole 173 is simultaneously formed in upper electrode 171.

In other words, in the method for manufacturing liquid crystal display device 100 according to the third embodiment, gate electrode 134 and upper electrode 171 can be simultaneously formed and an increase in the number of manufacturing steps is suppressed.

After the formation of upper electrode 171 and gate electrode 134, a resist mask covering a portion other than upper electrode 171 is formed, and gate insulating layer 133 is etched using upper electrode 171 and this mask. Gate insulating layer 133 is etched using an acid-based solution such as an HF (hydrogen fluoride) aqueous solution. As a result, hole 174 is formed in gate insulating layer 133.

Fig. 36 is a cross-sectional view showing a third step of the process of manufacturing TFT array substrate 130. As shown in this Fig. 36, a resist is first formed on the upper surface of gate insulating layer 133 to cover upper electrode 171 and gate electrode 134, and this resist is patterned. A resist pattern 223 is thus formed. This resist pattern 223 has a hole to expose hole 173 and hole 174 to the outside.
Then, the substrate is immersed in an alkaline solution containing potassium hydroxide (KOH) and the like. The solution flows in through hole 173 and hole 174, and semiconductor layer 180 is etched. As a result, recess 147 is formed in semiconductor layer 180.

Thereafter, as shown in Fig. 28, resist pattern 223 is first removed and interlayer dielectric 135 is formed to cover gate electrode 134 and upper electrode 171. Interlayer dielectric 135 is patterned to form a plurality of contact holes, and thereafter, the metal layer is formed on the upper surface of interlayer dielectric 135 by sputtering. This metal layer is patterned to form drain electrode 137, source electrode 138, source line 111, contact 146, and connection wiring 124.

Then, upper insulating layer 136 is deposited and this upper insulating layer 136 is patterned to form a contact hole. Thereafter, the ITO film is deposited and this ITO film is patterned to form pixel electrode 114. TFT array substrate 130 of liquid crystal display device 100 according to the third embodiment is thus formed.

On the other hand, in order to form common substrate 150, glass substrate 156 is first prepared. Color filter substrate 151 is formed on the main surface of this glass substrate 156, and thereafter, common electrode 152 is formed. Then, a resin such as an acrylic resin is deposited on this common electrode 152. This acrylic resin is patterned to form pressing member 145. Common substrate 150 of liquid crystal display device 100 according to the third embodiment is thus formed. Thereafter, liquid crystal layer 160 is applied onto the upper surface of formed TFT array substrate 130, and common substrate 150 is arranged on the upper surface side of TFT array substrate 130. Liquid crystal display device 100 according to the present embodiment is thus formed.

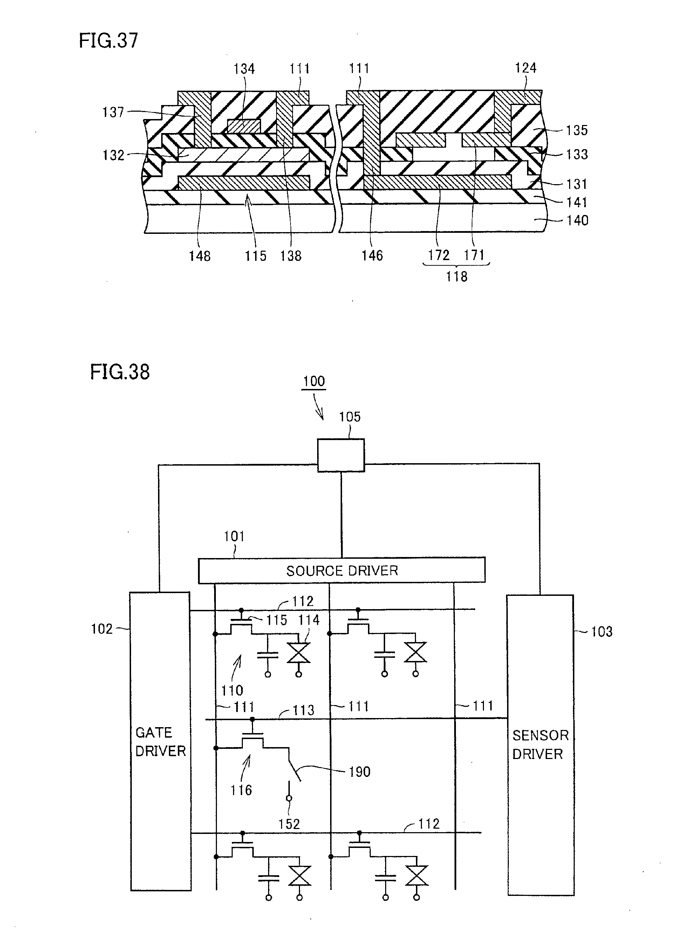

Fig. 37 is a cross-sectional view showing a modification of TFT array substrate 130 shown in Fig. 28. In the example shown in this Fig. 37, a light blocking layer 148 is formed on a portion of the upper surface of underlying layer 141 located below semiconductor layer 132. This light blocking layer 148 is made of a material that is the same as (a material of the same kind as) that of lower electrode 172, and a film thickness of light blocking layer 148 is substantially identical to a film thickness of lower electrode 172. Specifically, light blocking layer 148 is formed of, for example, a metal film made of tungsten (W), tantalum (Ta), titanium (Ti), molybdenum (Mo) and the like, or an alloy film containing tungsten (W), tantalum (Ta), titanium (Ti), molybdenum (Mo) and the like, or a compound containing an element such as tungsten (W), tantalum (Ta), titanium (Ti), and molybdenum (Mo). Light blocking layer 148 has a film thickness of, for example, 50 nm or more and 600 nm or less, and preferably 100 nm or more and 500 nm or less.

Light blocking layer 148 suppresses irradiation of semiconductor layer 132 with light and suppresses fluctuations in characteristic of TFT element 115 caused by a photoelectric effect.

In the process of manufacturing TFT array substrate 130, light blocking layer 148 and lower electrode 172 are formed by patterning the metal layer deposited on underlying layer 141. Since lower electrode 172 and light blocking layer 148 can be formed in the same step as described above, an increase in the number of steps of manufacturing liquid crystal display device 100 is suppressed and lower electrode 172 and light blocking layer 148 can be formed.

### (Fourth Embodiment)

Pressure sensor 118, liquid crystal display device 100 and a method for manufacturing liquid crystal display device 100 according to a fourth embodiment of the present invention will be described with reference to Figs. 38 to 49. The same reference characters are given to the components shown in Figs. 38 to 49 that are the same as or corresponding to those shown in Figs. 1 to 37 above, and description thereof will not be repeated.

Fig. 38 is a circuit diagram schematically showing a circuit diagram of liquid crystal display device 100 according to the fourth embodiment.

As shown in this Fig. 38, one electrode (lower electrode) of a pressure sensor 190 according to the fourth embodiment is connected to the drain electrode of TFT element for selection 116, and the other electrode (upper electrode) of pressure sensor 190 is connected to common electrode 152.

By switching ON/OFF of TFT element for selection 116, control unit 105 selects pressure sensor 190 for sensing.

In order to turn on selected TFT element for selection 116, a predetermined voltage is applied to gate line for sensing 113 to which selected TFT element for selection 116 is connected. A predetermined voltage is applied to source line 111 to which the source electrode of this selected TFT element for selection 116 is connected.

Pressure sensor 190 is formed to change an amount of current in accordance with the externally applied pressure.

Therefore, by sensing an amount of current flowing between source line 111 to which TFT element for selection 116 is connected and common electrode 152, control unit 105 can calculate the pressure applied to selected pressure sensor 190.

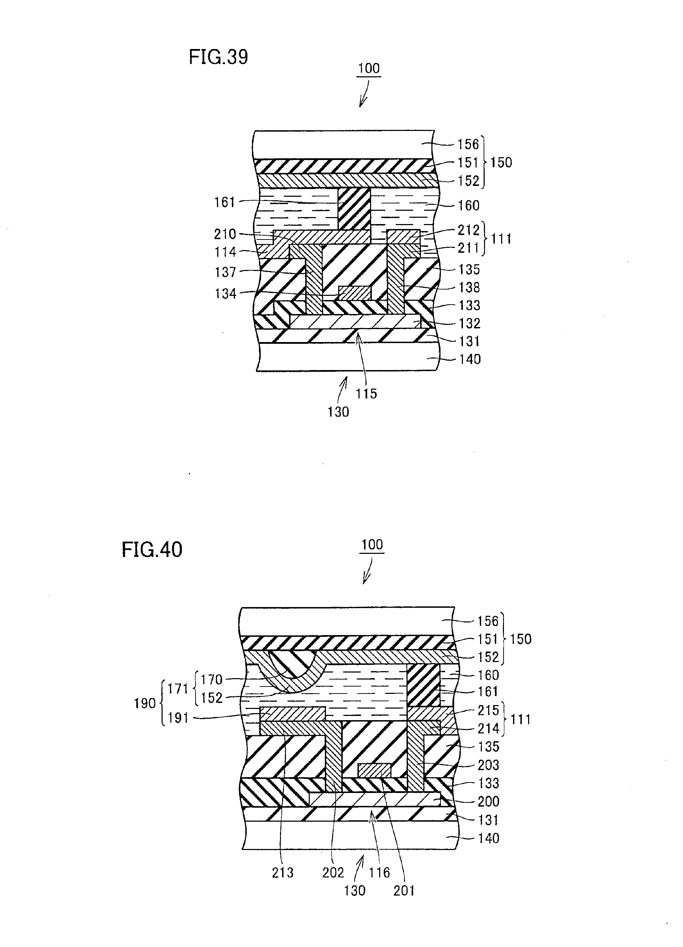

Fig. 39 is a cross-sectional view of liquid crystal display device 100 according to the fourth embodiment and is a cross-sectional view showing TFT element 115.

As shown in this Fig. 39, liquid crystal display device 100 includes TFT array substrate 130, common substrate 150 arranged above TFT array substrate 130, and liquid crystal layer 160 filled between TFT array substrate 130 and common substrate 150.

TFT array substrate 130 includes glass substrate 140, underlying layer 131 formed on the main surface of glass substrate 140, and TFT element 115 formed on this underlying layer 131.

TFT element 115 includes semiconductor layer 132 formed on underlying layer 131, gate insulating layer 133 formed to cover semiconductor layer 132, gate electrode 134 formed on this gate insulating layer 133, and drain electrode 137 and source electrode 138 connected to semiconductor layer 132.

Interlayer dielectric 135 is formed on gate insulating layer 133 to cover gate electrode 134, and drain electrode 137 and source electrode 138 are formed to reach the upper surface of this interlayer dielectric 135. A drain pad 210 is formed at the upper end of drain electrode 137, and pixel electrode 114 is connected to drain pad 210.

A wiring 211 is formed at the upper end of source electrode 138, and a transparent conductive layer 212 is formed on an upper surface of this wiring 211. Wiring 211 and transparent conductive layer 212 constitute source line 111 to which TFT element 115 is connected.

Spacer 161 is arranged between common substrate 150 and TFT array substrate 130.

Fig. 40 is a cross-sectional view of liquid crystal display device 100 according to the fourth embodiment and is a cross-sectional view showing TFT element for selection 116 and pressure sensor 190.

As shown in this Fig. 40, TFT element for selection 116 is formed in TFT array substrate 130, and pressure sensor 190 is formed between common substrate 150 and TFT array substrate 130.

TFT element for selection 116 includes a semiconductor layer 200 formed on underlying layer 131, gate insulating layer 133 formed to cover this semiconductor layer 200, a gate electrode 201 formed on the upper surface of gate insulating layer 133, and a drain electrode 202 and a source electrode 203 connected to semiconductor layer 200.

Interlayer dielectric 135 is formed on gate insulating layer 133 to cover gate electrode 201. An upper end of drain electrode 202 is formed to reach the upper surface of interlayer dielectric 135, and an electrode unit 213 is connected to the upper end of drain electrode 202. Electrode unit 213 is located on the upper surface of interlayer dielectric 135 and is formed into a flat surface.

An upper end of source electrode 203 is formed to reach the upper surface of interlayer dielectric 135, and a wiring 214 is connected to this upper end of source electrode 203. Wiring 214 is located on the upper surface of interlayer dielectric 135 and is formed into a flat surface. A transparent conductive layer 215 is formed on an upper surface of wiring 214, and transparent conductive layer 215 is formed of an ITO layer and the like. Wiring 214 and transparent conductive layer 215 constitute source line 111 to which TFT element for selection 116 is connected.

Pressure sensor 190 includes upper electrode 171 formed in common substrate 150, and a lower electrode 191 formed in TFT array substrate 130.

Upper electrode 171 is formed by projection 170 formed on the lower surface of color filter substrate 151, and common electrode 152 located on this projection 170. Projection 170 is made of a plastic resin such as an acrylic resin and is elastically deformable.

Lower electrode 191 is formed on an upper surface of electrode unit 213. Lower electrode 191 is formed of, for example, a transparent conductive layer such as an ITO film, and a resistance layer made of Si and the like. Lower electrode 191 has a film thickness of, for example, 50 nm or more and 400 nm or less, and preferably 50 nm or more and 200 nm or less.

In the example shown in this Fig. 40, in a state where the external force is not applied to common substrate 150, a small gap is formed between upper electrode 171 and lower electrode 191.

In the state where the external force is not applied to common substrate 150, upper electrode 171 is not in contact with lower electrode 191 and a current does not flow between upper electrode 171 and lower electrode 191. Therefore, electric power consumption is reduced.

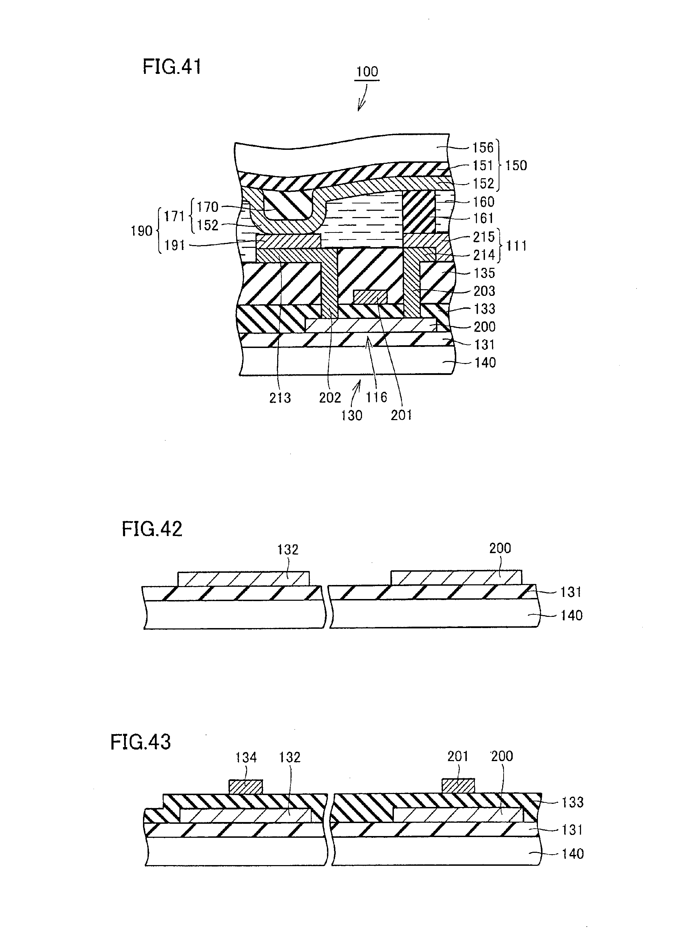

Fig. 41 is a cross-sectional view schematically showing a state where common substrate 150 is pressed. As shown in this Fig. 41, when common substrate 150 is pressed, common substrate 150 deforms and upper electrode 171 comes into contact with lower electrode 191.

As a result of contact between upper electrode 171 and lower electrode 191, a current flows between upper electrode 171 and lower electrode 191. By sensing source line 111 to which TFT element for selection 116 is connected and common electrode 152, control unit 105 can sense an amount of current flowing between lower electrode 191 and upper electrode 171.

When the pressure at which common substrate 150 is pressed increases, projection 170 deforms. As a result of deformation of projection 170, a portion of common electrode 152 located on projection 170 also deforms to conform to the shape of lower electrode 191.

As a result, a contact area between lower electrode 191 and common electrode 152 increases sharply, and the amount of current flowing between lower electrode 191 and upper electrode 171 also increases. Therefore, control unit 105 can easily sense changes in the amount of current and easily calculate the pressing force applied to common substrate 150.

Therefore, in pressure sensor 190 and liquid crystal display device 100 according to the fourth embodiment as well, the pressing force applied to common substrate 150 can be accurately sensed. Upper electrode 171 may be in slight contact with lower electrode 191 in the initial state. In this case, by only applying small pressing force to common substrate 150, the amount of current flowing between upper electrode 171 and lower electrode 191 can be changed.

A method for manufacturing liquid crystal display device 100 according to the fourth embodiment will be described with reference to Figs. 42 to 49.

In liquid crystal display device 100 according to the fourth embodiment as well, liquid crystal display device 100 is formed by separately forming common substrate 150 and TFT array substrate 130, and thereafter, assembling common substrate 150 and TFT array substrate 130 together so as to sandwich the liquid crystal layer.

Fig. 42 is a cross-sectional view showing a first step of a process of manufacturing TFT array substrate 130. As shown in this Fig. 42, glass substrate 140 having the main surface is prepared. Underlying layer 131 is formed on the main surface of glass substrate 140. Underlying layer 131 is formed of an insulating layer made of SiO₂, SiN, SiNO and the like. Underlying layer 131 is formed to have a film thickness of, for example, 500 nm or less, and preferably 400 nm or less.

Thereafter, the amorphous semiconductor layer is deposited on the upper surface of underlying layer 131. The amorphous semiconductor layer has a film thickness of, for example, 20 nm or more and 200 nm or less. The amorphous semiconductor layer preferably has a film thickness of approximately 30 nm or more and 70 nm. Thereafter, this amorphous semiconductor layer is crystallized to form the continuous grain silicon layer (CG silicon layer). The continuous grain silicon layer is patterned to form semiconductor layer 132 and semiconductor layer 200.

As described above, semiconductor layer 132 of TFT element 115 and semiconductor layer 200 of TFT element for selection 116 can be formed in the same patterning step.

Fig. 43 is a cross-sectional view showing a second step of the process of manufacturing TFT array substrate 130. As shown in this Fig. 43, gate insulating layer 133 is formed on underlying layer 131 to cover semiconductor layer 132 and semiconductor layer 200. Gate insulating layer 133 is formed of an insulating layer made of SiO₂, SiN, SiNO and the like. Gate insulating layer 133 has a film thickness of, for example, 20 nm or more and 200 nm or less, and preferably 50 nm or more and 120 nm or less.

The metal layer is formed on the upper surface of gate insulating layer 133 by sputtering and the like. This metal layer is formed of, for example, a metal film made of tungsten (W), tantalum (Ta), titanium (Ti), molybdenum (Mo) and the like, or an alloy film containing tungsten (W), tantalum (Ta), titanium (Ti), molybdenum (Mo) and the like, or a compound containing an element such as tungsten (W), tantalum (Ta), titanium (Ti), and molybdenum (Mo). This metal layer has a film thickness of, for example, 50 nm or more and 600 nm or less, and preferably 100 nm or more and 500 nm or less.

Then, this metal layer is patterned to form gate electrode 134 and gate electrode 201. As described above, gate electrode 134 of TFT element 115 and gate electrode 201 of TFT element for selection 116 can be formed in the same patterning step.

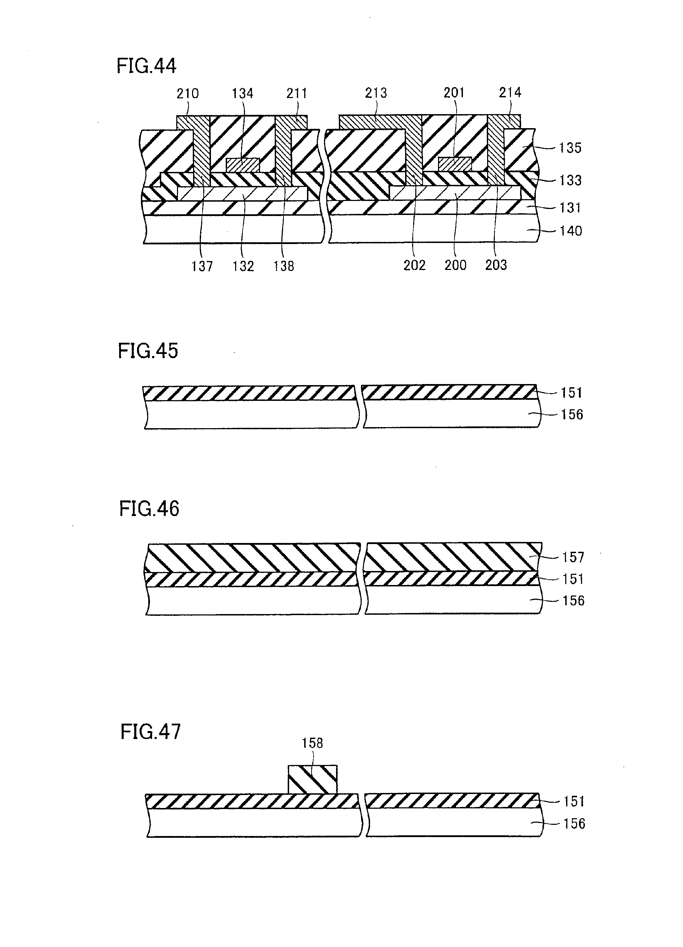

Fig. 44 is a cross-sectional view showing a third step of the process of manufacturing TFT array substrate 130. As shown in this Fig. 44, interlayer dielectric 135 is formed to cover gate electrode 201 and gate electrode 134. Interlayer dielectric 135 is formed of, for example, an insulating layer made of SiO₂, SiN, SiNO and the like. Interlayer dielectric 135 is formed to have a film thickness of, for example, 100 nm or more and 1000 nm or less. Interlayer dielectric 135 preferably has a film thickness of 100 nm or more and 700 nm or less.

Interlayer dielectric 135 is patterned to form a plurality of contact holes. After the formation of the contact holes, a conductive layer is formed on interlayer dielectric 135 by sputtering. This metal layer is formed of a metal layer made of tungsten (W), tantalum (Ta), titanium (Ti), molybdenum (Mo) and the like, or an alloy containing an element such as tungsten (W), tantalum (Ta), titanium (Ti), and molybdenum (Mo), or a compound containing tungsten (W), tantalum (Ta), titanium (Ti), and molybdenum (Mo).

This metal layer is patterned to form drain electrode 137, drain pad 210, source electrode 138, wiring 211, drain electrode 202, electrode unit 213, source electrode 203, and wiring 214.

Thereafter, the transparent conductive layer made of ITO and the like is formed to cover drain pad 210, wiring 211, electrode unit 213, and wiring 214. This transparent conductive layer is patterned to form pixel electrode 114, transparent conductive layer 212, lower electrode 191, and transparent conductive layer 215 shown in Figs. 39 and 40.

As a result, TFT array substrate 130 shown in Figs. 39 and 40 can be formed. As described above, in the method for manufacturing liquid crystal display device 100 according to the fourth embodiment, TFT element for selection 116 and lower electrode 191 of pressure sensor 190 can be formed in the process of forming TFT element 115, and thus, an increase in the number of manufacturing steps is suppressed.

Fig. 45 is a cross-sectional view showing a first step of a process of manufacturing common substrate 150. As shown in this Fig. 45, glass substrate 156 having the main surface is prepared. Then, color filter substrate 151 is formed on the main surface of this glass substrate 156.

Fig. 46 is a cross-sectional view showing a second step of the process of manufacturing common substrate 150. As shown in this Fig. 46, plastic resin layer 157 is formed on the main surface of color filter substrate 151.

Plastic resin layer 157 has a film thickness of, for example, approximately 1 to 10 µm, and preferably approximately 2 to 5 µm.

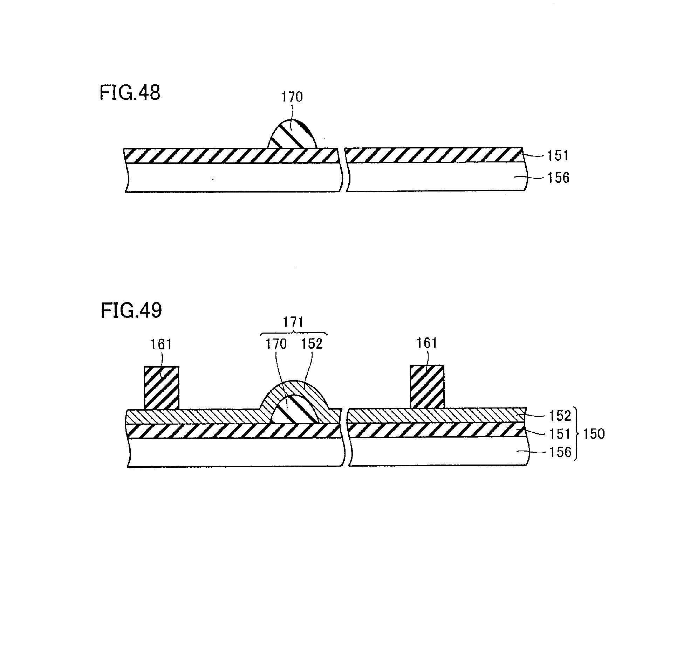

Fig. 47 is a cross-sectional view showing a third step of the process of manufacturing common substrate 150. As shown in this Fig. 47, plastic resin layer 157 is patterned to form resin pattern 158. Fig. 48 is a cross-sectional view showing a fourth step of the process of manufacturing common substrate 150. In this Fig. 48, resin pattern 158 is subjected to the annealing treatment to form projection 170 having a smooth surface.

Fig. 49 is a cross-sectional view showing a fifth step of the process of manufacturing common substrate 150. As shown in this Fig. 49, common electrode 152 is formed on the surface of color filter substrate 151 to cover projection 170. The upper electrode is thus formed.

After the formation of common electrode 152, the resin layer made of an acrylic resin and the like is formed. This resin layer is patterned to form a plurality of spacers 161. Common electrode 152 and TFT array substrate 130 thus formed are assembled together. Liquid crystal display device 100 is thus formed.

### (Fifth Embodiment)

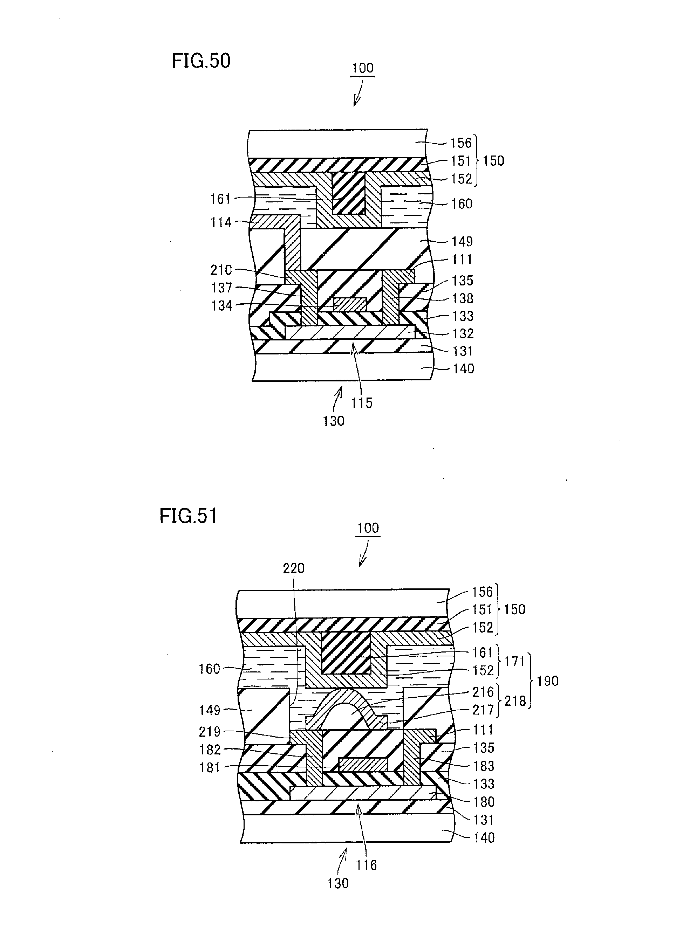

Pressure sensor 118, liquid crystal display device 100 and a method for manufacturing liquid crystal display device 100 according to a fifth embodiment of the present invention will be described with reference to Figs. 50 to 57 and Fig. 38. The same reference characters are given to the components shown in Figs. 50 to 57 that are the same as or corresponding to those shown in Figs. 1 to 49 above, and description thereof will not be repeated. In addition, an electrical circuit of liquid crystal display device 100 according to the fifth embodiment corresponds to the electrical circuit shown in Fig. 38 above.

Fig. 50 is a cross-sectional view of liquid crystal display device 100 according to the fifth embodiment and is a cross-sectional view showing TFT element 115.

As shown in this Fig. 50, liquid crystal display device 100 includes glass substrate 140, underlying layer 131 formed on the main surface of this glass substrate 140, and TFT element 115 formed on the upper surface of underlying layer 131.

TFT element 115 includes semiconductor layer 132 formed on underlying layer 131, gate insulating layer 133 formed on underlying layer 131 to cover semiconductor layer 132, gate electrode 134 formed on this gate insulating layer 133, and drain electrode 137 and source electrode 138 connected to semiconductor layer 132.

Interlayer dielectric 135 is formed on gate insulating layer 133 to cover gate electrode 134. Drain pad 210 and source line 111 are formed on the upper surface of this interlayer dielectric 135. Drain electrode 137 is connected to drain pad 210, and source electrode 138 is connected to source line 111.

Furthermore, a resin layer 149 is formed on the upper surface of interlayer dielectric 135. Resin layer 149 is made of a plastic resin such as an acrylic resin. Resin layer 149 has a film thickness of, for example, 1 µm or more and 10 µm or less. Resin layer 149 preferably has a film thickness of 1.5 µm or more and 5 µm or less. Pixel electrode 114 is formed on an upper surface of resin layer 149 and pixel electrode 114 is connected to drain pad 210.

Fig. 51 is a cross-sectional view of liquid crystal display device 100 and is a cross-sectional view showing TFT element for selection 116.

As shown in this Fig. 51, liquid crystal display device 100 includes TFT element for selection 116 formed on underlying layer 131.

TFT element for selection 116 includes semiconductor layer 180 formed on underlying layer 131, gate insulating layer 133 formed on underlying layer 131 to cover semiconductor layer 180, gate electrode 181 formed on this gate insulating layer 133, and drain electrode 182 and source electrode 183 connected to semiconductor layer 180.

A pad unit 219, source line 111 and a lower electrode 218 are formed on the upper surface of interlayer dielectric 135. The upper end of drain electrode 182 is connected to pad unit 219, and the upper end of source electrode 183 is connected to source line 111.

Therefore, by controlling a voltage applied to gate electrode 181, ON/OFF of TFT element for selection 116 can be switched.

Lower electrode 218 is connected to pad unit 219. Lower electrode 218 includes a projection 216 formed to protrude upward from the upper surface of interlayer dielectric 135 and a conductive layer 217 formed on a surface of this projection 216. Projection 216 is made of a material that is the same as that of resin layer 149 and projection 216 is made of, for example, an elastically deformable resin material such as an acrylic resin. Projection 216 has a curved outer surface. Conductive layer 217 is connected to pad unit 219.

Upper electrode 171 is formed on a portion of the lower surface of common substrate 150 located above lower electrode 218.

Upper electrode 171 is formed by spacer 161 formed on the lower surface of color filter substrate 151, and common electrode 152 formed on the lower surface of color filter substrate 151 to cover this spacer 161. Spacer 161 is made of, for example, an acrylic resin and is formed to protrude from the lower surface of color filter substrate 151 toward lower electrode 218.

When control unit 105 performs sensing, a predetermined voltage is applied to gate electrode 181 and TFT element for selection 116 is turned on.

When common substrate 150 is pressed, upper electrode 171 is displaced toward lower electrode 218 and upper electrode 171 presses lower electrode 218. Conductive layer 217 is pressed, and thereby conductive layer 217 deforms and lower electrode 218 deforms to conform to the surface shape of upper electrode 171. As a result, a contact area between common electrode 152 of upper electrode 171 and conductive layer 217 of lower electrode 218 increases sharply. Consequently, an amount of current flowing between common electrode 152 and conductive layer 217 increases.

By sensing the amount of current between common electrode 152 and source line 111 to which TFT element for selection 116 is connected, control unit 105 shown in Fig. 38 calculates the pressure applied to common substrate 150.

As described above, in liquid crystal display device 100 according to the fifth embodiment as well, the pressure applied to common substrate 150 can be accurately calculated because the amount of current flowing between upper electrode 171 and lower electrode 218 changes greatly when common substrate 150 is pressed.

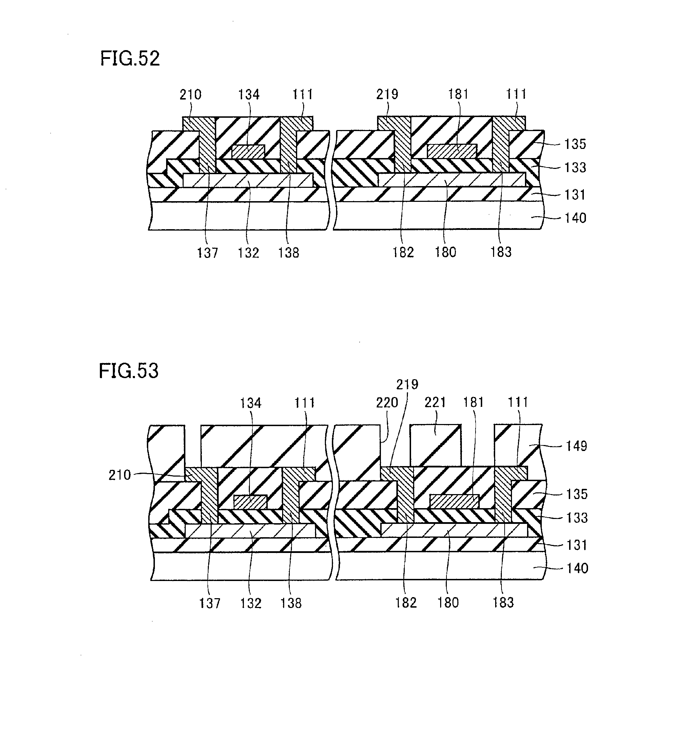

A method for manufacturing liquid crystal display device 100 according to the fifth embodiment will be described with reference to Figs. 52 to 57. In liquid crystal display device 100 according to the fifth embodiment as well, liquid crystal display device 100 is formed by independently forming TFT array substrate 130 and common substrate 150, and thereafter, assembling TFT array substrate 130 and common substrate 150 together.

Fig. 52 is a cross-sectional view showing a step when TFT element 115 and TFT element for selection 116 are formed, in a process of manufacturing TFT array substrate 130.

In this Fig. 52, the continuous grain silicon layer is formed from the amorphous semiconductor layer, and thereafter, this continuous grain silicon layer is patterned by the photolithography method and the like to form semiconductor layer 132 and semiconductor layer 180.

After the formation of semiconductor layer 132 and semiconductor layer 180, gate insulating layer 133 is formed on underlying layer 131. Gate electrode 134 and gate electrode 181 are formed by patterning the same metal layer formed on gate insulating layer 133.

After the formation of gate electrode 134 and gate electrode 181, interlayer dielectric 135 is formed. Drain pad 210, drain electrode 137, source electrode 138, pad unit 219, drain electrode 182, source electrode 183, and source line 111 are formed by patterning the same metal layer formed on interlayer dielectric 135.

Fig. 53 is a cross-sectional view showing a manufacturing step for TFT array substrate 130 after the manufacturing step shown in Fig. 52. As shown in this Fig. 53, an acrylic resin is formed on interlayer dielectric 135. Thereafter, this acrylic resin is patterned to form a projection 221 and resin layer 149. Projection 221 is located on interlayer dielectric 135 and projection 221 is located in a recess 220 formed in resin layer 149.

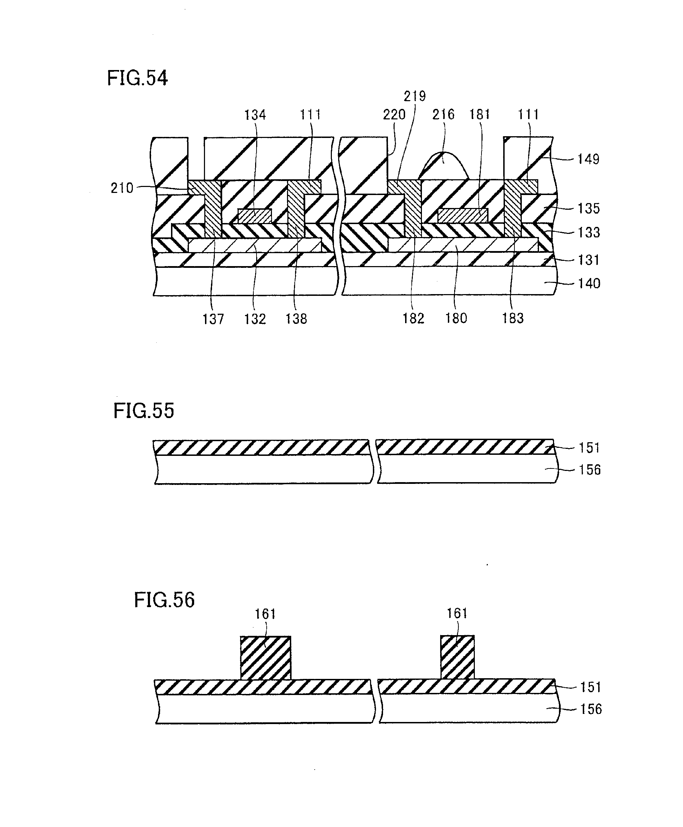

Fig. 54 is a cross-sectional view showing a manufacturing step after the manufacturing step shown in Fig. 53. As shown in this Fig. 54, glass substrate 140 having projection 221 is subjected to the annealing treatment in the oven. The annealing temperature is set to be, for example, 100°C or higher and 300°C or lower, and preferably 100°C or higher and 200°C or lower.

As a result, the resin on a surface of projection 221 flows and projection 216 having a curved surface is formed.

After the formation of projection 216 in such a manner, the transparent conductive layer made of ITO and the like is formed to cover resin layer 149 and projection 216. This transparent conductive layer is patterned to form pixel electrode 114 and conductive layer 217 shown in Figs. 50 and 51. As a result, lower electrode 218 can be formed and TFT array substrate 130 can be formed.

Fig. 55 is a cross-sectional view showing formation of color filter substrate 151 in a process of manufacturing common substrate 150. As shown in this Fig. 55, color filter substrate 151 is formed on glass substrate 156.

Fig. 56 is a cross-sectional view showing a step after the manufacturing step shown in Fig. 55 above. As shown in this Fig. 56, the resin layer made of an acrylic resin and the like is formed on an upper surface of color filter substrate 151. Then, this resin layer is patterned to form a plurality of spacers 161.

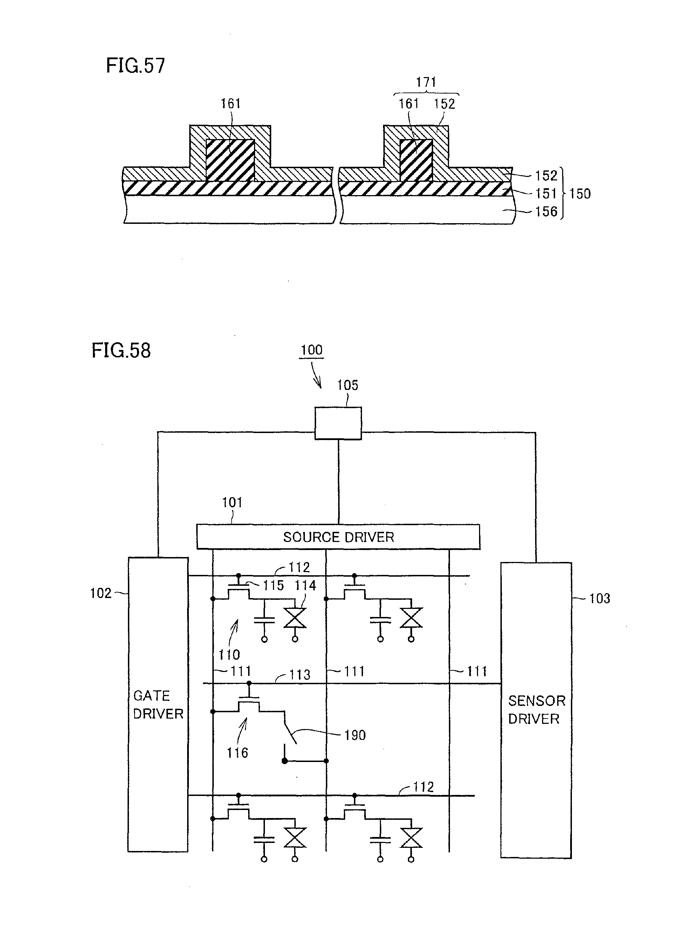

Fig. 57 is a cross-sectional view showing a step after the manufacturing step shown in Fig. 56 above. As shown in this Fig. 57, the transparent conductive layer made of ITO and the like is formed. Common substrate 150 including upper electrode 171 and common electrode 152 is thus formed.

Then, common substrate 150 and TFT array substrate 130 are assembled together and liquid crystal display device 100 is thus formed.

### (Sixth Embodiment)

A sixth embodiment of the present invention will be described with reference to Figs. 58 to 74. The same reference characters are given to the components shown in Figs. 58 to 74 that are the same as or corresponding to those shown in Figs. 1 to 57 above, and description thereof will not be repeated.

Fig. 58 is a circuit diagram showing an electrical circuit of liquid crystal display device 100 according to the sixth embodiment. As shown in this Fig. 58, pressure sensor 190 is connected to the drain electrode of TFT element for selection 116 and source line 111.

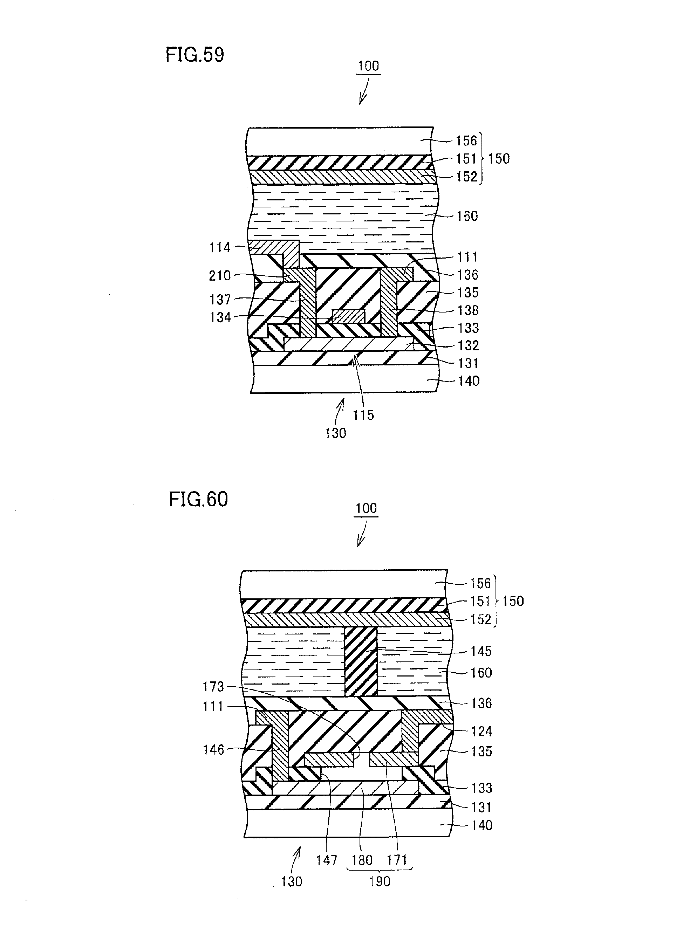

Fig. 59 is a cross-sectional view of liquid crystal display device 100 according to the sixth embodiment and is a cross-sectional view showing TFT element 115.

Fig. 60 is a cross-sectional view of liquid crystal display device 100 according to the sixth embodiment and is a cross-sectional view showing pressure sensor 190.

In these Figs. 59 and 60, pressure sensing element 120 includes underlying layer 131 formed on the main surface of glass substrate 140, and TFT element 115 and pressure sensor 190 formed on underlying layer 131.

TFT element 115 includes semiconductor layer 132, gate electrode 134, drain electrode 137, and source electrode 138.

Pressure sensor 190 includes semiconductor layer 180 formed on underlying layer 131, and upper electrode 171 spaced apart from this semiconductor layer 180 and formed to face semiconductor layer 180. Semiconductor layer 180 functions as the lower electrode of pressure sensor 190.

Semiconductor layer 132 and semiconductor layer 180 are formed on the upper surface of underlying layer 131.

Gate insulating layer 133 is formed on underlying layer 131 to cover semiconductor layer 132 and semiconductor layer 180.

Gate electrode 134 is formed on a portion of the upper surface of gate insulating layer 133 located above semiconductor layer 132, and upper electrode 171 is formed on a portion of the upper surface of gate insulating layer 133 located above semiconductor layer 180.

Interlayer dielectric 135 is formed on the upper surface of gate insulating layer 133 to cover gate electrode 134 and upper electrode 171.

Drain electrode 137, source electrode 138, contact 146, and connection wiring 124 are formed to reach the upper surface of interlayer dielectric 135. Connection wiring 124 is connected to TFT element for selection 116 shown in Fig. 58 and the other end thereof is connected to upper electrode 171. The upper end of contact 146 is connected to source line 111 and a lower end of contact 146 is connected to semiconductor layer 180.

Drain electrode 137 and source electrode 138 are connected to semiconductor layer 132, and drain pad 210 is connected to the upper end of drain electrode 137. Source line 111 is connected to the upper end of source electrode 138. Drain pad 210 and source line 111 are formed on interlayer dielectric 135.

Upper insulating layer 136 is formed to cover drain pad 210, source line 111 and connection wiring 124.

Pixel electrode 114 is formed on upper insulating layer 136 and is connected to drain pad 210.

Pressing member 145 is formed on a portion of the lower surface of common substrate 150 located above upper electrode 171. Pressing member 145 is formed to protrude from the lower surface of common substrate 150 toward TFT array substrate 130.

Recess 147 is formed directly under upper electrode 171. This recess 147 is formed by a hole formed in gate insulating layer 133 and an upper surface of semiconductor layer 180.

In the example shown in this Fig. 60, in the state where common substrate 150 is not pressed, a lower end of pressing member 145 abuts the upper surface of upper insulating layer 136.

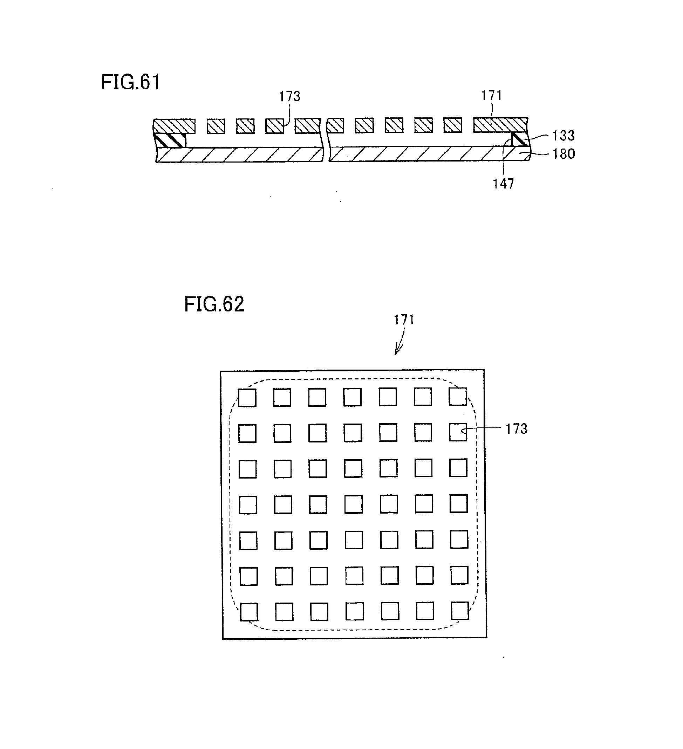

Fig. 61 is a cross-sectional view showing upper electrode 171 and semiconductor layer 180 in the state (initial state) where common substrate 150 is not pressed.

As shown in this Fig. 61, in the initial state, upper electrode 171 is spaced apart from semiconductor layer 180 and upper electrode 171 is not in contact with semiconductor layer 180. Fig. 62 is a plan view of upper electrode 171. A plurality of holes 173 are formed in upper electrode 171.

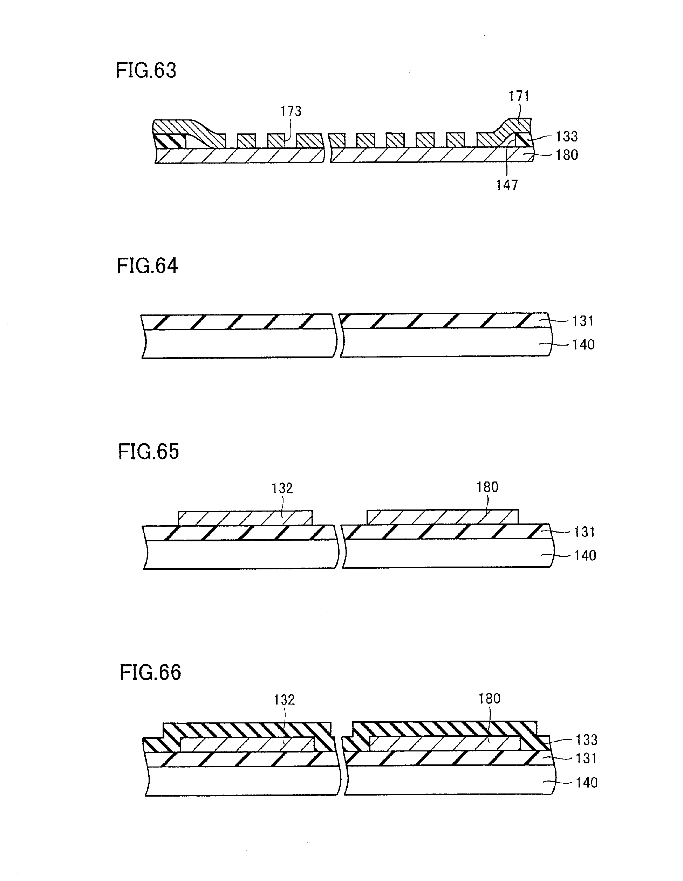

Fig. 63 is a cross-sectional view showing upper electrode 171 and semiconductor layer 180 in the state where common substrate 150 has been pressed. As shown in this Fig. 63, when common substrate 150 is pressed, upper electrode 171 comes into contact with semiconductor layer 180. When the pressing force by which common substrate 150 is pressed is small, a contact area between upper electrode 171 and semiconductor layer 180 is small and an amount of current flowing between semiconductor layer 180 and upper electrode 171 is small.

Then, the pressing force by which common substrate 150 is pressed increases, upper electrode 171 deflects greatly, upper electrode 171 deforms to conform to semiconductor layer 180, and the contact area between upper electrode 171 and semiconductor layer 180 increases.

A region enclosed by a broken line in Fig. 62 represents an area of contact between upper electrode 171 and semiconductor layer 180.

As shown in these Figs. 62 and 63, when the contact area between upper electrode 171 and semiconductor layer 180 increases, the amount of current flowing between upper electrode 171 and semiconductor layer 180 increases. In other words, when the pressing force by which common substrate 150 is pressed increases, the amount of current flowing between upper electrode 171 and semiconductor layer 180 also increases sharply.

Therefore, control unit 105 shown in Fig. 58 can easily sense changes in the amount of current between source line 111 to which TFT element for selection 116 is connected and source line 111 to which pressure sensor 190 is connected, and can accurately calculate the pressure applied to common substrate 150.

A method for manufacturing liquid crystal display device 100 according to the sixth embodiment will be described with reference to Figs. 64 to 74.

In liquid crystal display device 100 according to the sixth embodiment as well, liquid crystal display device 100 is formed by independently forming TFT array substrate 130 and common substrate 150, and arranging formed TFT array substrate 130 and common substrate 150 to face each other.

Fig. 64 is a cross-sectional view showing a first step of a process of manufacturing TFT array substrate 130. In this Fig. 64, glass substrate 140 having the main surface is prepared. Then, the SiNO layer having a thickness of, for example, approximately 50 nm is formed by the plasma enhanced CVD (PECVD) method. Then, the SiO₂ layer having a thickness of, for example, approximately 110 nm is formed on the SiNO layer. Underlying layer 131 is thus formed on the main surface of glass substrate 140.

Fig. 65 is a cross-sectional view showing a second step of the process of manufacturing TFT array substrate 130. As shown in this Fig. 65, and Si (silicon) layer having a thickness of, for example, approximately 50 nm is formed on the upper surface of underlying layer 131 by the plasma enhanced CVD method.

Thereafter, the continuous grain silicon layer is formed by irradiation with XeCl excimer laser, and then, this continuous grain silicon layer is patterned by the photolithography method and the like to form semiconductor layer 132 and semiconductor layer 180.

Fig. 66 is a cross-sectional view showing a third step of the process of manufacturing TFT array substrate 130. In this Fig. 66, the SiO₂ layer having a thickness of, for example, approximately 80 nm is formed by the plasma enhanced CVD method to cover semiconductor layer 132 and semiconductor layer 180.

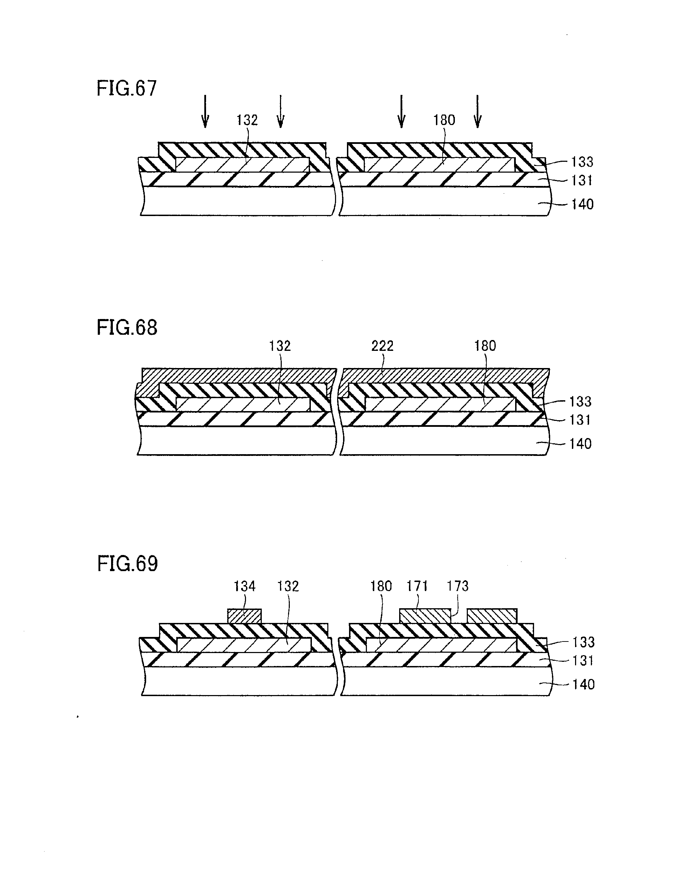

Fig. 67 is a cross-sectional view showing a fourth step of the process of manufacturing TFT array substrate 130. In this Fig. 67, P⁺ (phosphorus ion) is doped into semiconductor layer 132 and semiconductor layer 180 under the conditions of 45 KV and 5E15 cm⁻².

Fig. 68 is a cross-sectional view showing a fifth step of the process of manufacturing TFT array substrate 130. In this Fig. 68, stacked metal layers 222 are formed on the upper surface of gate insulating layer 133 by sputtering and the like. Specifically, the tungsten (W) layer having a thickness of, for example, approximately 370 nm is formed by sputtering. After the formation of the tungsten layer, the tantalum nitride (TaN) layer having a thickness of, for example, approximately 50 nm is formed.

Fig. 69 is a cross-sectional view showing a sixth step of the process of manufacturing TFT array substrate 130. As shown in this Fig. 69, stacked metal layers 222 shown in Fig. 68 is patterned to form gate electrode 134 and upper electrode 171. At least one or more holes 173 are formed in upper electrode 171.

Specifically, as shown in Fig. 62 above, a plurality of holes 173 are formed. Upper electrode 171 is formed to have a square shape and one side thereof has a length of 30 µm. Hole 173 is also formed to have a square shape and one side thereof has a length of 2 µm. A spacing between holes 173 is set to be 2 µm.

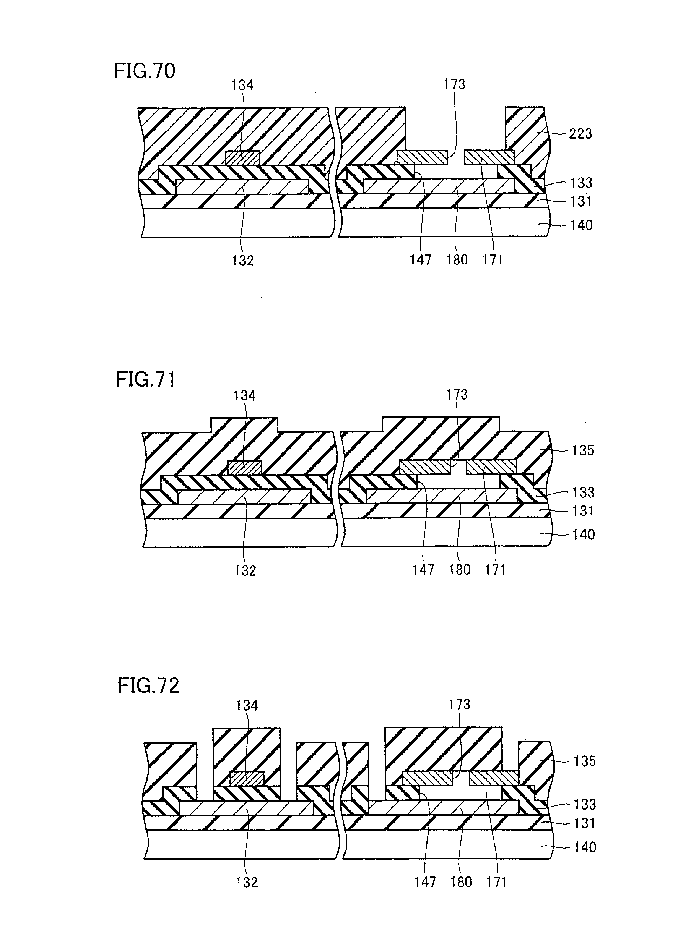

Fig. 70 is a cross-sectional view showing a seventh step of the process of manufacturing TFT array substrate 130. In this Fig. 70, the resist is first formed and this resist is patterned. Resist pattern 223 is thus formed. This resist pattern 223 has a hole to expose hole 173 to the outside.

Then, the substrate having resist pattern 223 is immersed in buffered hydrogen fluoride (BHF). A mixture obtained by mixing hydrofluoric acid (HF) and ammonium fluoride (NH₄F) at a ratio of 1:10 is used as the buffered hydrogen fluoride (BHF). The substrate is immersed for approximately 13 minutes, for example.

As a result, the buffered hydrogen fluoride that has flown in through hole 173 etches a part of gate insulating layer 133. Consequently, recess 147 is formed under upper electrode 171.

Fig. 71 is a cross-sectional view showing an eighth step of the process of manufacturing TFT array substrate 130. In this Fig. 71, resist pattern 223 is removed, and thereafter, interlayer dielectric 135 is formed on gate insulating layer 133.

Specifically, the silicon oxide layer (SiO₂ layer) having a thickness of approximately 700 nm is formed by the plasma enhanced CVD method, and the silicon nitride layer (SiN layer) having a thickness of, for example, approximately 250 nm is formed on this silicon oxide layer. Interlayer dielectric 135 is thus formed.

Fig. 72 is a cross-sectional view showing a ninth step of the process of manufacturing TFT array substrate 130. As shown in this Fig. 72, interlayer dielectric 135 is patterned to form a plurality of contact holes.

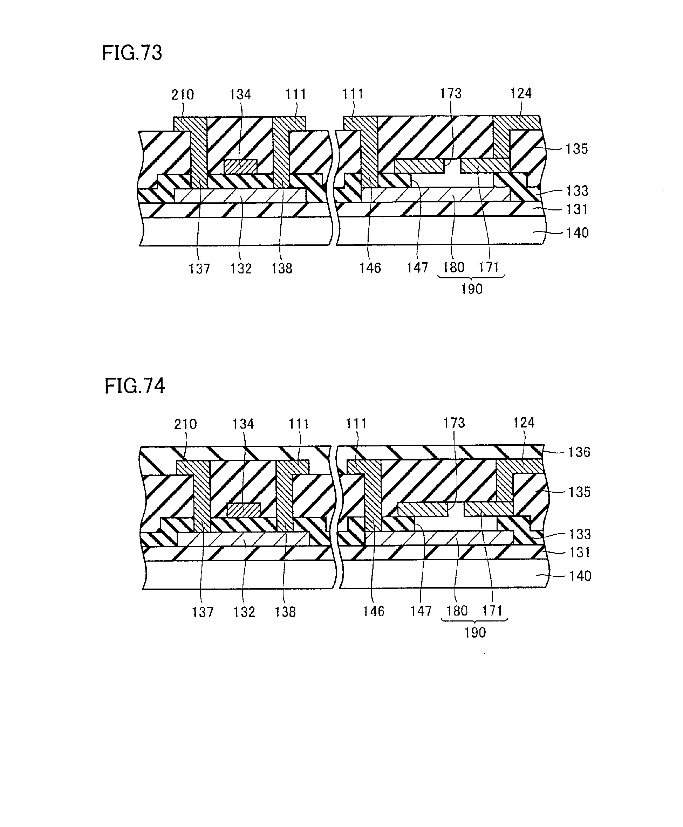

Fig. 73 is a cross-sectional view showing a tenth step of the process of manufacturing TFT array substrate 130. In this Fig. 73, a titanium (Ti) layer having a thickness of, for example, approximately 100 nm is first formed. An Al-Si layer having a thickness of, for example, approximately 600 nm is formed on this titanium layer. A titanium (Ti) layer having a thickness of, for example, approximately 200 nm is formed on this Al-Si layer.

After the formation of the stacked metal layers in such a manner, these stacked metal layers are patterned to form drain pad 210, drain electrode 137, source line 111, source electrode 138, contact 146, and connection wiring 124.

Fig. 74 is a cross-sectional view showing an eleventh step of the process of manufacturing TFT array substrate 130. As shown in this Fig. 74, upper insulating layer 136 is formed to cover drain pad 210, drain electrode 137, source line 111, source electrode 138, contact 146, connection wiring 124 and the like. Specifically, the silicon nitride layer (SiN layer) having a thickness of, for example, approximately 200 nm is formed by the plasma enhanced CVD method.

Thereafter, upper insulating layer 136 is patterned to form the ITO layer on the upper surface of patterned upper insulating layer 136. This ITO layer is patterned to form pixel electrode 114 shown in Fig. 59. TFT array substrate 130 is thus formed.

In order to form common substrate 150, glass substrate 156 is first prepared. Color filter substrate 151 is formed on the main surface of this glass substrate 156. The ITO layer is formed on the upper surface of this color filter substrate 151 to form common electrode 152.

Thereafter, the acrylic resin layer is formed on the upper surface of this common electrode 152 and this acrylic resin layer is patterned to form pressing member 145. Common substrate 150 shown in Fig. 59 is thus formed.

After the formation of TFT array substrate 130 and common substrate 150 in such a manner, the liquid crystal layer is applied onto the main surface of TFT array substrate 130.

Thereafter, common substrate 150 is arranged above TFT array substrate 130, and TFT array substrate 130 and common substrate 150 are assembled together. Liquid crystal display device 100 shown in Figs. 59 and 60 is thus formed.

In liquid crystal display device 100 thus configured, the pressing force is applied from the TFT array substrate 130 side.

Consequently, at 0.2 N, control unit 105 can sense a current flowing between source line 111 to which TFT element for selection 116 is connected and source line 111 to which pressure sensor 190 is connected. Furthermore, when the pressing force of approximately 1 N is applied to TFT array substrate 130, a resistance value is reduced to one-eighth.

### (Seventh Embodiment)

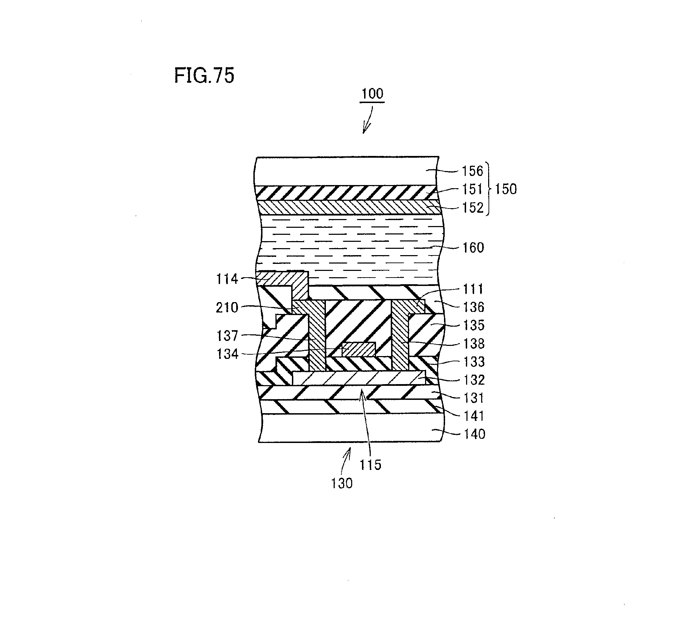

A pressure sensor, liquid crystal display device 100 and a method for manufacturing liquid crystal display device 100 according to a seventh embodiment of the present invention will be described with reference to Figs. 75 to 81 and Fig. 58. The same reference characters are given to the components shown in Figs. 75 to 81 that are the same as or corresponding to those shown in Figs. 1 to 74 above, and description thereof will not be repeated.

An electrical circuit of liquid crystal display device 100 according to the seventh embodiment corresponds to the electrical circuit shown in Fig. 58.

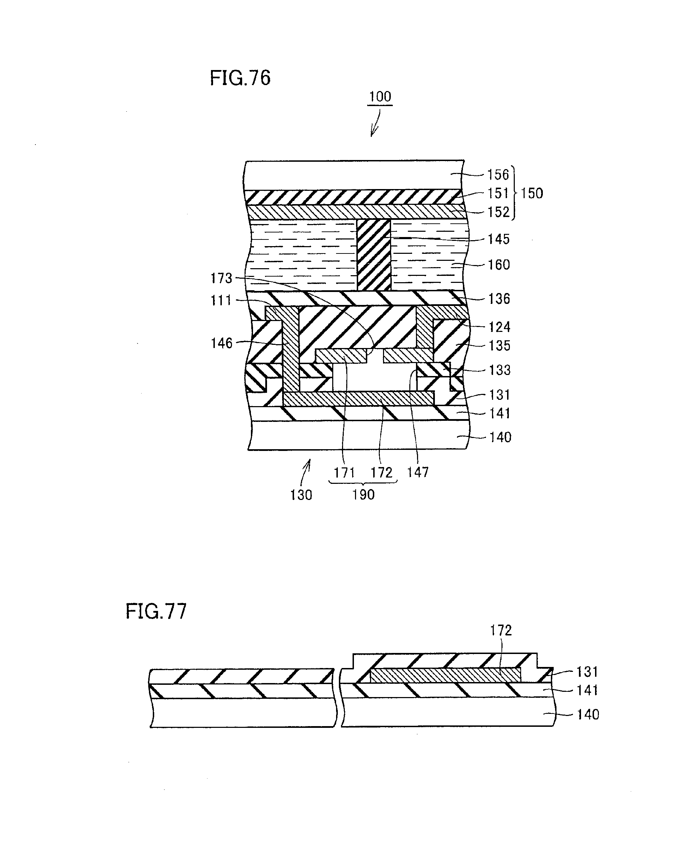

Fig. 75 is a cross-sectional view of liquid crystal display device 100 according to the seventh embodiment and is a cross-sectional view showing TFT element 115. Fig. 76 is a cross-sectional view of liquid crystal display device 100 according to the seventh embodiment and is a cross-sectional view showing pressure sensor 190.

As shown in these Figs. 75 and 76, TFT array substrate 130 includes glass substrate 140, underlying layer 141 formed on the main surface of glass substrate 140, and TFT element 115 and pressure sensor 190 formed on this underlying layer 141.

TFT element 115 is formed on the upper surface of underlying layer 131 formed on underlying layer 141. TFT element 115 includes semiconductor layer 132 formed on underlying layer 131, gate electrode 134 formed on the upper surface of underlying layer 131 to cover semiconductor layer 132, and drain electrode 137 and source electrode 138 connected to semiconductor layer 132.

Interlayer dielectric 135 is formed on gate insulating layer 133 to cover gate electrode 134. Drain pad 210 and source line 111 are formed on the upper surface of interlayer dielectric 135. Drain electrode 137 is connected to drain pad 210, and source electrode 138 is connected to source line 111.

In Fig. 76, pressure sensor 190 includes lower electrode 172 formed on underlying layer 141, and lower electrode 172 located on the common substrate 150 side with respect to this lower electrode 172 and arranged to face lower electrode 172.

Underlying layer 131 and gate insulating layer 133 are formed on the upper surface of lower electrode 172. Recess 147 is formed between lower electrode 172 and upper electrode 171. Recess 147 is defined by a hole formed in underlying layer 131 and the hole formed in gate insulating layer 133, and the upper surface of lower electrode 172 is located at the bottom of this recess 147.

Therefore, in liquid crystal display device 100 according to the seventh embodiment as well, upper electrode 171 can deform to deflect to go into recess 147.

Therefore, in liquid crystal display device 100 according to the seventh embodiment as well, when common substrate 150 is pressed, upper electrode 171 comes into contact with lower electrode 172, and a current flows between upper electrode 171 and lower electrode 172.

When the pressing force by which common substrate 150 is pressed increases, a contact area between upper electrode 171 and lower electrode 172 increases, and the current flowing between upper electrode 171 and lower electrode 172 increases. As a result, control unit 105 shown in Fig. 58 can sense the pressing force applied to common substrate 150.

A method for manufacturing liquid crystal display device 100 according to the seventh embodiment will be described with reference to Figs. 77 to 80.

In liquid crystal display device 100 according to the seventh embodiment as well, liquid crystal display device 100 is formed by separately forming TFT array substrate 130 and common substrate 150, and assembling formed common substrate 150 and TFT array substrate 130 together.

Fig. 77 is a cross-sectional view showing a first step of a process of manufacturing TFT array substrate 130. As shown in this Fig. 77, glass substrate 140 having the main surface is prepared. Underlying layer 141 is formed on the main surface of this glass substrate 140. Underlying layer 141 is made of, for example, SiO₂, SiN, SiNO and the like. Underlying layer 141 has a film thickness of, for example, 500 nm or less, and preferably 400 nm or less.

The metal layer made of molybdenum (Mo), tungsten (W) and the like is formed on the upper surface of this underlying layer 141 by sputtering. Then, this metal layer is patterned to form lower electrode 172. Lower electrode 172 is formed to have a film thickness of, for example, 50 nm or more and 600 nm or less. Lower electrode 172 is preferably formed to have a film thickness of 50 nm or more and 300 nm or less.

The insulating layer such as a SiO₂ layer, a SiN layer and a SiNO layer is formed to cover lower electrode 172, and underlying layer 131 is formed.

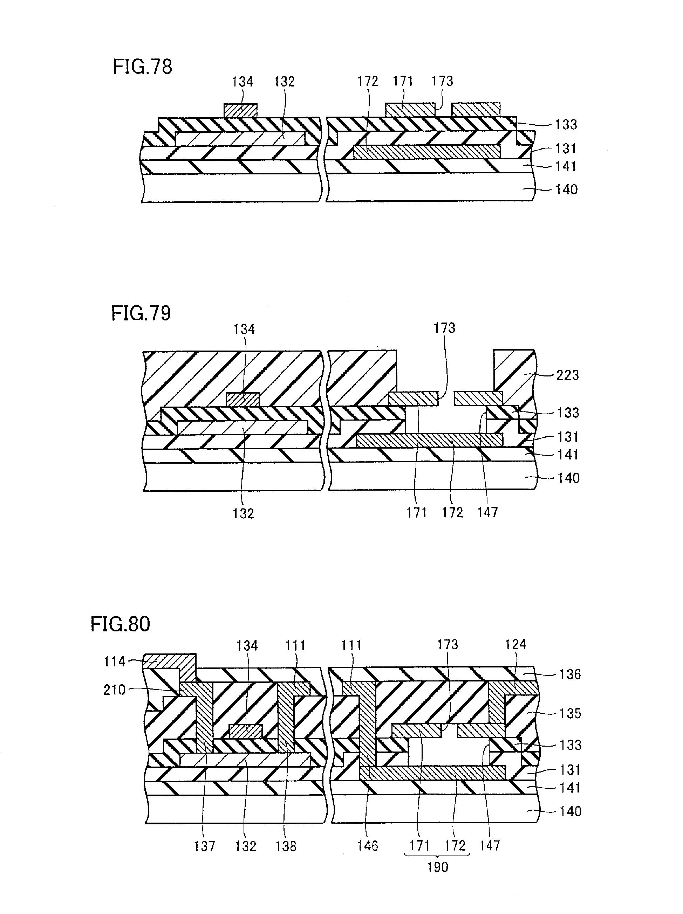

Fig. 78 is a cross-sectional view showing a second step of the process of manufacturing TFT array substrate 130. As shown in this Fig. 78, the amorphous semiconductor layer is deposited on underlying layer 131. The amorphous semiconductor layer has a film thickness of, for example, 20 nm or more and 200 nm or less. The amorphous semiconductor layer preferably has a film thickness of approximately 30 nm or more and 70 nm. Thereafter, this amorphous semiconductor layer is crystallized to form the continuous grain silicon layer (CG silicon layer). The continuous grain silicon layer is patterned to form semiconductor layer 132.

The insulating layer made of SiO_{2,} SiN, SiNO and the like is formed, and gate insulating layer 133 is formed. Gate insulating layer 133 has a film thickness of, for example, 20 nm or more and 200 nm or less, and preferably 50 nm or more and 120 nm or less.

Then, the metal layer is formed on the upper surface of gate insulating layer 133. This metal layer is formed of, for example, a metal film made of tungsten (W), tantalum (Ta), titanium (Ti), molybdenum (Mo) and the like, or an alloy film containing tungsten (W), tantalum (Ta), titanium (Ti), molybdenum (Mo) and the like, or a compound containing an element such as tungsten (W), tantalum (Ta), titanium (Ti), and molybdenum (Mo).

This metal layer has a film thickness of, for example, 50 nm or more and 600 nm or less, and preferably 100 nm or more and 500 nm or less.

Thereafter, this metal layer is patterned to form gate electrode 134 and upper electrode 171. At this time, hole 173 is simultaneously formed in upper electrode 171. As described above, in the seventh embodiment as well, upper electrode 171 and gate electrode 134 can be formed in the same step.

Fig. 79 is a cross-sectional view showing a third step of the process of manufacturing TFT array substrate 130. As shown in this Fig. 79, the resist is first formed and this resist is patterned. Resist pattern 223 is thus formed. This resist pattern 223 has a hole to expose hole 173 to the outside.

Then, the substrate is immersed in an acid-based solution such as an HF (hydrogen fluoride) aqueous solution. The solution flows in through hole 173 and etches gate insulating layer 133 and underlying layer 131. As a result, recess 147 is formed.

Fig. 80 is a cross-sectional view showing a fourth step of the process of manufacturing TFT array substrate 130. As shown in this Fig. 80, resist pattern 223 shown in Fig. 79 is removed. Interlayer dielectric 135 is formed. This interlayer dielectric 135 is patterned to form a plurality of contact holes. Thereafter, the metal layer is formed on the upper surface of interlayer dielectric 135 and this metal layer is patterned to form drain pad 210, drain electrode 137, source electrode 138, source line 111, contact 146, and connection wiring 124.

Thereafter, upper insulating layer 136 is formed and this upper insulating layer 136 is patterned to form the contact hole.

The ITO layer is formed on the upper surface of upper insulating layer 136 having this contact hole and this ITO layer is patterned to form pixel electrode 114. TFT array substrate 130 is thus formed.

Common substrate 150 is formed similarly to common substrate 150 of liquid crystal display device 100 according to the third embodiment described above.

Common substrate 150 and TFT array substrate 130 thus formed are assembled together. Liquid crystal display device 100 according to the seventh embodiment is thus formed.

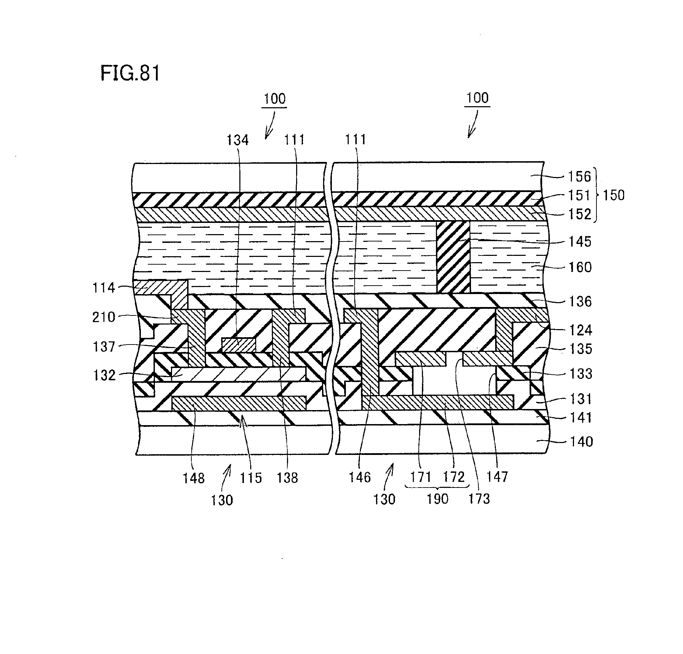

Fig. 81 is a cross-sectional view showing a modification of liquid crystal display device 100 according to the seventh embodiment. As shown in this Fig. 81, light blocking layer 148 may be formed on underlying layer 141 located below semiconductor layer 132.

Light blocking layer 148 is made of a metal material of the same kind as that of lower electrode 172, and a film thickness of light blocking layer 148 is substantially identical to a film thickness of lower electrode 172.

Light blocking layer 148 and lower electrode 172 are formed by patterning one metal layer and can be formed in the same patterning step.

Although the example in which the present invention is applied to the liquid crystal display device has been described in the aforementioned first to seventh embodiments, the present invention is also applicable to an organic electroluminescence (EL) display or a plasma display. In addition, each substrate may be a flexible substrate. When the present invention is applied to the organic electroluminescence display, an organic EL layer serves as the display medium layer.

This organic electroluminescence display includes a first substrate formed on a first main surface, a second substrate spaced apart from the first substrate and having a second electrode on a main surface facing the first main surface, and an organic EL layer formed between a first electrode and the second electrode.

The organic electroluminescence display further includes a lower electrode formed on the first substrate, an upper electrode arranged closer to the second substrate than this lower electrode, and a sensing unit capable of sensing a capacitance between the lower electrode and the upper electrode or an amount of current flowing between the lower electrode and the upper electrode. At least one of the upper electrode and the lower electrode can deform to conform to the other.

When the present invention is applied to the plasma display, a phosphor layer serves as the display medium layer. This plasma display includes a front plate and a back plate. The front plate includes a front glass substrate, a display electrode formed on a lower surface of this front glass substrate, a light blocking layer, and a dielectric layer formed on the lower surface of the front glass substrate to cover the display electrode and the light blocking layer. A protection layer is formed on a lower surface of this dielectric layer.

The back plate includes a back glass substrate, an address electrode formed on an upper surface of this back glass substrate, an underlying dielectric layer formed on the upper surface of the back glass substrate to cover this address electrode, a plurality of partition walls formed on this underlying dielectric layer and partitioning a discharge space, and a phosphor layer formed in a groove between the partition walls. The front plate and the back plate are arranged to face each other. A perimeter is hermetically sealed by a sealant, and a discharge gas is injected into the discharge space.

This plasma display further includes a lower electrode arranged on the back plate side, an upper electrode arranged on the back plate side, and a sensing unit capable of sensing a capacitance or an amount of current defined by the upper electrode and the lower electrode. At least one of the upper electrode and the lower electrode can deform to conform to the other.

### (Eighth Embodiment)

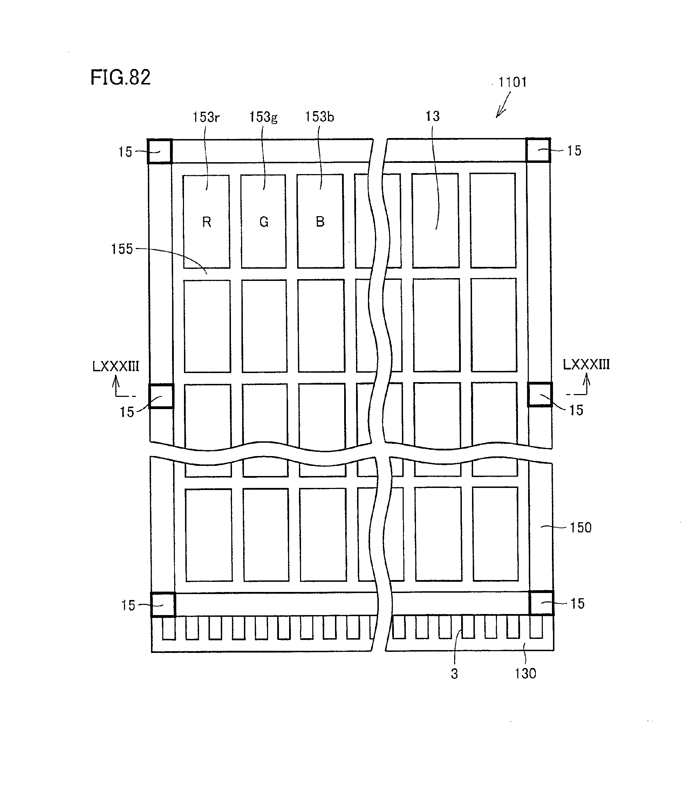

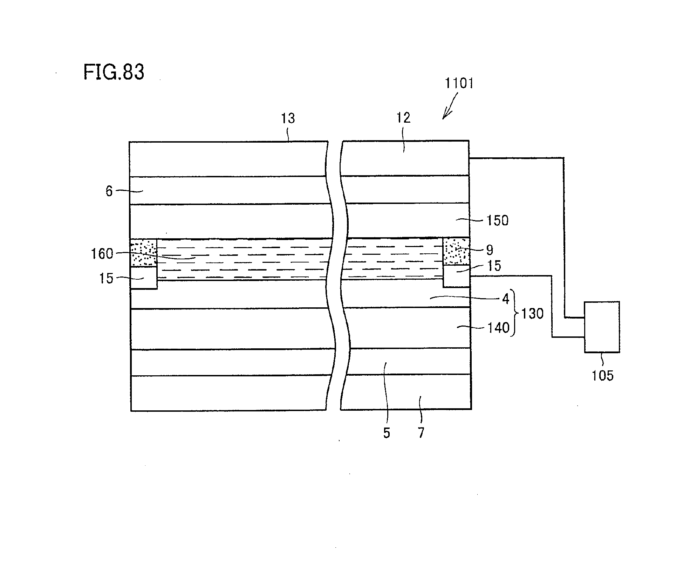

A display device with a touch panel function according to an eighth embodiment based on the present invention will be described with reference to Figs. 82 and 83. Fig. 82 shows a plan view of the display device with a touch panel function according to the present embodiment. This display device with a touch panel function 1101 is a device that can provide a display by liquid crystal, and has an input screen 13 also serving as a display screen. Display device with a touch panel function 1101 has a structure in which TFT (Thin Film Transistor) array substrate 130 and common substrate 150 are assembled together. TFT array substrate 130 has one end projecting from common substrate 150, and an external connection terminal 3 is provided at the projecting portion. Colored layers 153r, 153g and 153b corresponding to colors of R (red), G (green) and B (blue), respectively, are arranged on common substrate 150. These colored layers 153r, 153g and 153b are arranged to correspond to and overlap respective pixel regions defined on TFT array substrate 130. Colored layers 153r, 153g and 153b are separated from one another by black matrix 155.

Fig. 83 shows a cross-sectional view taken along line LXXXIII-LXXXIII in Fig. 82. In Fig. 83, the display screen is shown at the top. The upper side in Fig. 83 corresponds to the front side, and the lower side corresponds to the backside. Therefore, a user will view the contents of display from the upper side in Fig. 83. An optical sheet 5 is arranged at the backside of TFT array substrate 130, and a backlight device 7 is arranged further at the backside thereof. TFT array substrate 130 is obtained by forming TFT layer 4 on the surface of glass substrate 140. Although TFT layer 4 practically has a complicated structure, it is shown in a simplified manner in Fig. 83 for ease of description. A liquid crystal layer 160 is interposed between TFT array substrate 130 and common substrate 150. Liquid crystal layer 160 has the outer circumference surrounded by a seal member 9. Although a color filter layer is practically arranged on the surface of common substrate 150 on the TFT array substrate 130 side, it is not shown in Fig. 83. An optical sheet 6 is arranged on the front surface of common substrate 150. Optical sheets 5 and 6 are each not limited to a single sheet, but may each be a combination of a plurality of sheets.

In display device with a touch panel function 1101 according to the present embodiment, a pressure sensor 15 is arranged as a first sensor to overlap seal member 9. A detailed structure of pressure sensor 15 will be described later.

An electrostatic capacitance touch panel 12 is arranged as a second sensor further at the front side relative to optical sheet 6. Therefore, the surface directly exposed as input screen 13 is a surface of electrostatic capacitance touch panel 12. Details on electrostatic capacitance touch panel 12 are described in NPL 1 and PTL 3 to PTL 5 mentioned above.

Pressure sensor 15 as the first sensor is for detecting whether or not some pressurization is present on the whole input screen 13, and it is not required to detect at which position in input screen 13 pressurization is made. Electrostatic capacitance touch panel 12 as the second sensor is for detecting at which position in input screen 13 pressurization is made.

In this display device with a touch panel function 1101, the first sensor has low standby power consumption because it is a pressure sensor as will be described later, and the second sensor has high standby power consumption because it is an electrostatic capacitance touch panel. That is, in display device with a touch panel function 1101, the second sensor has higher standby power consumption than the first sensor. The standby power consumption as used herein refers to power consumption for waiting in a detectable state that can immediately detect some input. This display device with a touch panel function 1101 includes control unit 105 for switching the second sensor into the detectable state, namely, a so-called active state, when the first sensor detects that pressurization is present.

As described above, display device with a touch panel function 1101 according to the present embodiment includes pressure sensor 15 as the first sensor for detecting the presence/absence of pressurization on input screen 13, electrostatic capacitance touch panel 12 as the second sensor for detecting a contact position on input screen 13, whose power consumption for waiting in the detectable state is higher than power consumption of the first sensor, and control unit 105 for switching the second sensor into the detectable state when the first sensor detects that pressurization is present, wherein input screen 13 also serves as a display screen.

In the display device with a touch panel function according to the present embodiment, two types of sensors having a difference in standby power consumption are combined to first detect the presence/absence of pressurization by the first sensor, and when pressurization is detected, the second sensor is switched into the detectable state. Therefore, power consumption of the whole display device with a touch panel function can be minimized.

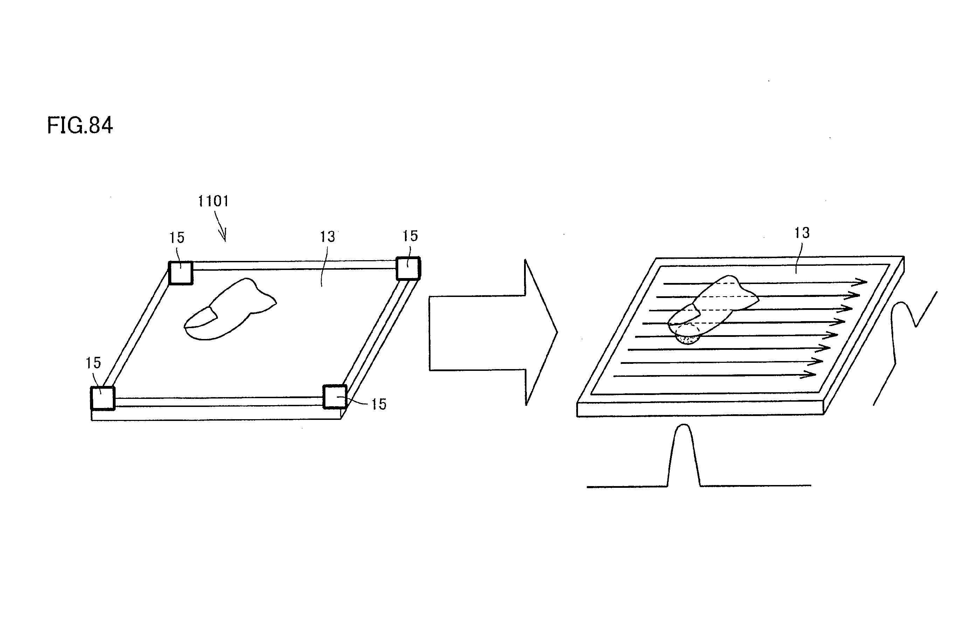

Fig. 84 conceptually shows a flow up to position detection according to the present embodiment. As shown on the left side of Fig. 84, when pressurization on input screen 13 with a finger is started, pressure sensor 15 as the first sensor detects that absence of pressurization has been changed to presence of pressurization. By this detection, the second sensor is switched into the detectable state, and as shown on the right side of Fig. 84, scanning is performed, for example, so that the position being pressed by the finger is detected in detail.

Reducing a time difference from detection of pressurization by the first sensor to position detection by the second sensor to some extent or more will give a user a feeling of input as if the touch panel has been waited in the active state all the time.

### (Modification)

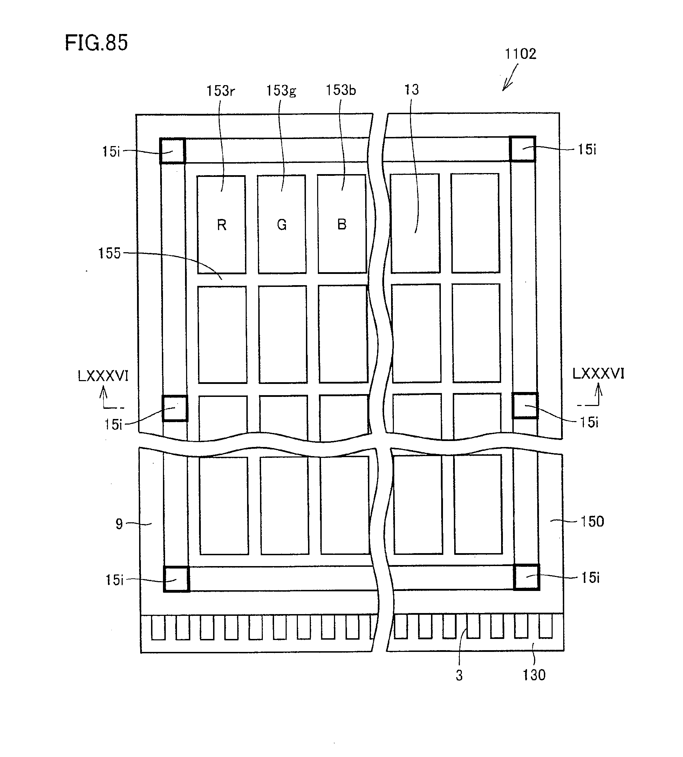

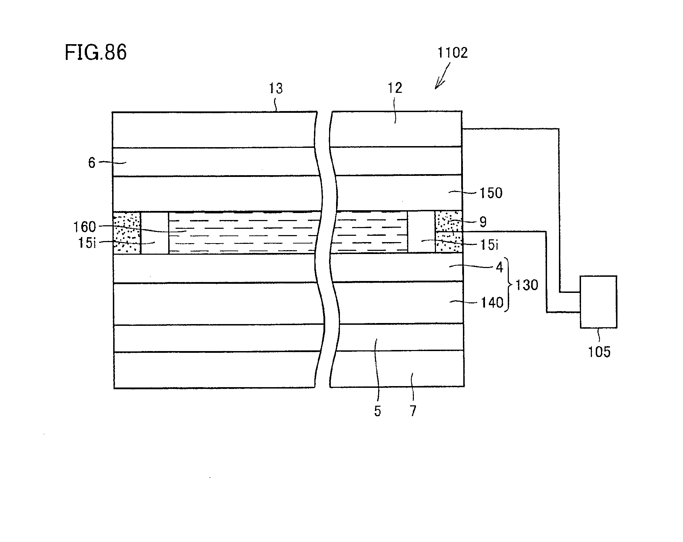

Figs. 85 and 86 show a modification of the display device with a touch panel function according to the present embodiment. Fig. 86 is a cross-sectional view taken along line LXXXVI-LXXXVI in Fig. 85. In this display device with a touch panel function 1102, a pressure sensor 15i is arranged as the first sensor adjacent to seal member 9 immediately on the inner side thereof. As shown in Fig. 86, pressure sensor 15i may be arranged in liquid crystal layer 160. Pressure sensor 15i may or may not be in contact with seal member 9. A detailed structure of pressure sensor 15i will be described later.

### (Ninth Embodiment)

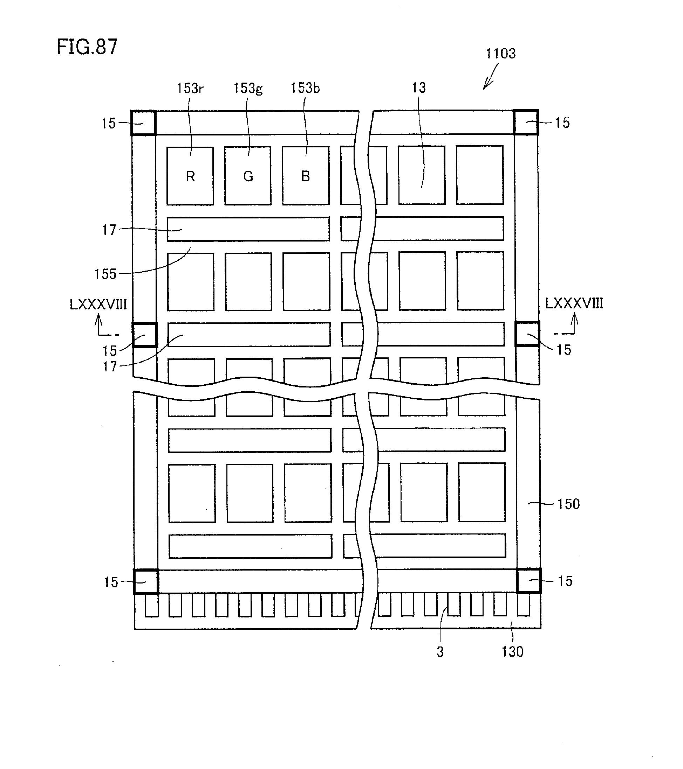

A display device with a touch panel function according to a ninth embodiment based on the present invention will be described with reference to Figs. 87 to 89. Fig. 87 shows a plan view of the display device with a touch panel function according to the present embodiment. This display device with a touch panel function (hereinafter referred to as "display device") 103 can provide a display by liquid crystal, and has input screen 13 which also serves as a display screen. In this display device with a touch panel function 1103, colored layers 153r, 153g and 153b corresponding to respective pixel regions are arranged, and a region of an optical sensor 17 is provided separately, as seen two-dimensionally. In the example shown in Fig. 87, one optical sensor 17 is arranged to be collectively adjacent to a row of colored layers 153r, 153g and 153b corresponding to three colors of R, G and B, respectively. The region of optical sensor 17 has a strip shape. The regions of colored layers 153r, 153g and 153b and optical sensor 17 are separated from one another by black matrix 155.

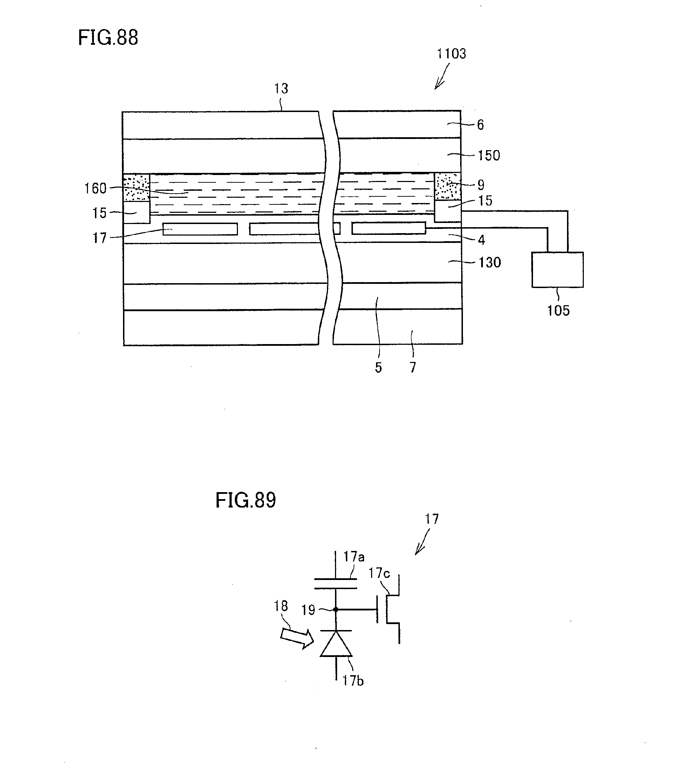

Fig. 88 is a cross-sectional view taken along line LXXXVIII-LXXXVIII in Fig. 87. In this display device with a touch panel function 1103, optical sensor 17 is arranged in TFT layer 4. The surface directly exposed as input screen 13 is a surface of optical sheet 6.

In display device with a touch panel function 1103 according to the present embodiment, pressure sensor 15 is arranged as the first sensor to overlap seal member 9. Requirements for and details of the first sensor are as described in the eighth embodiment.

In display device with a touch panel function 1103 according to the present embodiment, optical sensor 17 is arranged as the second sensor. As shown in Fig. 88, optical sensor 17 is arranged as a portion of TFT layer 4. In Fig. 88, the structure of optical sensor 17 is shown schematically. A conceptual mechanism of optical sensor 17 is shown in Fig. 89. This optical sensor 17 includes a capacitor 17a, a diode 17b and a TFT 17c. In order to bring optical sensor 17 into the detectable state, electric charge is previously accumulated in capacitor 17a. When light 18 enters diode 17b, the amount of leakage current of diode 17b changes in conjunction with the amount of incident light. A potential at a point 19 drops as a result of the change in the amount of leakage current. The amount of electric current passing through TFT 17c changes depending on the potential at point 19. Optical sensor 17 can detect the amount of light by this change in the amount of electric current. Furthermore, it is possible by image processing to distinguish between input of regular light made by a finger or an input tool and input by external light. Contact by the finger or the input tool can thus be detected. The details of optical sensor 17 are described in above-mentioned PTL 1 and PTL 6.

Pressure sensor 15 as the first sensor is for detecting whether or not some pressurization is present on the whole input screen 13, and it is not required to detect at which position in input screen 13 pressurization is made. Electrostatic capacitance touch panel 12 as the second sensor is for detecting at which position in input screen 13 pressurization is made.

In this display device with a touch panel function 1103, the first sensor has low standby power consumption because it is a pressure sensor as will be described later, and the second sensor has high standby power consumption because it is an optical sensor. This is because the optical sensor must wait with charge accumulated in the capacitor, as described above. In this manner, in the second sensor, the second sensor has higher standby power consumption than the first sensor. As to control unit 105, the description in the eighth embodiment applies.

As described above, display device with a touch panel function 1103 according to the present embodiment includes pressure sensor 15 as the first sensor for detecting presence/absence of pressurization on input screen 13, optical sensor 17 as the second sensor for detecting a contact position on input screen 13, whose power consumption for waiting in a detectable state is higher than power consumption of the first sensor, and control unit 105 for switching the second sensor into the detectable state when presence of pressurization is detected by the first sensor. Input screen 13 also serves as the display screen.

In the display device with a touch panel function according to the present embodiment, although the second sensor is of a different type from that of the eighth embodiment, similar effects to those of the eighth embodiment can be obtained.

In both the eighth and ninth embodiments, the first sensor preferably has a structure detecting that the input screen has been pressed depending on a change in electrical state caused by pressurization. This is because, with the structure of detecting depending on a change in electrical state, the first sensor is likely to be achieved by a fine structure using a structure of an existing conductor, for example. Preferably, the change in electrical state is a change in resistance or a change in capacitance. A structure for detecting pressurization depending on a change in resistance or a change in capacitance will be described in detail below.

### (Outline of first structure of pressure sensor)

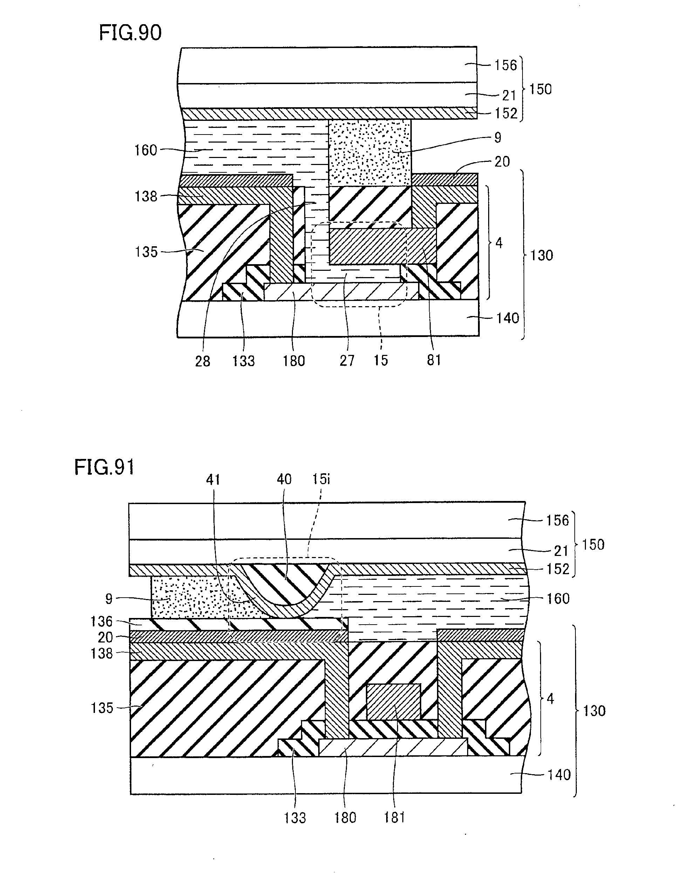

The eighth and ninth embodiments show examples in which pressure sensor 15 as the first sensor is arranged to overlap seal member 9 (cf. Figs. 82, 83, 87, and 88). An exemplary structure of pressure sensor 15 in this case is shown in Fig. 90.

TFT array substrate 130 is obtained by forming a TFT layer 4 on the surface of glass substrate 140 and further forming a conductive film 20 to locally cover the surface of TFT layer 4. Conductive film 20 is the same layer as a pixel electrode. TFT layer 4 includes interlayer dielectric 135, semiconductor layer 180, gate insulating layer 133, a gate metal layer 81, and source metal layer 138. Semiconductor layer 180 has impurities doped therein. Gate metal layer 81 is a layer simultaneously formed of the same material as gate electrode 181.

Common substrate 150 is obtained by forming a color filter layer 21 on the surface of glass substrate 156 and further forming common electrode 152 to cover color filter layer 21. Color filter layer 21 includes a color filter portion and a black matrix portion. Seal member 9 is arranged between TFT layer 4 and common electrode 152. Seal member 9 is provided to surround liquid crystal layer 160.

In TFT array substrate 130, pressure sensor 15 is formed at a position overlapping seal member 9. In pressure sensor 15, semiconductor layer 180 is formed on the surface of glass substrate 140, and gate insulating layer 133 is formed to partially cover semiconductor layer 180. Gate metal layer 81 is arranged to rest upon gate insulating layer 133. Pressure sensor 15 has a structure in which semiconductor layer 180 and gate metal layer 81 face each other with a gap 27 left therebetween. In gap 27, the upper surface of semiconductor layer 180 is exposed without being covered with gate insulating layer 133. Gap 27 communicates with liquid crystal layer 160 via a through-hole 28. Liquid crystal thus has entered gap 27.

When a user presses input screen 13, that is, when common substrate 150 is pressed from above, the force is transmitted to TFT array substrate 130 via seal member 9, bringing semiconductor layer 180 and gate metal layer 81 into contact. When semiconductor layer 180 and gate metal layer 81 are brought into contact, the electric resistance between semiconductor layer 180 and gate metal layer 81 changes. Alternatively, when force is applied via seal member 9, at least gap 27 is narrowed even if semiconductor layer 180 and gate metal layer 81 are not brought into contact. If gap 27 changes, the capacitance formed between semiconductor layer 180 and gate metal layer 81 changes. Pressure sensor 15 has a structure designed such that semiconductor layer 180 and gate metal layer 81 are brought into contact when pressed to thereby detect a change in electric resistance between semiconductor layer 180 and gate metal layer 81, or designed such that gap 27 is narrowed when pressed to thereby detect a change in capacitance between semiconductor layer 180 and gate metal layer 81. Pressure sensor 15 has a structure detecting a pressure depending on such a change in electrical state.

As described above, the change in resistance preferably occurs when pressurization brings conductive members spaced apart from and facing each other into contact to bring about conduction. This is because this structure will enable repeated pressure detection with a simple structure while achieving low power consumption.

### (Outline of second structure of pressure sensor)

As a modification of the eighth embodiment, the example in which pressure sensor 15i as the first sensor is arranged to be adjacent to seal member 9 has been shown (see Figs. 85 and 86). An exemplary structure of pressure sensor 15i in this case is shown in Fig. 91. In the vicinity of pressure sensor 15i, semiconductor layer 180 is formed on the surface of glass substrate 140, and gate insulating layer 133 is formed to partially cover semiconductor layer 180. Gate electrode 181 is arranged to rest upon gate insulating layer 133. Source metal layer 138 extends through gate insulating layer 133 to be electrically connected to semiconductor layer 180. Source metal layer 138 extends over interlayer dielectric 135. Conductive film 20 is formed to cover a portion of source metal layer 138 extending over interlayer dielectric 135. Conductive film 20 is the same layer as a pixel electrode. Upper insulating layer 136 is formed on conductive film 20.

On the other hand, common substrate 150 is provided with a protruding portion 41 on the surface on the TFT array substrate 130 side. Protruding portion 41 includes an elastic body 40 therein. Elastic body 40 is formed in the shape of bump on the surface of color filter layer 21. Elastic body 40 may be formed of resin. In a location where elastic body 40 is arranged, common electrode 152 extends to cover elastic body 40 to form protruding portion 41. The leading end of protruding portion 41 abuts on upper insulating layer 136. Pressure sensor 15i includes protruding portion 41, upper insulating layer 136 and conductive film 20.

When a user presses input screen 13, that is, when common substrate 150 is pressed from above, seal member 9 deforms elastically to reduce the distance between TFT array substrate 130 and common substrate 150. Accordingly, protruding portion 41 is pressed against upper insulating layer 136. At this occasion, elastic body 40 within protruding portion 41 deforms elastically, so that the area in which protruding portion 41 abuts on upper insulating layer 136 increases. When pressurization is stopped, the distance between TFT array substrate 130 and common substrate 150 increases as originally it was, so that the area in which protruding portion 41 abuts on upper insulating layer 136 decreases. As the abutting area increases/decreases in this manner, the capacitance formed between conductive film 20 and common electrode 152 increases/decreases. Pressure sensor 15i has a structure of detecting this change in capacitance. Pressure sensor 15i has a structure of detecting pressure depending on such a change in electrical state.

The structure may be such that upper insulating layer 136 is not provided and common electrode 152 covering protruding portion 41 abuts directly on conductive film 20. In this case, as the area in which protruding portion 41 abuts on upper insulating layer 136 increases/decreases, the electric resistance between common electrode 152 and conductive film 20 changes.

As described above, a change in resistance or a change in capacitance preferably occurs when the area in which components facing each other are in contact with each other is increased/decreased by pressurization. This is because this structure will enable pressure detection in multiple stages with a simple structure while achieving low power consumption.

A change in capacitance preferably occurs when the dielectric constant is changed by pressurization. Such a structure can also be achieved by forming upper insulating layer 136 of a material of characteristic whose dielectric constant is changed by pressurization, and adopting such a structure will enable pressure detection in a larger number of stages.

As shown in Figs. 82 and 83 in the eighth embodiment, at least a portion of the first sensor is preferably arranged to overlap a frame-like member surrounding the input screen. By adopting this structure, pressurization made on the input screen can be reliably transmitted to the first sensor. The frame-like member as used herein may be a seal member, or may be another frame-like member other than the seal member.

### (Tenth Embodiment)

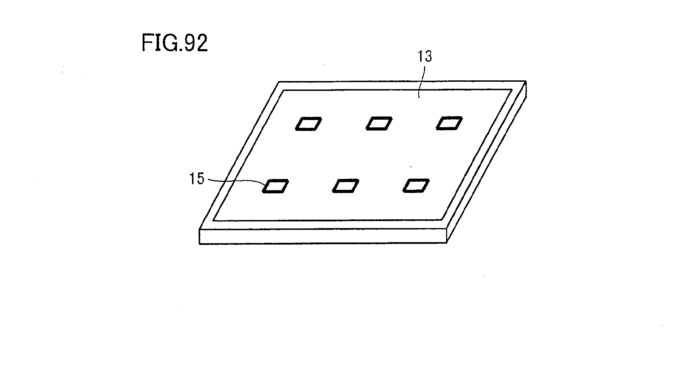

A display device with a touch panel function according to a tenth embodiment based on the present invention will be described with reference to Fig. 92. In this display device with a touch panel function, as shown in Fig. 92, pressure sensor 15 as the first sensor is arranged in a projection area of input screen 13. Although Fig. 92 shows the example in which six first sensors are arranged, the number of first sensors arranged may be another number as long as it is one or more. At least some of the first sensors are arranged in the projection area of input screen 13.

In the display device with a touch panel function according to the present embodiment, similar effects to those of the eighth or second embodiment can be obtained, and further, the position being pressed and the position of a first sensor can be made closer, so that a highly sensitive touch panel function can be provided.

Preferably, an opening through which visible light from behind is passed and a non-opening through which visible light from behind is not passed are arranged in the projection area of the input screen, and at least some of the first sensors are arranged in the non-opening of the input screen. By adopting this structure, the sensors can be arranged while reducing the aperture ratio for the display device as little as possible.

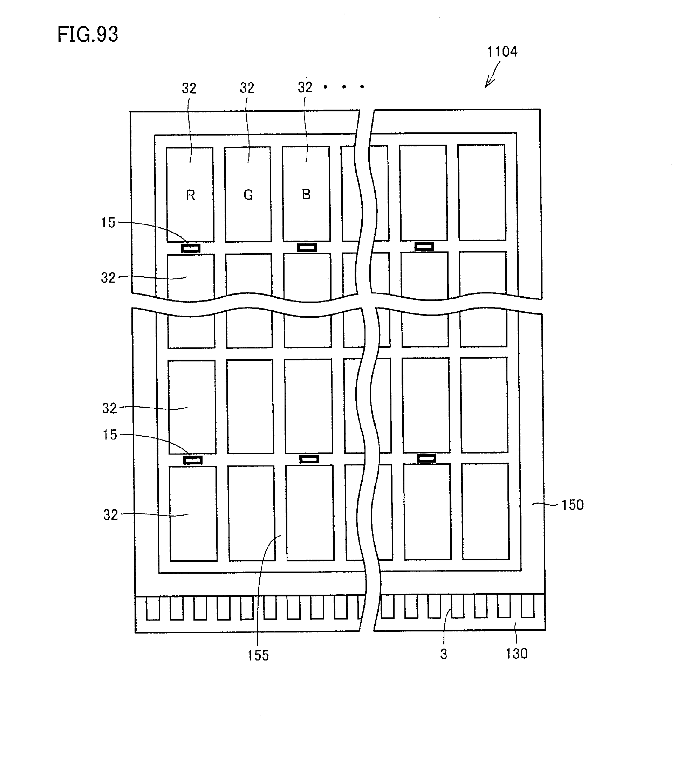

As a specific example, as shown in Fig. 93, a display device with a touch panel function 1104 according to the present embodiment is a liquid crystal display device including black matrix 155 for separating different pixels from each other by a member through which visible light is not passed, and pressure sensors 15 as the first sensors are arranged in black matrix 155. In this example, focusing on a lateral row of pixels 32, each first sensor is arranged in correspondence with every other pixel 32. The first sensors may be arranged as many as pixels 32, but may be arranged in a smaller number than pixels 32 as shown in the example of this drawing. In that case, the first sensors may be arranged in a ratio of one to a certain number of pixels 32 as shown in this drawing.

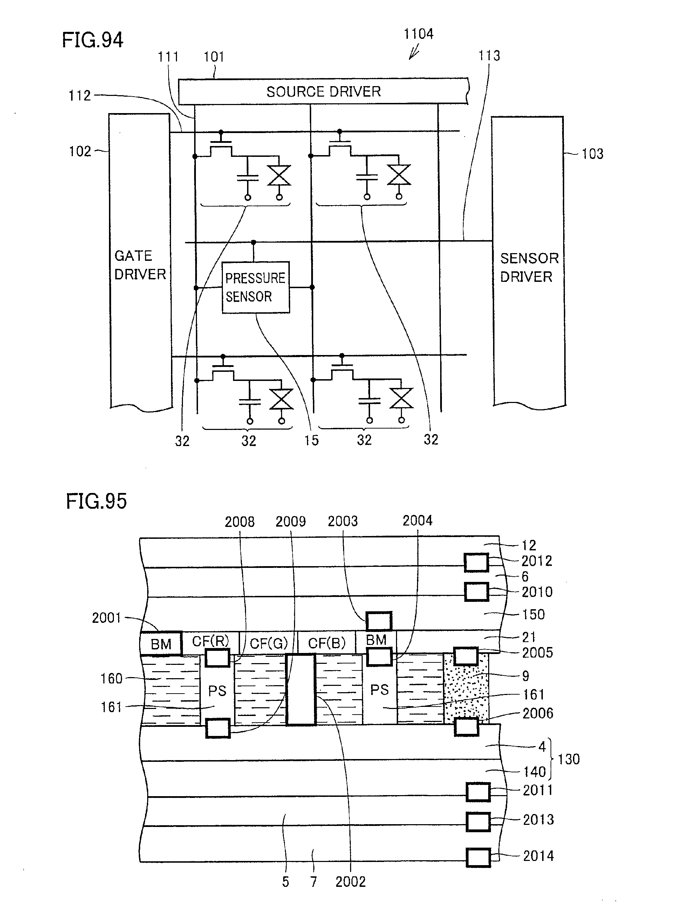

Fig. 94 shows a circuit diagram of display device with a touch panel function 1104. In this diagram, only four pixels 32 are shown representatively. Source driver 101, gate driver 102 and sensor driver 103 are arranged at the edge of display device with a touch panel function 1104. A plurality of source lines 111 extend in parallel from source driver 101 toward the input screen also serving as the display region. A plurality of gate lines 112 extend in parallel from gate driver 102 toward the input screen also serving as the display region. A plurality of gate lines for sensor 113 extend in parallel from sensor driver 103 toward the input screen also serving as the display region. Source line 111 and gate line 112 cross perpendicularly. Gate line 112 and gate line for sensor 113 are in parallel, and are arranged alternately. One of the first sensors is connected to two source lines 111 adjacent to each other and one gate line for sensor 113 extending perpendicularly to them.

### (Arrangement of pressure sensor)

Various variations can be considered for the position at which the pressure sensor as the first sensor is arranged. Exemplary positions at which the pressure sensor may be arranged are shown in Figs. 95 and 96 by bold rectangles. Fig. 95 shows an example in which color filter layer 21 including a color filter portion and a black matrix portion on the common substrate side is arranged. Fig. 96 shows an example in which color filter layer 21 including a color filter portion and a black matrix portion on the TFT array substrate 130 side is arranged. Figs. 95 and 96 both mean that these alternatives can be considered for the installation positions of pressure sensors, rather than arranging the pressure sensors simultaneously at these positions.

In Figs. 95 and 96, "BM" indicates the black matrix portion, "CF" indicates the color filter portion, and "PS" indicates a photo spacer, namely, a spacer created by photolithography.

Figs. 95 and 96 show the location where a rectangle 2001 surrounds a portion indicated by "BM". In this manner, the black matrix portion itself may be formed by the pressure sensor.

Figs. 95 and 96 show a rectangle 2002 of the same shape as spacer 161 in parallel with spacer 161. In this manner, the spacer itself may be formed by the pressure sensor.

Figs. 95 and 96 show rectangles 2003, 2004 in contact with the upper and lower sides of BM. In this manner, the pressure sensor may be formed at the upper or lower side of the black matrix portion.

Figs. 95 and 96 show rectangles 2005, 2006 in contact with the upper and lower sides of seal member 9. In this manner, the pressure sensor may be formed at the upper or lower side of seal member 9.

Fig. 96 shows a rectangle 2007 between color filter layer 21 at a position overlapping seal member 9 and TFT layer 4. The pressure sensor may be formed at such a position.

Figs. 95 and 96 show rectangles 2008, 2009 in contact with the upper and lower sides of spacer 161. In this manner, the pressure sensor may be formed at the upper or lower side of spacer 161.

Figs. 95 and 96 show rectangles 2010, 2011 on the surfaces of glass substrates 140, 150 away from liquid crystal layer 160. In this manner, the pressure sensor may be formed on the surface of the glass substrate away from the liquid crystal layer.

Figs. 95 and 96 show a rectangle 2012 between optical sheet 6 on the common substrate side and electrostatic capacitance touch panel 12 as the second sensor. The pressure sensor may be formed at such a position.

Figs. 95 and 96 show a rectangle 2013 between optical sheet 5 on the TFT array substrate 130 side and backlight device 7. The pressure sensor may be formed at such a position.

Figs. 95 and 96 show a rectangle 2014 on a rear surface of backlight device 7 on the TFT array substrate 130 side. The pressure sensor may be formed at such a position.

As more preferable conditions in the display device with a touch panel function in which at least some of the first sensors are arranged in the projection area of the input screen as described in the tenth embodiment, the following holds true. Preferably, the display device with a touch panel function described in the tenth embodiment is a liquid crystal display device including, in the liquid crystal layer, a spacer for defining the thickness of the liquid crystal layer, and the first sensor is arranged in the region of the spacer. This corresponds to the structure in which the first sensors are arranged at the positions of rectangles 2003, 2004, 2008, and 2009.

Considering the display device with a touch panel function mentioned as a modification at the end of the eighth embodiment into consideration, the following holds true. Preferably, the display device with a touch panel function based on the present invention is a liquid crystal display device having a structure in which liquid crystal is sealed by a seal member, and the first sensor is arranged at a position adjacent to the seal member on the inner side thereof. This corresponds to the structure shown in Figs. 85 and 86.

The following holds true for the second sensor. The second sensor may be a sensor of a type of detecting the position depending on a change in electrostatic capacitance. An example of such a sensor is electrostatic capacitance touch panel 12 referred to in the eighth embodiment.

The second sensor may be a sensor of a type of detecting the position by optical sensing. An example of such a sensor is optical sensor 17 referred to in the ninth embodiment.

It should be understood that the embodiments disclosed herein are illustrative and non-restrictive in every respect. The scope of the present invention is defined by the claims not by the description above, and is intended to include any modification within the meaning and scope equivalent to the terms of the claims.

### INDUSTRIAL APPLICABILITY

The present invention is applicable to a display device with a touch panel function.

### REFERENCE SIGNS LIST

3 external connection terminal; 4 TFT layer; 5, 6 optical sheet; 7 backlight device; 9 seal member; 12 electrostatic capacitance touch panel; 13 input screen; 15, 15i pressure sensor; 17 optical sensor; 17a capacitor; 17b diode; 17c TFT; 18 light; 19 point; 20 conductive film; 21 color filter layer; 27 gap; 28 through-hole; 32 pixel; 40 elastic body; 41 protruding portion; 81 gate metal layer; 100 liquid crystal display device; 101 source driver; 102 gate driver; 103 sensor driver; 105 control unit; 110 pixel; 111 source line; 112 gate line; 113 gate line for sensor; 114 pixel electrode; 115 TFT element; 116 TFT element for selection; 117 output element; 118, 190 pressure sensor; 120 pressure sensing element; 121, 138, 183, 203 source electrode; 122 gate electrode; 123 semiconductor layer; 124 connection wiring; 125, 137, 182, 202 drain electrode; 130 TFT array substrate; 131 underlying layer; 132, 180, 200 semiconductor layer; 133 gate insulating layer; 134, 181, 201 gate electrode; 135 interlayer dielectric; 136 upper insulating layer; 138 source metal layer; 139 interlayer dielectric; 140 glass substrate; 141 underlying layer; 145 pressing member; 146 contact; 147 recess; 148 light blocking layer; 149 resin layer; 150 common substrate; 151 color filter substrate; 152 common electrode; 153, 153r, 153g, 153b colored layer; 155 black matrix; 156 glass substrate; 157 plastic resin layer; 158 resin pattern; 160 liquid crystal layer; 161 spacer; 170 projection; 171 upper electrode; 172, 189, 191, 218 lower electrode; 173, 174 hole; 180 semiconductor layer; 184 contact; 185 pad unit; 186 connection unit; 187 reflection electrode; 210 drain pad; 211 wiring; 212 transparent conductive layer; 213 electrode unit; 214 wiring; 215 transparent conductive layer; 216 projection; 217 conductive layer; 219 pad unit; 220 recess; 221 projection; 222 stacked metal layers; 223 resist pattern; 1100, 1101, 1102, 1103, 1104 display device with a touch panel function (display device); 2001, 2002, 2003, 2004, 2005, 2006, 2007, 2008, 2009, 2010, 2011, 2012, 2013, 2014 rectangle

## Claims

1. A display device with a touch panel function, comprising:
a first sensor for detecting presence/absence of pressurization on an input screen (13);
a second sensor for detecting a contact position on said input screen, whose power consumption for waiting in a detectable state is higher than power consumption of said first sensor; and
a control unit (105) for switching said second sensor into the detectable state when presence of pressurization is detected by said first sensor, wherein
said input screen also serves as a display screen.

2. The display device with a touch panel function according to claim 1,
wherein
said first sensor has a structure of detecting that said input screen has been pressed by a change in electrical state caused by pressurization.

3. The display device with a touch panel function according to claim 2,
wherein
said change in electrical state is one of a change in resistance and a change in capacitance.

4. The display device with a touch panel function according to claim 3,
wherein
said change in resistance occurs when pressurization brings conductive members spaced apart from and facing each other into contact to bring about conduction.

5. The display device with a touch panel function according to claim 3,
wherein
one of said change in resistance and said change in capacitance occurs when an area in which components facing each other are in contact with each other is increased/decreased by pressurization.

6. The display device with a touch panel function according to claim 3,
wherein
said change in capacitance occurs when a dielectric constant is changed by pressurization.

7. The display device with a touch panel function according to any one of claims 1 to 6, wherein
at least some of said first sensors are arranged to overlap a frame-like member surrounding said input screen.

8. The display device with a touch panel function according to any one of claims 1 to 7, wherein
at least some of said first sensors are arranged in a projection area of said input screen.

9. The display device with a touch panel function according to claim 8,
wherein
an opening through which visible light from behind is passed and a non-opening through which visible light from behind is not passed are arranged in the projection area of said input screen, and
at least some of said first sensors are arranged in the non-opening of said input screen.

10. The display device with a touch panel function according to claim 8, which is a liquid crystal display device having a black matrix portion for separating different pixels from each other by a member through which visible light is not passed, wherein
said first sensors are arranged in said black matrix portion.

11. The display device with a touch panel function according to claim 8, which is a liquid crystal display device including, in a liquid crystal layer, a spacer (161) for defining the thickness of said liquid crystal layer, wherein
said first sensors are arranged in a region of said spacer.

12. The display device with a touch panel function according to any one of claims 1 to 11, which is a liquid crystal display device (100) having a structure in which liquid crystal is sealed by a seal member (9), wherein
said first sensor is arranged at a position adjacent to said seal member on an inner side thereof.

13. The display device with a touch panel function according to any one of claims 1 to 12, wherein
the second sensor is a sensor of a type of detecting a position depending on a change in electrostatic capacitance.

14. The display device with a touch panel function according to any one of claims 1 to 12, wherein
the second sensor is a sensor of a type of detecting a position by optical sensing.
